(19)

Europäisches Patentamt
European Patent Office
Office européen des brevets

(11) **EP 1 798 875 A1**

(12) **EUROPEAN PATENT APPLICATION**
published in accordance with Art. 158(3) EPC

(43) Date of publication:
**20.06.2007 Bulletin 2007/25**

(21) Application number: **06768174.2**

(22) Date of filing: **13.07.2006**

(51) Int Cl.:
*H04B 7/26* (2006.01)     *H04B 5/02* (2006.01)
*H04B 13/00* (2006.01)

(86) International application number:
**PCT/JP2006/013960**

(87) International publication number:
**WO 2007/013310 (01.02.2007 Gazette 2007/05)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **25.07.2005 JP 2005215063**

(71) Applicant: **SONY CORPORATION**
**Tokyo**
**108-0075 (JP)**

(72) Inventors:
• **ISHIBASHI, Yoshihito,**
**Sony Corporation**
**Tokyo 108-0075 (JP)**

• **KUSAKABE, Susumu,**
**Sony Corporation**
**Tokyo 108-0075 (JP)**
• **KUBONO, Fumio,**
**Sony Corporation**
**Tokyo 108-0075 (JP)**
• **NAGAI, Shoji,**
**Sony Corporation**
**Tokyo 108-0075 (JP)**
• **YOSHIDA, Yuko,**
**Sony Corporation**
**Tokyo 108-0075 (JP)**

(74) Representative: **DeVile, Jonathan Mark et al**
**D Young & Co**
**120 Holborn**
**London EC1N 2DY (GB)**

(54) **COMMUNICATION SYSTEM, COMMUNICATION APPARATUS, METHOD AND PROGRAM**

(57) The present invention relates to a communication system, a communication device and a method, and a program, wherein appropriate communication settings according to the communication environment can be easily made. A status confirmation unit 1014 performs processing for confirmation of the status regarding communication of a transmission device 1001, i.e., regarding confirmation of the communication environment, such as the relative position relation of the transmission device 1001 and communication medium 1003, and so forth, for example. A handling processing unit 1015 performs processing regarding control of the transmission unit 1011 in response to the status confirmed by the status confirmation unit 1014. A status confirmation unit 1034 performs processing for confirmation of the status regarding communication of a reception device 1002, i.e., regarding confirmation of the communication environment, such as the relative position relation of the reception device 1002 and communication medium 1003, and so forth, for example. A handling processing unit 1035 performs processing regarding control of the reception unit 1031 in response to the status confirmed by the status confirmation unit 1034. The present invention can be applied to a communication system.

FIG. 56

EP 1 798 875 A1

**Description**

Technical Field

The present invention relates to a communication system, a communication device and a method, and a program, and particularly relates to a communication system, a communication device and a method, and a program, wherein appropriate communication settings according to the communication environment can be easily made.

Background Art

The precision of communication has heretofore been greatly affected by communication capabilities and communication conditions and so forth. For example, in a case wherein communication conditions are very poor and successful reception of information transmitted by the other party of communication is difficult, and in the event that communication speed is set to a higher speed, or reception sensitivity or transmission power is suppressed in such a state, the rate of communication error further rises, making successful communication even more difficult.

Accordingly, methods wherein the intensity of the transmission power is adjusted according to reception level have been conceived (e.g., see Patent Document 1).

Now, in recent years, advances in information technology has led to improvement in communication technology, and there are communication systems wherein communication is performed using the human body and the like as a communication medium, employing electrostatic coupling. With such communication systems, communication performed using the human body as a communication medium is affected not only by the functions of the communication devices and communication conditions, but also is affected by communication environment, such as, for example, the positional relation between a communication device and the human body, the properties of the human body to serve as the communication medium (capacitance, load, and so forth).

[Patent Document 1] Japanese Unexamined Patent Application Publication No. 2001-320326

Disclosure of Invention

Problems to be Solved by the Invention

However, in the case of adjusting transmission power according to the reception state such as described above, for example, such communication environment states are not taken into consideration. Accordingly, in the event that the reception device and the human body are separated, and the reception state is poor due to only the communication environment of the reception device being poor, the reception state might not be improved even if the transmission level of the transmission device is raised. Thus, depending on the state of the communication environment, adjusting the intensity of the transmission power according to the reception state might not be effective. Further, such control would unnecessarily raise the transmission level, which might increase power consumption.

The present invention has been made in light of such a situation, and aims to enable appropriate communication settings to be easily made according to the communication environment.

Means for Solving the Problems

A communication system according to a first aspect of the present invention is a communication system comprising a first communication device and a second communication device which perform communication via a communication medium; the first communication device including first status confirming means for confirming the status of the first communication device regarding the communication, first supply means for supplying first confirmation results, which are confirmation results of the first status confirmation means, to the second communication device, first obtaining means for obtaining second confirmation results which are confirmation results regarding the communication of the second communication device, supplied from the second communication device, and first handling processing means for performing control processing regarding the communication, based on the first confirmation results and the second confirmation results; and the second communication device including second status confirmation means for confirming the status of the second communication device regarding the communication, second supply means for supplying the second confirmation results, which are the confirmation results of the second status confirmation means, to the first communication device, second obtaining means for obtaining the first confirmation results supplied from the first communication device, and second handling processing means for performing control processing regarding the communication, based on the first confirmation results and the second confirmation results.

With the first aspect of the present invention, the states regarding communication at the first communication device is confirmed at the first communication device, first confirmation results which are the confirmation results thereof are supplied to the second communication device, second confirmation results which are confirmation results of the state regarding communication of the second communication device supplied from the second communication device are obtained, control processing regarding the communication is performed based on the first confirmation results and the second confirmation results, the state regarding the communication of the second communication device is confirmed at the second communication device, the confirmation results which are the confirmation results thereof are supplied to the first communication device, first confirmation results supplied from the first communication device are obtained, and control processing regarding the communication is performed based on the first confirmation results and the second confirmation results.

A communication system according to a second aspect of the present invention is a transmission device for transmitting signals via a communication medium, and a reception device for receiving the signals; wherein the transmission device includes first status confirmation means for confirming the status regarding transmission of the signals, and first handling processing means for performing control processing regarding transmission of the signals, based on first confirmation results which are the results of confirmation by the first status confirmation means; and wherein the reception device includes second status confirmation means for confirming the status regarding reception of the signals, and second handling processing means for performing control processing regarding reception of the signals based on second confirmation results which are the results of confirmation by the second status confirmation means.

With the second aspect of the present invention, the status regarding transmission of signals is confirmed at the transmission device, control processing regarding transmission of signals is performed based on the first confirmation results which are the results of the confirmation, and the status regarding reception of signals is confirmed at the reception device, and control processing regarding reception of signals is performed based on the second confirmation results which are the results of the confirmation.

A communication system according to a third second aspect of the present invention is a communication system comprising a transmission device for transmitting signals via a communication medium, and a reception device for receiving the signals; wherein the transmission device includes first status confirmation means for confirming the status regarding transmission of the signals, supply means for supplying the first confirmation results, which are the confirmation results of the first status confirmation means, to the reception device, and first handling processing means for performing control processing regarding transmission of the signals, based on the first confirmation results; and wherein the reception device includes second status confirmation means for confirming the status regarding reception of the signals, obtaining means for obtaining the first confirmation results supplied from the transmission device, and second handling processing means for performing control processing regarding reception of the signals based on at least one of second confirmation results which are the results of confirmation by the second status confirmation means, and the first confirmation results obtained by the obtaining means.

With the third aspect of the present invention, the stature regarding transmission of signals is confirmed at the transmission device, first confirmation results which are the confirmation results thereof are supplied to the reception device, and also, control processing regarding transmission of signals is performed based on the first confirmation results, the status regarding reception of signals is confirmed at the reception device, first confirmation results supplied from the transmission device are obtained, and control processing regarding reception of signals is preformed based on at least one of the second confirmation results which are the results of confirmation, and the obtained first confirmation results.

A communication device according to a fourth second aspect of the present invention is a communication device for performing communication with another communication device via a communication medium, comprising: status communication means for confirming the status regarding the communication of the communication device; and handling processing means for performing control processing regarding the communication, based on the confirmation results of the status confirmation means.

The status regarding communication may include the relative positional relation between the communication device and at least one of the communication medium and the other communication device.

The status confirmation means may comprise: electric current measurement means for measuring the electric current flowing through the communication device; combined load output means for outputting the combined load of the communication device and the communication medium with regard to the communication of the communication device, based on the measurement results of the current measurement means; and determining means for determining the status of the communication device based on the combined load calculated by the combined load calculating means, and deciding the contents of the control processing by the control means.

The status confirmation means may further comprise input accepting means for accepting input of communication medium information which is information relating to the properties of the communication medium; wherein the combined load calculating means calculate the combined load based on the measurement results of the electric current measurement means, and the communication medium information accepted by the input accepting means.

The status confirmation means may comprise information obtaining means for obtaining information relating to the status confirmation results at the other communication device provided by the other communication device; wherein the handling processing means perform control processing relating to the communication based on information regarding the status confirmation results obtained by the information obtaining means.

The handling processing means may comprise transmission level adjusting means for adjusting the transmission level at the time of the communication device transmitting signals, based on the confirmation results of the status confirmation means.

The handling processing means may comprise reception gain adjusting means for adjusting the reception gain at the time of the communication device detecting received signals, based on the confirmation results of the status confirmation means.

The handling processing means may comprise capacitance adjusting means for adjusting the capacitance as to the communication medium for a signal electrode which is an electrode for transmission/reception of signals, based on the confirmation results of the status confirmation means.

The signal electrode may be a plurality of electrodes arrayed in array fashion, each configured of a connection-controllable electrode; wherein the capacitance adjusting means control the capacitance by controlling the connection of each electrode.

The handling processing means may comprise message display means for displaying messages and images to a user, based on the confirmation results of the status confirmation means.

The handling processing means may comprise information providing means for providing information relating to the confirmation results of the status confirmation means to the other communication device.

The handling processing means may comprise modulation method deciding means for deciding the modulation method for the signals, based on the confirmation results of the status confirmation means.

The handling processing means may comprise error-correction method deciding means for deciding the error correction method of the communication, based on the confirmation results of the status confirmation means.

The communication device may further comprise: frequency identifying means for identifying a frequency regarding which gain is great for signals transmitted to the other communication device; and frequency setting means for setting the carrier signal of the communication to the frequency identified by the frequency identifying means.

A communication method according to the fourth aspect of the present invention is a communication method for a communication device which performs communication with another communication device via a communication medium, the method comprising the steps of: confirming the status regarding to the communication of the communication device; and performing control processing regarding the communication, based on the confirmation results thereof.

A program according to the fourth aspect of the present invention is a program for causing a computer to perform processing of communication with another communication device via a communication medium, the program comprising the steps of: confirming the status regarding to the communication of the communication device; and performing control processing regarding the communication, based on the confirmation results thereof.

With the fourth aspect of the present invention, the status regarding the communication of the communication device is confirmed, and control processing regarding the communication is performed based on the confirmation results.

Advantages

According to an aspect of the present invention, communication can be performed. Particularly, appropriate communication settings according to the communication environment can be easily performed.

Brief Description of the Drawings

Fig. 1 is a diagram illustrating a configuration example of an embodiment of a communication system to which the present invention is applied.

Fig. 2 is a diagram illustrating an example of an equivalent circuit of the communication system shown in Fig. 1 in an ideal state.

Fig. 3 is a diagram illustrating an example of calculation results of actual values of voltage occurring at both ends of a reception load resistor, in the model shown in Fig. 2.

Fig. 4 is a diagram illustrating an example of a physical model of the physical configuration of the communication system shown in Fig. 1.

Fig. 5 is a diagram illustrating an example of a model of the parameters occurring in the model shown in Fig. 4.

Fig. 6 is a schematic diagram illustrating an example of the distribution of electric flux lines as to electrodes.

Fig. 7 is a schematic diagram illustrating another example of the distribution of electric flux lines as to electrodes.

Fig. 8 is a diagram for describing another example of a model of electrodes in a transmission device.

Fig. 9 is a diagram illustrating an example of an equivalent circuit of the model shown in Fig. 5.

Fig. 10 is a diagram illustrating an example of frequency properties of the communication system shown in Fig. 9.

Fig. 11 is a diagram illustrating an example of signals received at a reception device.

Fig. 12 is a diagram illustrating an example of placement of electrodes.

Fig. 13 is a diagram illustrating another example of placement of electrodes.

Fig. 14 is a diagram illustrating yet another example of placement of electrodes.

Fig. 15 is a diagram illustrating yet another example of placement of electrodes.

Fig. 16 is a diagram illustrating yet another example of placement of electrodes.

Fig. 17 is a diagram illustrating yet another example of placement of electrodes.

Fig. 18 is a diagram illustrating yet another example of placement of electrodes.

Fig. 19 is a diagram illustrating configuration examples of an electrode.

Fig. 20 is a diagram illustrating another configuration example of an electrode.

Fig. 21 is a diagram illustrating another example of the equivalent circuit of the model shown in Fig. 5.

Fig. 22 is a diagram illustrating a layout example of the communication system shown in Fig. 1.

Fig. 23 is a diagram illustrating another configuration example of a communication system to which the present invention is applied.

Fig. 24 is a diagram illustrating an actual usage example of an embodiment of a communication system to which the present invention is applied.

Fig. 25 is a diagram illustrating another usage example of an embodiment of a communication system to which the present invention is applied.

Fig. 26 is a diagram illustrating yet another configuration example of a communication system to which the present invention is applied.

Fig. 27 is a diagram illustrating a distribution example of a frequency spectrum.

Fig. 28 is a diagram illustrating yet another configuration example of a communication system to which the present invention is applied.

Fig. 29 is a diagram illustrating a distribution example of a frequency spectrum.

Fig. 30 is a diagram illustrating yet another configuration example of a communication system to which the present invention is applied.

Fig. 31 is a diagram illustrating an example of temporal distribution of signals.

Fig. 32 is a flowchart illustrating an example of the flow of communication processing.

Fig. 33 is a diagram illustrating yet another configuration example of a communication system to which the present invention is applied.

Fig. 34 is a schematic diagram for describing the relation between positional relation between electrodes and communication medium, and the capacitance therebetween.

Fig. 35 is a diagram illustrating a configuration example of an embodiment of a communication system to which the present invention has been applied.

Fig. 36 is a diagram representing the communication system shown in Fig. 35 with an equivalent circuit.

Fig. 37 is a flowchart illustrating an example of the flow of communication control processing.

Fig. 38 is a flowchart illustrating an example of the flow of status confirmation processing.

Fig. 39 is a flowchart illustrating an example of the flow of handling processing.

Fig. 40 is a flowchart illustrating another example of the flow of status confirmation processing.

Fig. 41 is a flowchart illustrating another example of the flow of handling processing.

Fig. 42 is a diagram for describing an example of a communication control processing method in the overall communication system shown in Fig. 35.

Fig. 43 is a diagram illustrating another configuration example of the communication system to which the present invention has been applied.

Fig. 44 is a flowchart illustrating yet another example of the flow of status confirmation processing.

Fig. 45 is a flowchart illustrating yet another example of the flow of handling processing.

Fig. 46 is a diagram for describing an example of a communication control processing method in the overall communication system shown in Fig. 43.

Fig. 47 is a diagram for describing an example of individual difference among communication media.

Fig. 48 is a block diagram illustrating another configuration example of a transmission device.

Fig. 49 is a block diagram illustrating another configuration example of a reception device.

Fig. 50 is a flowchart illustrating yet another example of the flow of status confirmation processing.

Fig. 51 is a flowchart illustrating yet another example of the flow of status confirmation processing.

Fig. 52 is a diagram for describing an example of the communication control processing method for the overall communication system shown in Fig. 48 and Fig. 49.

Fig. 53 is a diagram illustrating yet another configuration example of a communication system to which the present invention has been applied.

Fig. 54 is a flowchart illustrating yet another example of the flow of status confirmation processing.

Fig. 55 is a diagram for describing another example of communication settings.

Fig. 56 is a diagram illustrating a configuration example of an embodiment of a communication system to which the present invention has been applied.

Fig. 57 is a flowchart illustrating yet another example of the flow of handling processing.

Fig. 58 is a diagram describing an example of a communication medium.

Fig. 59 is a graph illustrating the way in which frequency properties change according to the communication medium.

Fig. 60 is a diagram illustrating a configuration example of an embodiment of a communication system to which the present invention has been applied.

Fig. 61 is a flowchart illustrating an example of the flow of communication processing.

Fig. 62 is a flowchart illustrating another example of the flow of communication processing.

Fig. 63 is a diagram illustrating a configuration example of a personal computer to which the present invention has been applied.

Reference Numerals

1000 communication system
1001 transmission device
1002 reception device
1003 communication medium
1014 status confirmation unit
1015 handling unit
1034 status confirmation unit
1035 handling unit
1056 Rtr
1057 Vtr
1066 Rrr
1067 Vrr
1068 Vro
1069 SW
1081 and 1082 Rm
1083 Cm
1200 communication system
1201 and 1202 communication devices
1214 communication status confirmation unit
1215 communication handling unit
1400 communication system
1401 transmission device
1402 reception device
1414 status confirmation unit
1421 communication medium information input unit
1434 status confirmation unit
1441 communication medium information input unit
1600 communication system
1601 and 1602 communication devices
1614 communication status confirmation unit
1621 communication medium information input unit

Best Mode for Carrying Out the Invention

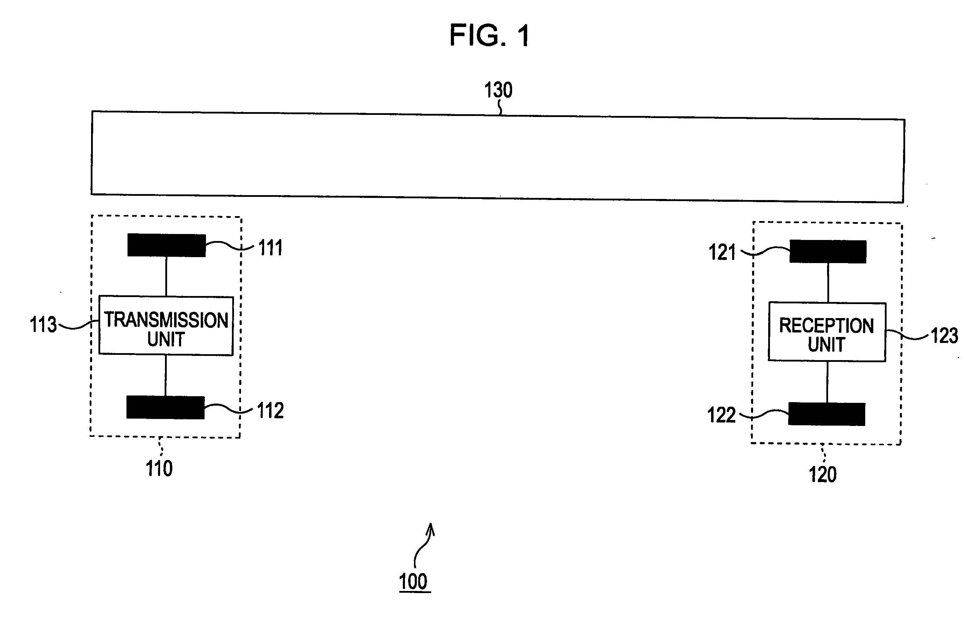

Embodiments of the present invention will now be described with reference to the drawings. First, making reference to Fig. 1 through Fig. 33, description will be made regarding a communication system which is no restricted by the usage environment by doing away with the need for a physical reference point path and realizing communication by a communication signal transmission path alone, as an example of a communication system to which the present invention is applied.

Fig. 1 is a diagram illustrating a configuration example according to an embodiment of a communication system which does not use a physical reference point path but realizes communication by a communication signal transmission path alone.

In Fig. 1, a communication system 100 is configured including a transmission device 110, a reception device 120, and a communication medium 130, thereby realizing a transmission/reception system wherein the transmission device 110 and the reception device 120 exchange signal via the communication medium 130. In other words, with this communication system 100, signals transmitted from the transmission device 110 are transmitted via the communication medium 130, and received by the reception device 120.

The transmission device 110 includes a transmission signal electrode 111, a transmission reference electrode 112, and a transmission unit 113. The transmission signal electrode 111 is one electrode of a pair of electrodes provided for transmission of signals to be transferred via the communication medium 130, and is provided such that the electrostatic coupling thereof as to the communication medium 130 is stronger than that of the transmission reference electrode 112, which is the other electrode of the pair. The transmission unit 113 is provided between the transmission signal electrode 111 and the transmission reference electrode 112, and provides these electrodes with electric signals (electric potential) to be transferred to the reception device 120.

The reception device 120 includes a reception signal electrode 121, a reception reference electrode 122, and a reception unit 123. The reception signal electrode 121 is one electrode of a pair of electrodes provided for reception of signals transferred via the communication medium 130, and is provided such that the electrostatic coupling thereof as to the communication medium 130 is stronger than that of the reception reference electrode 122, which is the other electrode of the pair. The reception unit 123 is provided between the reception signal electrode 121 and the reception reference electrode 122, and detects electric signals (electric potential) generated between these electrodes by signals transferred over the communication medium 130, converts these electric signals into suitable electric signals, and restores the electric signals generated and the transmission unit 113 of the transmission device 110.

The communication medium 130 is configured of a material having physical properties enabling electric signals to be carried, such as electric conductors, dielectric materials, for example. For example, the communication medium 130 may be configured of: an electric conductor, a representative example of which is metal, such as copper, iron, aluminum, or the like; a dielectric material such as pure water, rubber, glass, or the like; or a compound material having the nature of both a conductor and a dielectric substance, such as an organism, an electrolytic solution of saltwater or the like, or the like. The shape of the communication medium 130 is not restricted in any way, and may be linear, plate-shaped, spherical, a polygonal pillar, a cylinder, or any other arbitrary shape.

With regard to such a communication system 100, description will first be made regarding the relation between the electrodes and the space around the communication medium or device. In the following description, the communication medium 130 will be described as being a perfect conductor, for the sake of facilitating description. Also, we will say that there is space between the transmission signal electrode 111 and the communication medium 130, and between the transmission reference electrode 121 and the communication medium 130, and that there is no electrical coupling in this space. That is to say, capacitance is formed between the communication medium 130 and each of the transmission signal electrode 111 and the transmission reference electrode 121.

Further, the transmission reference electrode 112 is disposed facing the space around the transmission device 110, and the reception reference electrode 122 is disposed facing the space around the reception device 120. Generally, in the event that a spherical conductor exists in a space, capacitance is formed between the spherical conductor and the space. For example, with a conductor shaped as a sphere having a radius of r [m], the capacitance C is obtained as in the following Expression (1).

Expression (1)

$$C = 4\pi\varepsilon r \quad [F] \qquad \cdots(1)$$

In Expression (1), $\pi$ is the circle ratio. Also, $\varepsilon$ represents permittivity, and is obtained by the following Expression (2).

Expression (2)

$$\varepsilon = \varepsilon_r \times \varepsilon_0 \qquad \cdots(2)$$

Note that in Expression (2), ε0 represents permittivity in a vacuum, which is $8.854 \times 10^{-12}$ F/m, and εr represents relative permittivity as to the permittivity ε0 in a vacuum.

As can be seen from Expression (1), the greater the radius r is, the greater the capacitance C is. Now, with conductors having complex shapes instead of a spherical shape, the capacitance C cannot be expressed in a simple from as with the above Expression (1), still, it can be clearly understood that the capacitance C changes according to the surface area of the conductor.

As described above, the transmission reference electrode 112 forms a capacitance as to the space around the transmission device 110, and the reception reference electrode 122 forms a capacitance as to the space around the reception device 120. That is to say, when viewed from an external virtual infinite distance from the transmission device 110 and the reception device 120, the potential of the transmission reference electrode 112 and the reception reference electrode 121 becomes less readily changeable as the capacitance increases.

Next, the principle of the communication with the communication system 100 will be described. Note that in the following description, a capacitor may be referred to simply as capacitance for the sake of facilitating description, or due to the order in which description is made, but these should be understood to be equivalent.

Also, the following description is made with the understanding that the transmission device 110 and the reception device 120 in Fig. 1 are disposed with sufficient distance maintained between the two devices, and that mutual effects are negligible. Also, let us say that at the transmission device 110, the transmission signal electrode 111 forms electrostatic coupling only with the communication medium 130, with sufficient distance between the transmission reference electrode 112 and the transmission signal electrode 111, so that mutual effect is negligible (e.g., there is no electrostatic coupling). Further, let us say that at the reception device 120, the reception signal electrode 121 forms electrostatic coupling only with the communication medium 130, with sufficient distance between the reception reference electrode 122 and the reception signal electrode 121, so that mutual effect is negligible (e.g., there is no electrostatic coupling). Of course, the very fact that that the transmission signal electrode 111, reception signal electrode 121, and the communication medium 130 are disposed in a space means that each has capacitance as to the space in reality, but these will be considered negligible for the sake of facilitating description.

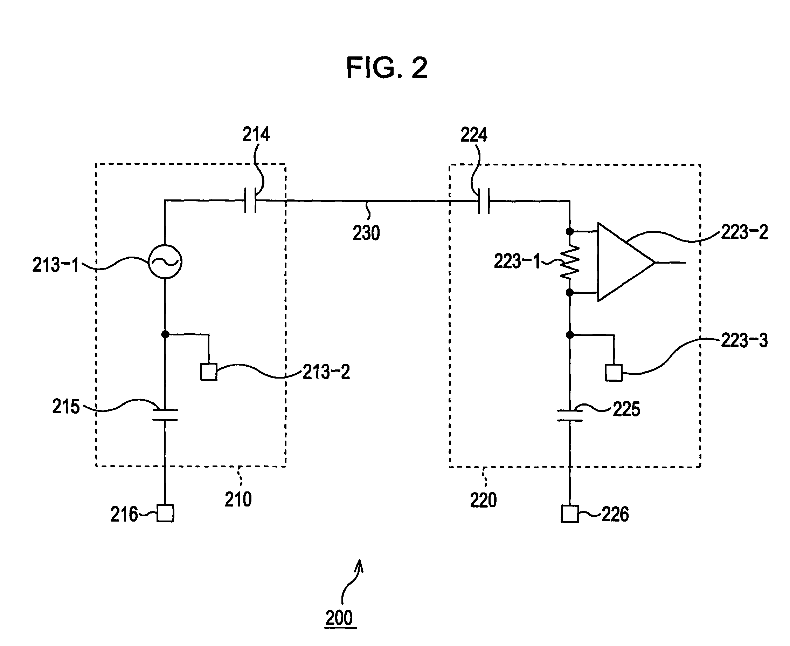

Fig. 2 is a diagram illustrating the communication system 100 shown in Fig. 1 with an equivalent circuit. The communication system 200 is the communication system 100 represented with an equivalent circuit, and is substantially equivalent to the communication system 100.

That is to say, while the communication system 200 has a transmission device 210, reception device 220, and connection line 230, the transmission device 210 corresponds to the transmission device 110 of the communication system 100 shown in Fig. 1, the reception device 220 corresponds to the reception device 120 of the communication system 100 shown in Fig. 1, and the connection line 230 corresponds to the communication medium 130 of the communication system 100 shown in Fig. 1.

At the transmission device 210 shown in Fig. 2, the signal source 213-1 and the in-transmission-device reference point 213-2 correspond to the transmission unit 113 shown in Fig. 1. The signal source 213-1 generates sine waves of a specific cycle ω × t rad as transmission signals, wherein t [s] represents time, and ω rad/s represents angular frequency which can be represented as in Expression (3).

Expression (3)

$$\omega = 2\pi f \quad [\mathrm{rad/s}] \quad \cdots (3)$$

In Expression (3), π represents the circle ratio and f [Hz] represents the frequency of signals generated by the signal source 213-1. The in-transmission-device reference point 213-2 is the point where the circuit within the transmission device 210 is grounded. That is to say, one terminal of the signal source 213-1 is set to a predetermined reference potential of the circuit within the transmission device 210.

Cte 214 denotes a capacitor, representing the capacitance between the transmission signal electrode 111 and the communication medium 130 in Fig. 1. That is to say, Cte 214 is provided between the end of the signal source 213-1 at the opposite side from the in-transmission-device reference point 213-2, and the connection line 230. Also, Ctg 215 denotes a capacitor, representing the capacitance of the transmission reference electrode 112 shown in Fig. 1 as to space. Ctg 215 is provided between the terminal of the signal source 213-1 at the side of the in-transmission-device reference point 213-2 and a reference point 216 representing a spatial point of infinity (virtual point) based on the transmission device 210.

In the reception device 220 shown in Fig. 2, a Rr 223-1, detector 223-2, and in-reception-device reference point 223-3 correspond to the reception unit 123 shown in Fig. 1. The Rr 223-1 is a load resistor (reception resistor) for extracting reception signals. The detector 223-2, which is configured of an amplifier, detects and amplifies potential difference between the terminals at both ends of the Rr 223-1. The in-reception-device reference point 223-3 is a point at which the circuit within the reception device 220 is grounded. That is to say, one terminal of the Rr 223-1 (one input terminal of the detector 223-2) is set to a predetermined reference potential of the circuit within the reception device 220.

The detector 223-2 may be provided with other functions as well, such as demodulating the detected modulation signals, decoding encoded information contained in the detected signals, and so forth, for example.

Cre 224 denotes a capacitor, representing the capacitance between the reception signal electrode 121 and the communication medium 130 shown in Fig. 1. That is to say, the Cre 224 is provided between the terminal of the Rr 223-1 opposite to the in-reception-device reference point 223-3 and the connection line 230. Also, Crg 225 is a capacitor, representing the capacitance of the reception reference electrode 122 as to the space in Fig. 1. The Crg 225 is provided between the terminal of the Rr 223-1 at the side of the in-reception-device reference point 223-3 and a reference point 226 representing a spatial point of infinity (virtual point) based on the reception device 120.

The connection line 230 represents the communication medium 130, which is a perfect conductor. Note that in the communication system 200 shown in Fig. 2, the Ctg 215 and Crg 225 are represented as being mutually electrically connected via the reference point 216 and the reference point 226, as an equivalent circuit, but these actually do not need to be electrically connected; formation of capacitance in the space around the transmission device 210 or reception device 220 is sufficient. What is important is that, in the presence of a conductor, capacitance proportionate to the surface area thereof is always formed as to the surrounding space. Also note that the reference point 216 and the reference point 226 do not need to be electrically connected, and may be mutually independent.

Also, in the event that the communication medium 130 shown in Fig. 1 is a perfect conductor, the conductivity of the connecting line 230 can be considered to be infinite, so there is no effect of the connection line 230 shown in Fig. 2 on communications. Note further that in the event that the communication medium 130 is a conductor with sufficient conductivity, the distance between the transmission device and the reception device does not affect the stability of communication in actual use. Accordingly, in such a case, the distance between the transmission device 210 and the reception device 220 can never be too long.

In the communication system 200, the signal source 213-1, Rr 223-1, Cte 214, Ctg 215, Cre 224, and Crg 225 form a circuit. The combined capacity Cx of the four serially-connected capacitors (Cte 214, Ctg 215, capacitor Cre 224, and Crg 225) can be expressed as in the following Expression (4) .

Expression (4)

$$C_x = \cfrac{1}{\cfrac{1}{Cte} + \cfrac{1}{Ctg} + \cfrac{1}{Cre} + \cfrac{1}{Crg}} \quad [F] \qquad \cdots (4)$$

Also, the sine wave vt (t) which the signal source 213-1 generates is represented as shown in Expression 5.

Expression (5)

$$V_t(t) = V_m \times \sin(\omega t + \theta) \quad [V] \qquad \cdots (5)$$

Now, Vm [ V] represents the peak voltage of the signal source voltage, and θ [rad], represents the initial phase angle. Now, the actual value Vtrms [V] of the voltage from the signal source 213-1 can be obtained from the following Expression (6).

Expression (6)

$$V_{trms} = \frac{V_m}{\sqrt{2}} \quad [V] \qquad \cdots (6)$$

The combined impedance Z of the entire circuit can be obtained from the following Expression (7).
Expression (7)

$$Z = \sqrt{Rr^2 + \frac{1}{(\omega C_x)^2}}$$

$$= \sqrt{Rr^2 + \frac{1}{(2\pi f C_x)^2}} \quad [\Omega] \qquad \cdots (7)$$

That is to say, the actual value Vrrms of the voltage generated at both ends of the Rr 223-1 can be obtained from the following Expression (8).
Expression (8)

$$V_{rrms} = \frac{Rr}{Z} \times V_{trms}$$

$$= \frac{Rr}{\sqrt{Rr^2 + \frac{1}{(2\pi f C_x)^2}}} \times V_{trms} \quad [V] \qquad \cdots (8)$$

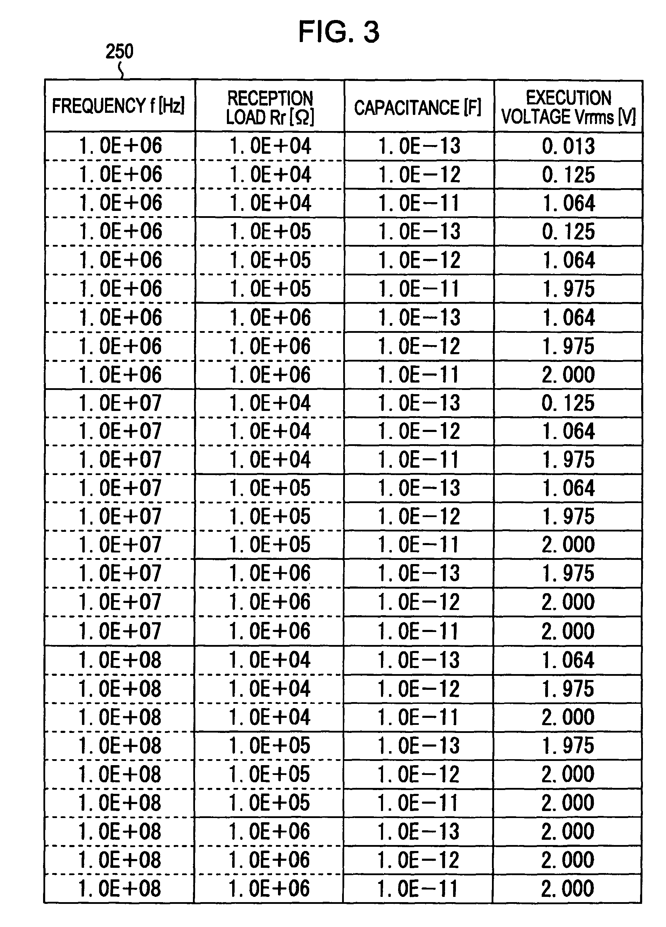

Accordingly, as can be seen from Expression (8), the greater the resistance value of the Rr 223-1 is, and the greater the capacitance Cx is and the higher the frequency f [Hz], of the signal source 213-1 is, the smaller the item 1/ ((2 × π × f × Cx)2) is, and greater signals can be generated at both ends of Rr 223-1.
For example, the Table 250 shown in Fig. 3 illustrates the calculation results of the actual values Vrrms of the voltage generated at both ends of Rr 223-1, with the actual value Vtrms of the voltage of the signal source 213-1 of the transmission device 210 fixed to 2 [V], for signals generated by the signal source 213-1 at frequencies f of 1 [MHz], 10 [MHz], and 100 [MHz], resistance values of Rr 223-1 of 10 [KΩ], 100 [KΩ], and 1 [MΩ], and total circuit capacitance Cx of 0.1 [pF], 1 [pF], and 10 [pF].
As can be seen from the Table 250, the calculation results of the actual value Vrrms of the voltage are such that, in the event that other conditions are the same, the actual value Vrrms is greater for frequency f of 10 [MHz] than 1 [MHz], greater for 1 [MΩ] for the resistance value of the Rr 223-1 which is the reception load than 10 [kΩ], and greater for 10 [pF] in capacitance Cx than 0.1 [pF]. That is to say, the greater the frequency f value, Rr 223-1 resistance value, and capacitance Cx value are, the greater the actual value Vrrms of the voltage is.
Also, it can be understood from Table 250 that electric signals are generated at the Rr 223-1 even with capacitance under a picofarad. That is to say, even in the event that the signal level of the signal being transferred is minute, communication can be enabled by amplifying the detected signal using the detector 223-2 of the reception device 220.

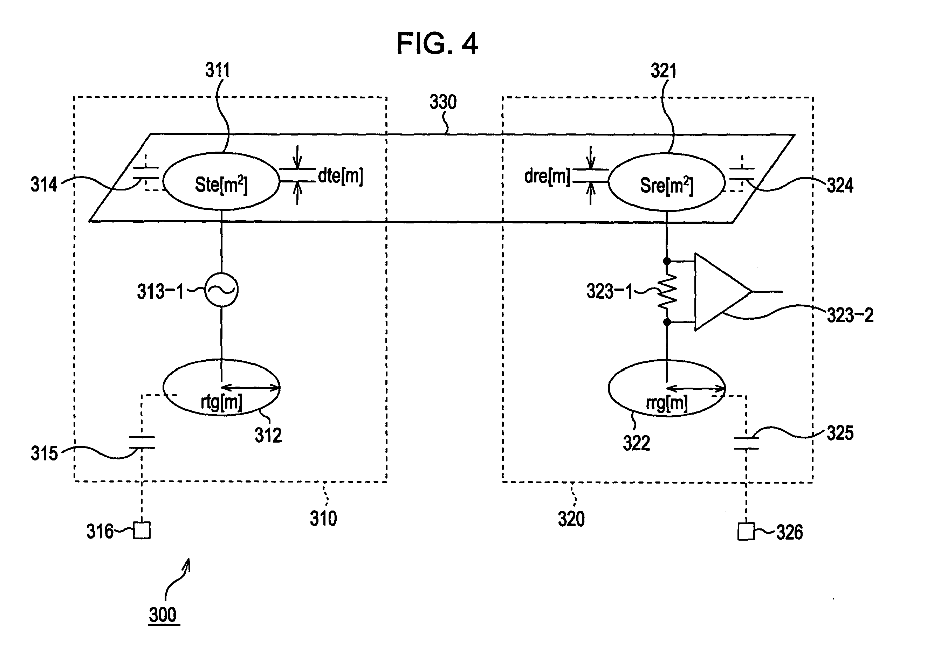

Next, a calculation example of the parameters for the communication system 200 according to the equivalent circuit described above will be described in detail with reference to Fig. 4. Fig. 4 is a diagram for describing computation examples, including effects of the physical configuration of the communication system 100.

The communication system 300 shown in Fig. 4 is a system corresponding to the communication system 100 shown in Fig. 1, wherein information relating to the physical configuration of the communication system 100 have been added to the communication system 200 shown in Fig. 2. That is to say, the communication system 300 has a transmission device 310, reception device 320, and a communication medium 330. Making description in comparison with the communication system 100 shown in Fig. 1, the transmission device 310 corresponds to the transmission device 110, the reception device 320 corresponds to the reception device 120, and the communication medium 330 corresponds to the communication medium 130.

The transmission device 310 has a transmission signal electrode 311 corresponding to the transmission signal electrode 111, a transmission reference electrode 312 corresponding to the transmission reference electrode 112, and a signal source 313-1 corresponding to the transmission unit 113. That is to say, the transmission signal electrode 311 is connected to one of the terminals at both ends of the signal source 313-1, and the transmission reference electrode 312 is connected to the other. The transmission signal electrode 311 is provided so as to be in close proximity with the communication medium 330. The transmission reference electrode 312 is provided removed from the communication medium 330 to a degree so as to not be affected by the communication medium 330, and is configured so as to have capacitance as to the external space of the transmission device 310. Note that while the transmission unit 113 has been described in Fig. 2 such that the signal source 213-1 and the in-transmission-device reference point 213-2 correspond, but this in-transmission-device reference point has been omitted from Fig. 4 for the sake of facilitating description.

As with the case of the transmission device 310, the reception device 320 also has a reception signal electrode 321 corresponding to the reception signal electrode 121, a reception reference electrode 322 corresponding to the reception reference electrode 122, and Rr 323-1 and detector 323-2 corresponding to the reception unit 123. That is to say, the reception signal electrode 321 is connected to one of the terminals at both ends of the Rr 323-1, and the reception reference electrode 322 is connected to the other. The reception signal electrode 321 is provided so as to be in close proximity with the communication medium 330. The reception reference electrode 322 is provided removed from the communication medium 330 to a degree so as to not be affected by the communication medium 330, and is configured so as to have capacitance as to the external space of the reception device 320. Note that while the reception unit 123 has been described in Fig. 2 such that the Rr 223-1, detector 223-2, and in-reception-device reference point 223-2 correspond, but this in-reception-device reference point has been omitted from Fig. 4 for the sake of facilitating description.

Note that the communication medium 330 is assumed to be a perfect conductor, as with the cases of Fig. 1 and Fig. 2. The transmission device 310 and reception device 320 are positioned with a sufficient distance therebetween, and accordingly mutual effects can be considered negligible. Also, the transmission signal electrode 311 has electrostatic coupling only with the communication medium 330. Also, the transmission reference electrode 312 is distanced from the transmission signal electrode 311 by a sufficient distance, so mutual effects can be considered to be negligible. In the same way, the reception signal electrode 321 has electrostatic coupling only with the communication medium 330. Further, the reception reference electrode 322 is distanced from the reception signal electrode 321 by a sufficient distance, so mutual effects can be considered to be negligible. To be more exact, the transmission signal electrode 311, reception signal electrode 321, and communication medium 330 do have capacitance with regard to space, but these will be considered to be negligible here to facilitate description.

As shown in Fig. 4, with the communication system 300, the transmission device 310 is disposed at one end of the communication medium 330, and the reception device 320 is placed at the other end.

Let us say that there is a space of the distance dte [m] between the transmission signal electrode 311 and the communication medium 330. Also, if we say that the transmission signal electrode 311 is a disc-shaped conductor of which the surface area on one side is Ste [m$^2$] the capacitance Cte 314 formed between the transmission signal electrode 311 and the communication medium 330 can be obtained as with the following Expression (9).

Expression (9)

$$Cte = \varepsilon \times \frac{Ste}{dte} \quad [F] \qquad \cdots (9)$$

Expression (9) is a computation expression generally known as parallel plate capacitance calculation. In the above Expression, ε represents permittivity, and since the communication system 300 is disposed in the air, the relative permittivity εr can be considered to be approximately 1, so the permittivity ε can be considered to be equivalent to permittivity ε0 in a vacuum. Calculating the capacitance Cte 314 with the surface area Ste of the transmission signal electrode 311 as $2 \times 10^{-3}$ [m$^2$] (diameter of approximately 5 [cm]) and the spacing dte thereof as $5 \times 10^{-3}$ [m] (5 [mm]) yields the following Expression (10).

$$\text{Expression (10)}$$

$$Cte = (8.854 \times 10^{-12}) \times \frac{2 \times 10^{-3}}{5 \times 10^{-3}}$$

$$\fallingdotseq 3.5 \quad [\text{pF}] \quad \cdots (10)$$

Now, it should be noted that strictly speaking, the above Expression (9) holds as an actual physical phenomenon in the event that the relation of Ste >> dte, but here, we will say that this is can be approximated with Expression (9).

Next, description will be made regarding the capacitance Ctg 315 formed of the transmission reference electrode 312 and space (the capacitance between the transmission reference electrode 312 and a reference point 316 representing a virtual point of infinity from the transmission reference electrode 312). Generally, in the event that a disc with a radius of r [m] is placed in space, the capacitance C in farads formed between the disc and the space can be obtained from the following Expression (11).

$$\text{Expression (11)}$$

$$C = 8\varepsilon r \quad [\text{F}] \quad \cdots (11)$$

If we say that the transmission reference electrode 312 is a conductor disc of a radius of rtg = $2.5 \times 10^{-2}$ [m] (radius of 2.5 [cm]), the capacitance Ctg 315 formed of the transmission reference electrode 317 and the space can be obtained as shown in the following Expression (12), using the above-described Expression (11). Note that the communication system 300 is disposed in air, and that the permittivity of the space can be approximated by the permittivity ε0 in a vacuum.

$$\text{Expression (12)}$$

$$Ctg = 8 \times 8.854 \times 10^{-12} \times 2.5 \times 10^{-2}$$

$$\fallingdotseq 1.8 \quad [\text{pF}] \quad \cdots (12)$$

If the size of the reception signal electrode 321 is the same as that of the transmission signal electrode 311 (conductor disc wherein Sre [m$^2$] = Ste [m$^2$]), and the distance as to the communication medium 330 is also the same (dre [m] = dte [m]), the capacitance Cre 324 formed of the reception signal electrode 321 and the communication medium 330 is 3.5 [pF], the same as at the transmission side. Also, in the event that the size of the reception reference electrode 322 is the same size as the transmission reference electrode 312 (conductor disc with radius of rrg [m] = rtg [m]), the capacitance Crg 325 formed of the reception reference electrode 322 and space (the capacitance between the reception reference electrode 322 and a reference point 326 representing a virtual point of infinity from the reception reference electrode 322), is 1.8 [pF], the same as at the transmission side. From the above, the combined capacitance Cx of the four capacitances Cte 314, Ctg 315, Cre 324, and Crg 325, can be obtained from the following Expression (13), applying the above-described Expression (4).

Expression (13)

$$C_x = \cfrac{1}{\cfrac{1}{Cte} + \cfrac{1}{Ctg} + \cfrac{1}{Cre} + \cfrac{1}{Crg}}$$

$$= \cfrac{1}{\cfrac{1}{3.5 \times 10^{-12}} + \cfrac{1}{1.8 \times 10^{-12}} + \cfrac{1}{3.5 \times 10^{-12}} + \cfrac{1}{1.8 \times 10^{-12}}}$$

$$\fallingdotseq 0.6 \quad [pF] \quad \cdots (13)$$

With the frequency f of the signal source 313-1 as 1 [MHz], the actual value Vtrms of voltage as 2 [V], and the Rr 323-1 as 100 [KΩ], the voltage Vrrms generated at both ends of the Rr 323-1 can be obtained by the following Expression (14).

Expression (14)

$$V_{rrms} = \cfrac{Rr}{\sqrt{Rr^2 + \cfrac{1}{(2\pi f C_x)^2}}} \times V_{trms}$$

$$= \cfrac{1 \times 10^5}{\sqrt{(1 \times 10^5)^2 + \cfrac{1}{(2 \times \pi \times (1 \times 10^6) \times (0.6 \times 10^{-12}))^2}}} \times 2$$

$$\fallingdotseq 0.71 \quad [V] \quad \cdots (14)$$

Based on the above results, as a basic principle, signals can be handed from the transmission device to the reception device by using the capacitance generated with the space.

The capacitance of the transmission reference electrode and reception reference electrode as to space as described above can be formed as long as there is space at the position of each electrode. Accordingly, the transmission device and reception device described above can yield stable communication without dependence on distance therebetween, as long as the transmission signal electrode and reception signal electrode are coupled by the communication medium.

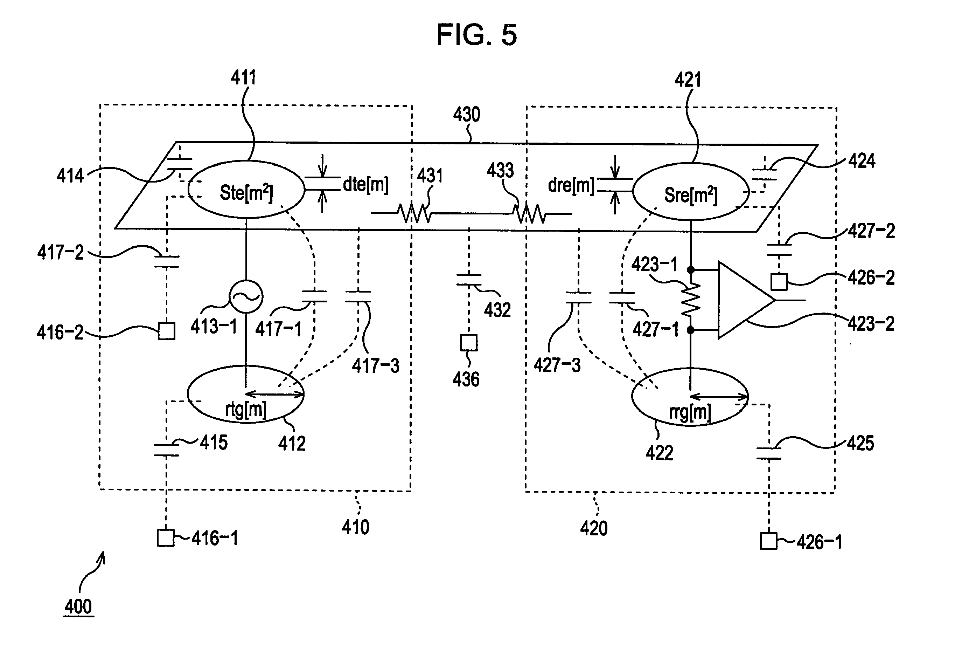

Next, description will be made regarding an actual physical configuration of the present communication system. Fig. 5 is a diagram illustrating an example of a computation model for the parameters generated in the system in the event of making an actual physical configuration of the communication system described above.

That is to say, the communication system 400 has a transmission device 410, reception device 420, and communication medium 430, and is a system corresponding to the above-described communication system 100 (communication systems 200 and 300), and only the parameters to be evaluated are different and the configuration is basically the same as that of the communication system 100 through communication system 300.

That is to say, in comparison with the communication system 300, the transmission device 410 corresponds to the transmission device 310, the transmission signal electrode 411 of the transmission device 410 corresponds to the transmission signal electrode 311, the transmission reference electrode 412 corresponds to the transmission reference electrode 312, and the signal source 431-1 corresponds to the signal source 331-1. Also, the reception device 420 corresponds to the reception device 320, reception signal electrode 421 of the reception device 420 corresponds to the reception signal electrode 321, the reception reference electrode 422 corresponds to the reception reference electrode 322, Rr 423-1 corresponds to Rr 323-1, and the detector 423-2 corresponds to the detector 323-2. Further, the communication medium 430 corresponds to the communication medium 330.

Also, making description with regard to the parameters, the capacitance Cte 414 between the transmission signal electrode 411 and the communication medium 430 corresponds to the Cte 314 in the communication system 300, the capacitance Ctg 415 of the transmission reference electrode 412 as to the space corresponds to the Ctg 315 in the communication system 300, and the reference point 416-1 and reference point 416-2 representing virtual points of infinity in space from the transmission device 410 correspond to the reference point 316 in the communication system 300. Also, the transmission signal electrode 411 is a disc-shaped electrode having an area of Ste $[m^2]$ and is provided at a position removed from the communication medium 430 by a minute distance dte [m]. The transmission reference electrode 412 also is a disc-shaped electrode, and the radius thereof is rtg [m].

At the reception device 420 side, the capacitance Cre 424 between the reception signal electrode 421 and the communication medium 430 corresponds to the Cre 324 in the communication system 300, the capacitance Crg 425 of the reception reference electrode 422 as to the space corresponds to the Crg 325 in the communication system 300, and the reference point 426-1 and reference point 426-2 representing virtual points of infinity in space from the reception device 420 correspond to the reference point 326 in the communication system 300. Also, the reception signal electrode 421 is a disc-shaped electrode having an area of Sre $[m^2]$, and is provided at a position removed from the communication medium 430 by a minute distance dre [m]. The reception reference electrode 422 also is a disc-shaped electrode, and the radius thereof is rrg [m].

The communication system 400 shown in Fig. 5 is a model wherein the following new parameters have been added in addition to the above parameters.

For example, with regard to the transmission device 410, capacitance Ctb 417-1 formed between the transmission signal electrode 411 and the transmission reference electrode 412, capacitance Cth 417-2 formed between the transmission signal electrode 411 and space, and capacitance Cti 417-3 formed between the transmission reference electrode 412 and the communication medium 430, are added as new parameters.

Further, with regard to the reception device 420, capacitance Crb 427-1 formed between the reception signal electrode 421 and the reception reference electrode 422, capacitance Crh 427-2 formed between the reception signal electrode 421 and space, and capacitance Cri 427-3 formed between the reception reference electrode 422 and the communication medium 430, are added as new parameters.

Further, with regard to the communication medium 430, capacitance Cm 432 formed between the communication medium 430 and space, (the capacitance between the communication medium 430 and a reference point 436 representing a virtual point of infinity from the communication medium 430), is added as a new parameter. Moreover, the communication 430 has electrical resistance in reality, depending on the size, material, and so forth thereof, so resistance values Rm 431 and Rm 433 are added as new parameters representing the resistance components thereof.

Also, while omitted from the communication system 400 shown in Fig. 5, in the event that the communication medium is dielectric in addition to being conductive, capacitance according to the permittivity thereof is also formed. Also, in the event that there is no conductivity to the communication medium and the communication medium is only dielectric, coupling between the transmission signal electrode 411 and the reception signal electrode 421 occurs at a capacitance determined by the permittivity, distance, size, and placement, of the dielectric material.

Also, the situation assumed here is an arrangement wherein the transmission device 410 and the reception device 420 are distanced one form another to where the mutual electrostatic coupling component is negligible (i.e., a case wherein the effects of electrostatic coupling between the transmission device 410 and the reception device 420 can be ignored). In the event that the distance is close, there may be need to take into consideration the capacitance between the electrodes within the transmission device 410 and the electrodes within the reception device 420, depending on the positional relation thereof, in light of the above-described concept.

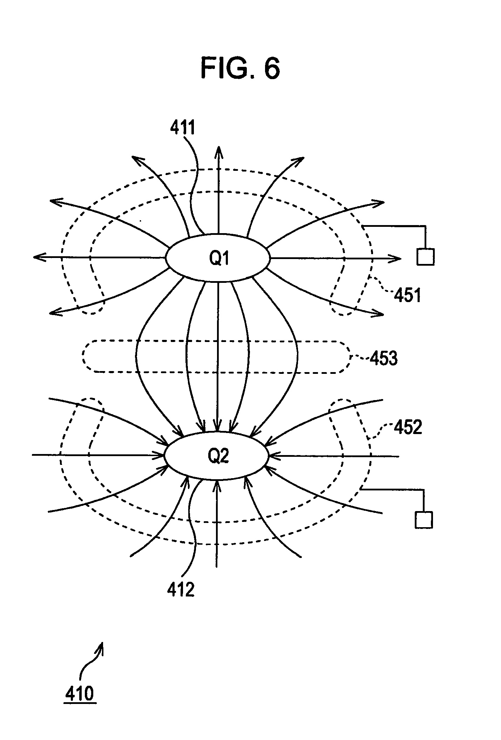

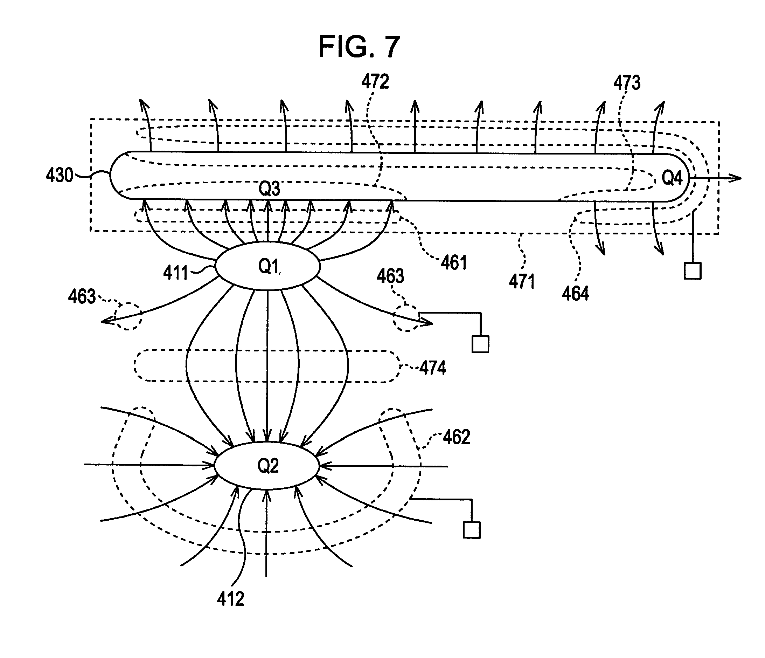

The operations of the communication system 400 shown in Fig. 5 will be described by way of electric flux lines. Fig. 6 and Fig. 7 are schematic diagrams representing the relation between the electrodes of the transmission device 410 of the communication system one with another, or between the electrodes and the communication medium 430, using electric flux lines.

Fig. 6 is a schematic diagram illustrating an example of distribution of electric flux lines regarding the transmission device 410 of the communication system 400, in the event that a communication medium 430 is not present. Now, let us say that the transmission signal electrode 411 has a positive charge (i.e., is charged positively), and that the transmission reference electrode 412 has a negative charge (i.e., is charged negatively). The arrows in the drawing represent electric flux lines, and the directions thereof are from the positive charge toward negative charge. Electric flux lines have a nature of never disappearing partway; they either reach an object having a charge of the opposite sign, or reach a virtual point of infinity.

Now, the electric flux lines 451 represent the electric flux lines which have been discharged from the transmission signal electrode 411 and which reach the point of infinity. The electric flux lines 452 represent, of the electric flux lines heading toward the transmission reference electrode 412, those which are arriving from a virtual point of infinity. The electric flux lines 453 represent the electric flux lines generated between the transmission signal electrode 411 and the transmission reference electrode 412. The distribution of the electric flux lines is affected by the size of the electrodes and the positional relation thereof.

Fig. 7 is a schematic diagram illustrating an example of the distribution of electric flux lines in the event that such a transmission device 410 is brought close to the communication medium 430. The communication medium 430 has become close to the transmission signal electrode 411, is coupling between the two intensifies, such that a great deal of the electric flux lines 451 which had been reaching the point of infinity in Fig. 6 become electric flux lines 461 which reach the communication medium 430, and there is reduction of the electric flux lines 463 heading toward the point of infinity (the electric flux lines 451 in Fig. 6). In accordance with this, the capacitance as to the point of infinity as viewed from the transmission signal electrode 411 (Cth 417-2 in Fig. 5) weakens, and the capacitance as to the communication medium 430 (Cte 414 in Fig. 5) increases. Note that in reality, there is also electrostatic coupling between the transmission reference electrode 412 and the communication medium 430 (Cti 417-3 in Fig. 5), but this will be considered to be negligible here.

According to Gauss' law, the number N [lines] of electric flux lines passing through and out an arbitrary closed surface S is equal to the total charge included in the closed surface S by the permittivity ε, and is not affected by charges outside of the closed surface S. If we way that there are n charges at the closed surface S, the following Expression holds.

Expression (15)

$$N = \frac{1}{\varepsilon} \sum_{i=1}^{n} q_i \quad \text{[Lines]} \quad \cdots (15)$$

Here, i is an integer, and the variables qi represent the charge content of each charge. This law shows that the electric flux lines flowing out from the closed surface S are determined only by the charges existing within the closed surface S, and that all electric flux lines entering externally are being emitted from somewhere else.

If we say that the communication medium 430 is not grounded in Fig. 7, according to this law there is no charge source in the closed surface 471 near the communication medium 430, so a charge Q3 is inducted by electrostatic induction at the region 472 of the communication medium near the electric flux lines 461. The communication medium 430 is not grounded so the total charge content of the communication medium 430 does not charge, and accordingly, a charge Q4 having the same quantity but opposite sign from the charge Q3 is inducted at the region 473 outside of the region 472 where the charge Q3 has been inducted, and electric flux lines 464 generated thereby are emitted from the closed surface 471. The greater the communication medium is, the greater the dispersion of the charge Q4 is, and charge density also deteriorates, so the number of electric flux lines per unit area also drops.

In the event that the communication medium 430 is a complete conductor, due to the property that the potential is the same regardless of the part thereof owing to the nature of perfect conductors, there is the nature that the charge density is also approximately equal regardless of the part thereof. In the event that the communication medium 430 is a conductor having a resistance component, the number of electric flux lines decreases according to distance in accordance with the resistance thereof. Also, in the event that the communication medium 430 is a dielectric material not having conductivity, the electric flux lines are dispersed and propagated due to polarization action thereof. If we way that there are n conductors in space, the charges Qi of each of the conductors can be calculated by the following Expression.

Expression (16)

$$Q_i = \sum_{j=1}^{n} (C_{ij} \times V_j) \quad [C] \quad \cdots (16)$$

Here, i and j are integers, and Cij represents a capacity coefficient formed of conductor i and conductor j, which can be considered to be the same nature as capacitance. A capacity coefficient is determined only from the shape of the conductors and the positional relationship thereof. The capacity coefficient Cii is a capacitance which the conductor i itself forms as to space. Further, Cij = Cji holds. Expression (16) shows that a system formed of multiple conductors operates based on the law of superposition, indicating that the charge of the conductor is determined by the sum of products of the capacitance between conductors and the potential of each conductor.

Now, let us define the parameters related with each other in Fig. 7 and Expression (16). For example, we will say that Q1 represents the charge inducted at the transmission signal electrode 411, Q2 represents the charge inducted at the transmission reference electrode 412, Q3 represents the charge inducted at the communication medium 430 by the transmission signal electrode 411, and Q4 represents the charge on the communication medium 430 having the same quantity but opposite sign from the charge Q3.

Also, V1 represents the potential at the transmission signal electrode 411 with the point of infinity as the reference, V2 represents the potential at the transmission reference electrode 412 with the point of infinity as the reference, V3 represents the potential at the communication medium 430 with a point of infinity as the reference, C12 represents the capacity coefficient between the transmission signal electrode 411 and transmission reference electrode 412, C13 represents the capacity coefficient between the transmission signal electrode 411 and communication medium 430, C15 represents the capacity coefficient between the transmission signal electrode 411 and space, C25 represents the capacity coefficient between the transmission reference electrode 411 and space, and further, C45 represents the capacity coefficient between the communication medium 430 and space.

Q3 here can be obtained by the following Expression.

Expression (17)

$$Q_3 = C13 \times V1 \quad [C] \quad \cdots (17)$$

Increasing the charge Q3 enables a greater electric field to be input to the communication medium 430, and this can be accomplished by raising the capacity coefficient C13 between the transmission signal electrode 411 and communication medium 430, and also providing a potential V1 of a sufficient level. While the capacity coefficient C13 is determined by shape and positional relation, the closer the mutual distance is and the greater the facing area is, the greater the capacitance is. Next, regarding the potential V1, sufficient potential must be generated as viewed from the point of infinity. While a potential difference is provided between the transmission signal electrode 411 and the transmission reference electrode 412 by the signal source when viewed from the transmission device 410, the behavior of the transmission reference electrode 412 is crucial in order to generate this potential difference as a sufficient potential difference when viewed from the point of infinity as well.

In the event that the transmission reference electrode 412 is minute and the transmission signal electrode 411 is sufficiently great, the capacity coefficients C12 and C25 are small. On the other hand, the capacity coefficients C13, C15, and C45 have great capacitance, and accordingly do not readily fluctuate electrically, so most of the potential difference generated at the signal source is manifested as the potential V2 of the transmission reference electrode 412, and the potential V1 of the transmission signal electrode 411 becomes small.

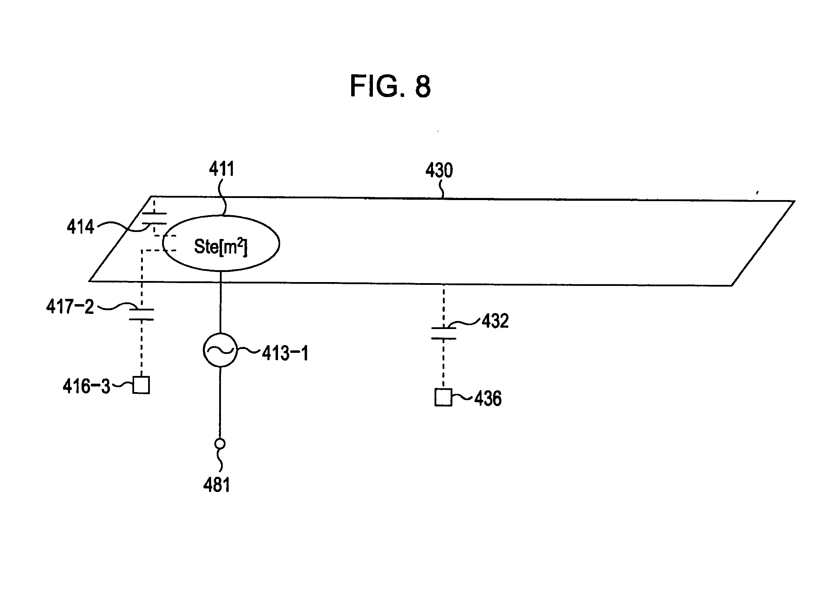

This is shown in Fig. 8. The transmission reference electrode 481 is minute, and accordingly does not couple with any conductor or point of infinity. The transmission signal electrode 411 forms capacitance Cte with the communication medium 430, and forms capacitance Cth 417-2 with the space. The communication medium 430 forms capacitance Cm 432 as to the space. Even in the event that potential is generated between the transmission signal electrode 411 and the transmission reference electrode 412, the capacitances Cte 414, Cth 417-2, and CM 432 are overpoweringly great, and accordingly a great amount of energy is necessary for changing this potential, but the capacitance of the transmission reference electrode 481 facing the signal source 413-1 is weak, so the potential of the transmission signal electrode 411 hardly changes at all, and almost all of the potential change of the signal source 413-1 is manifested at the transmission reference electrode 481 side.

Conversely, in the event that the transmission signal electrode 411 is minute and the transmission reference electrode 481 is sufficiently great, the capacitance of the transmission reference electrode 481 becomes great and electrically not readily changed, so sufficient potential V1 is generated at the transmission signal electrode 411, but electrostatic coupling with the communication medium 430 is weakened, so sufficient electric field cannot be injected.

Accordingly, there is the need to provide a transmission reference electrode whereby sufficient potential can be provided, while injecting an electric field necessary for communication to the communication medium from the transmission signal electrode, in this overall balance. The transmission side has been considered so far, but between the reception device 420 electrodes and the communication medium 430 shown in Fig. 5 can also be considered in the same way.

A point of infinity does not have to be physically a long distance a way, and for practical purposes can be thought to be the space around the device, but is preferably something which is most stable with little potential change in the systems of the overall system. Under actual usage environment, there is nose generated from AC power source lines, lighting devices, other electrical equipment, and so forth, but the noise thereof should be at least not overlapping the frequency band used by the signal source, or negligible.

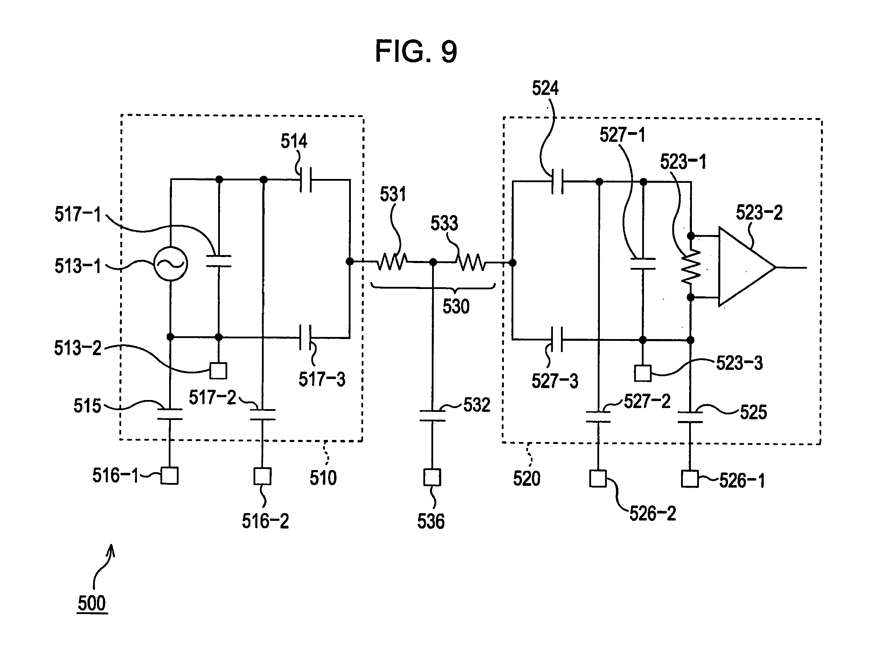

Fig. 9 is a diagram illustrating a model (communication system 400) shown in Fig. 5 with an equivalent circuit. That is to say, as with the relation between Fig. 2 and Fig. 4, the communication system 500 shown in Fig. 9 corresponds to the communication system 400 shown in Fig. 5, the transmission device 510 of the communication system 500 corresponds to the transmission device 410 of the communication system 400, the reception device 520 of the communication system 500 corresponds to the reception device 420 of the communication system 400, and the connection line 530 of the communication system 500 corresponds to the communication medium 430 of the communication system 400.

In the same way, in the transmission device 510 shown in Fig. 9, the signal source 513-1 corresponds to the signal source 413-1. Note illustrated in the transmission device 510 in Fig. 9 is the in-transmission-device reference point 513-2 indicating the ground in the internal circuit of the transmission unit 113 shown in Fig. 1, corresponding to the in-transmission-device reference point 213-2 shown in Fig. 2, that has been omitted from Fig. 5.

Also, Cte 514 shown in Fig. 9 is capacitance corresponding to Cte 414 shown in Fig. 5, Ctg 515 is capacitance corresponding to Ctg 415 shown in Fig. 5, and reference point 516-1 and reference point 516-2 each correspond to reference point 416-1 and reference point 416-2. Further, Ctb 517-1 is capacitance corresponding to Ctb 417-1, Cth 517-2 to Cth 417-2, and Cti 517-3 to Cti 417-3, respectively.

The components of the reception device 520 are also the same, with the reception resistor Rr 523-1 and detector 523-2 each corresponding to the Rr 423-1 and detector 423-2 shown in Fig. 5. Note that in the reception device 520 shown in Fig. 9 is illustrated the in-reception-device reference point 523-3 indicating the ground in the internal circuit of the reception unit 123 shown in Fig. 1, corresponding to the in-reception-device reference point 223-2 shown in Fig. 2 that has been omitted from Fig. 5.

Also, Cre 524 shown in Fig. 9 is capacitance corresponding to Cre 424 shown in Fig. 5, Crg 525 is capacitance corresponding to Cre 425 shown in Fig. 5, and reference point 526-1 and reference point 526-2 correspond to reference point 426-1 and reference point 426-2, respectively. Further, Crb 527-1 is capacitance corresponding to Crb 427-1, Crh 527-2 to Crh 427-2, and Cri 527-3 to Cri 427-3, respectively.

The components connected to the connection line 530 are also the same, with the Rm 531 and Rm 533 which are resistance components f the connection line corresponding to Rm 431 and Rm 433, Cm 532 corresponding to Cm 432, and reference point 536 corresponding to reference point 436.

This communication system 500 has the following nature.

For example, at the transmission device 510, the greater the value of Cte 514 is (the greater the capacity is), the greater the signals, which can be applied to the connection line 530 corresponding to the communication medium 430, are. Also, at the transmission device 510, the greater the value of Ctg 515 is (the greater the capacity is), the greater the signals which can be applied to the connection line 530 are. Further, at the transmission device 510, the smaller the value of Ctb 517-1 is (the smaller the capacity is), the greater the signals which can be applied to the connection line 530 are. Moreover, at the transmission device 510, the smaller the value of Cth 517-2 is (the smaller the capacity is), the greater the signals which can be applied to the connection line 530 are. Moreover, at the transmission device 510, the smaller the value of Cti 517-3 is (the smaller the capacity is), the greater the signals which can be applied to the connection line 530 are.

At the reception device 520, the greater the value of Cre 524 is (the greater the capacity is), the greater the signals, which can be extracted from the connection line 530 corresponding to the communication medium 430, are. Also, at the reception device 520, the greater the value of Crg 525 is (the greater the capacity is), the greater the signals which can be extracted from the connection line 530 are. Further, at the reception device 520, the smaller the value of Crb 527-1 is (the smaller the capacity is), the greater the signals which can be extracted from the connection line 530 are. Further, at the reception device 520, the smaller the value of Crh 527-2 is (the smaller the capacity is), the greater the signals which can be extracted from the connection line 530 are. Moreover, at the reception device 520, the smaller the value of Cri 527-3 is (the smaller the capacity is), the greater the signals which can be extracted from the connection line 530 are. Also, at the reception device 520, the smaller the value of Rr 523-1 is (the higher the resistance is), the greater the signals which can be extracted from the connection line 530 are.

The lower the values of Rm 531 and Rm 533, which are resistance components of the connection line 530, are (the lower the resistances are), at the transmission device 510, the greater the signals which can be applied to the connection line 530 are. Also, the smaller the value of Cm 532, which is capacitance as to space of the connection line 530 is (the smaller the capacity is), at the transmission device 510, the greater the signals which can be applied to the connection line 530 are.

The size of a capacitor is generally proportionate to the surface area of an electrode, so generally, the grater the size of the electrodes is, the better, but simply increasing the sizes of the electrodes may also increase capacitance between the electrodes. Also, in the event that the size ratio of the electrodes is exaggeratedly great, efficiency may deteriorate. Accordingly, the size and placement, etc., of the electrodes, need to be determined in the overall balance.

Note that the nature of the above-described communication device 500 is such that, at frequency bands where the frequency of the signal source 513-1 is high, this equivalent circuit can be understood in the light of impedance matching, and efficient communication is enabled by determining the parameters. Reactance can be ensured with even small capacitance, so the devices can be easily reduced in size.

Also, generally, the reactance of capacitors increases as the frequency drops. Conversely, the communication system 500 operates based on capacitance coupling, so the lower limit of the frequency of signals generated by the signal source 513-1 is determined thereby. Also, Rm 531, Cm 532, and Rm 533 form a low-pass filter from the positioning thereof, and the properties thereof determine the upper frequency limit.

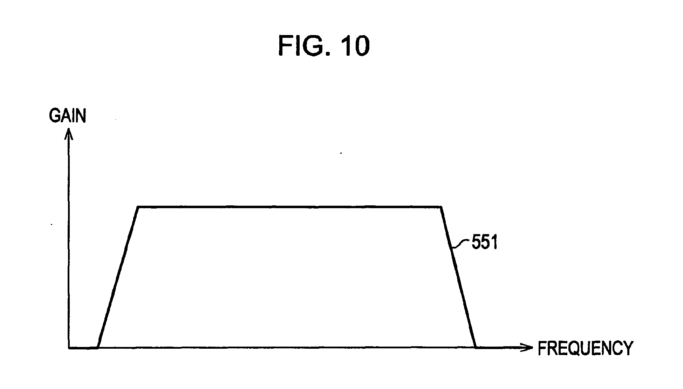

That is to say, the frequency properties of the communication system 500 are as shown by the curve 551 in the graph Fig. 10. In Fig. 10, the horizontal axis represents frequency, and the vertical axis indicates the gain of the overall system.

Next, specific numerical values will be studied for the communication system 400 shown in Fig. 5 and the communication system 500 shown in Fig. 9. Now, for the sake of facilitating description, we will assume that the communication system 400 (communication system 500) is disposed in the air. Also, we will say that the transmission signal electrode 411, transmission reference electrode 412, reception signal electrode 421, and reception signal reference electrode 422, of the communication system 400 (the transmission signal electrode 511, transmission reference electrode 512, reception signal electrode 521, and reception signal reference electrode 522 of the communication system 500) are each discs 5 cm in diameter.

In the communication system 400 in Fig. 5, the capacitance Cte 414 (the Cte 514 in Fig. 9) formed of the transmission signal electrode 411 and the communication medium 430 can be obtained from the following Expression 18, employing the above-described Expression (9), assuming that the gap dte therebetween is 5 mm.

Expression (18)

$$Cte = \frac{(8.854 \times 10^{-12}) \times (2 \times 10^{-3})}{5 \times 10^{-3}}$$

$$\fallingdotseq 3.5 \quad [pF] \quad \cdots (18)$$

With regard to the Ctb 417-1 which is the capacitance between electrodes (Ctb 517-1 in Fig. 9), we shall say that Expression (9) can be applied. Originally, the expression holds in cases wherein the area of electrodes is sufficiently great as compared to the gap, but here, this may be taken as an approximation. With the gap between the electrodes as 5 cm, Ctb 417-1 (Ctb 517-1 shown in Fig. 9) is as shown in Expression (19).

Expression (19)

$$Ctb = \frac{(8.854 \times 10^{-12}) \times (2 \times 10^{-3})}{5 \times 10^{-2}}$$

$$\fallingdotseq 0.35 \quad [pF] \quad \cdots (19)$$

The assumption here is that in the event that the gap between the transmission signal electrode 411 and the communication medium 430 is small, the coupling with space is weak, so the value of the Cth 417-2 (Cth 517-2 shown in Fig. 9) is sufficiently smaller than the value of Cte 414 (Cte 514), and is set to one tenth the value of Cte 414 (Cte 514) as shown in Expression (20).
Expression (20)

$$Cth = \frac{Cte}{10} = 0.35 \quad [pF] \quad \cdots (20)$$

Ctg 415 (Ctg 515 in Fig. 9) indicating the capacitance formed between the transmission reference electrode 412 and space is the same as in the case of Fig. 4 (Expression (12)), and can be obtained as with the following Expression (21).
Expression (21)

$$Ctg = 8 \times 8.854 \times 10^{-12} \times 2.5 \times 10^{-2} \fallingdotseq 1.8 \quad [pF] \quad \cdots (21)$$

The value of Cti 417-3 (Cti 517-3 in Fig. 9) can be considered to be equivalent to Ctb 417-1 (Ctb 517-1 in Fig. 9), as shown next.
Cti = Ctb = 0.35 [pF]
The parameters of the reception device 420 (reception device 520 in Fig. 9) can also be set the same as with the parameters of the transmission device 410 as follows, by setting the configuration of the electrodes (size, placement, etc.) so as to be the same as with the transmission device 410.
Cre = Cte = 3.5 [pF]
Crb = Ctb = 0.35 [pF]
Crh = Cth = 0.35 [pF]
Crg = Ctg = 1.8 [pF]
Cri = Cti = 0.35 [pF]
Also, for the sake of description, we will say that the communication medium 430 (the connection line 530 in Fig. 9 is an object around the size of a human body, and having properties close to those of a human body. We will further say that the electrical resistance at the position of the reception signal electrode 421 from the position of the transmission signal electrode 411 of the communication medium 430 (the position of the reception signal electrode 521 from the position of the transmission signal electrode 511 in Fig. 9) is 1 [MΩ], and that the values of Rm 431 and Rm 433 (Rm 531 and Rm 533 in Fig. 9) are each 500 [KΩ]. Also, we will say that the value of the capacitance Cm 432 (Cm 532 in Fig. 9) formed between the communication medium 430 and space is 100 [pF].

Further, we will say that the signal source 413-1 (the signal source 513-1 in Fig. 9) is sine waves having a maximum value of 1 [V] and that the frequency is 10 [Mhz].

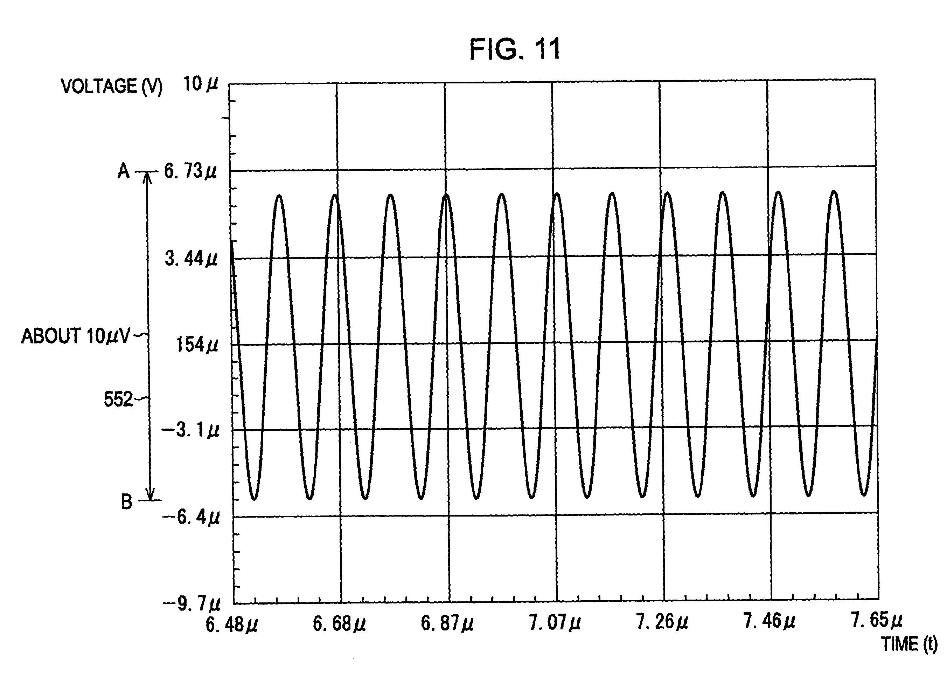

Performing simulation using the above parameters yields simulation results for reception signals having a waveform such as shown in Fig. 11. With the graph shown in Fig. 11, the vertical axis represents the voltage at both ends of the Rr 423-1 (Rr 523-1) which is the reception load of the reception device 420 (reception device 520 in Fig. 9), and the horizontal axis represents time. As indicated by the arrows 552 in Fig. 11, the difference observed between the maximum value A and the minimum value B of the waveform of the reception signals (difference between peak values) is around 10 [$\mu$V]. Accordingly, amplifying this with an amplifier having a sufficient gain (detector 423-2) enables the transmission side signals (the signals generated at the signal source 413-1) to be reproduced at the reception side.

As described above, the communication system to which present invention has been applied does not need a physical reference point path, and communication can be realized with the communication signal conveyance path alone, so a communication environment which is not restricted by the usage environment, can be easily provided.

Next, the placement of the electrodes in the devices will be described. As described above, the electrodes each have different roles, and from capacitance with regard to the communication medium or to space. That is to say, the electrodes each electrostatically couple with different partners, and operate using the electrostatic coupling. Accordingly, way in which the electrodes are placed is an extremely important factor in effective electrostatic coupling of the electrodes with the target objects.

For example, with the communication system 400 shown in Fig. 5, there is the need to pace the electrodes according to the following conditions in order to efficiently communicate between the transmission device 410 and the reception device 420. That is to say, there is the need to satisfy the conditions that, for example, the capacitance between the transmission signal electrode 411 and the communication medium 430, and the capacitance between the reception signal electrode 421 and the communication medium 422 are both sufficiently great, that the capacitance between the transmission reference electrode 412 and space, and the capacitance between the reception reference electrode 422 and space, are both sufficiently great, that the capacitance between the transmission signal electrode 411 and the transmission reference electrode 412 and the capacitance between the reception signal electrode 421 and the reception reference electrode 422 are as small as possible, and that the capacitance between the transmission signal electrode 411 and space and the capacitance between the reception signal electrode 421 and space are as small as possible.

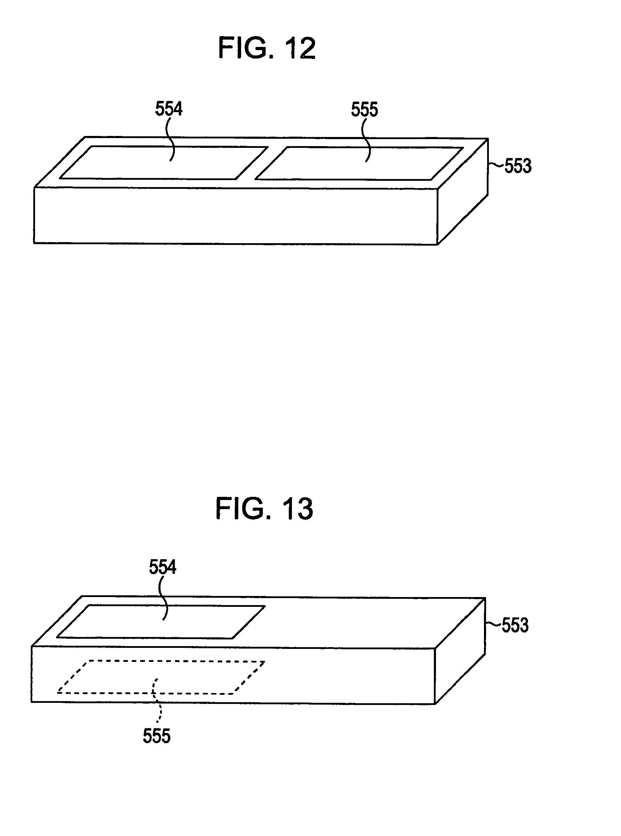

Examples of placement examples of the electrodes are shown in Fig. 12 through Fig. 18. Note that the electrode placement examples described below can be applied to either the transmission device or the reception device. Accordingly, in the following, description regarding the reception device will be omitted, and description will be made regarding the transmission device alone. Also, in the event of applying the examples shown below to the reception device, the transmission signal electrode is made to correspond to the reception signal electrode, and the transmission reference electrode is made to correspond to the reception reference electrode.

In Fig. 12, the two electrodes of the transmission signal electrode 554 and transmission reference electrode 555 are formed on the same flat face of a casing 553. With this configuration, the capacitance between the electrodes can be reduced as compared with a case wherein the two electrodes (transmission signal electrode 554 and transmission reference electrode 555) are disposed facing one another. In the event of using a transmission device with such a configuration, only one of the two electrodes is brought into proximity of the communication medium. For example, let us say that the casing 553 is formed of two units and a hinge portion such that the two units are connected by the hinge portion so as to be capable of assuming a relative angle, and is a clamshell type cellular telephone wherein the casing 553 can be folded around the middle portion in the longitudinal direction on the hinge portion. Appling the electrode placement shown in Fig. 12 to such a foldable clamshell type cellular telephone allows for placement of one of the electrodes on the back side of the unit where the operation buttons are situated, and the other electrode on the back face of the unit where the display unit is situated. Due to such a placement, the electrode situated at the operating button side unit is covered by the user's hand, and the electrode positioned on the back face of the display unit is placed facing space. That is to say, the two electrodes can be placed so as to satisfy the above-described conditions.

Fig. 13 illustrates an arrangement wherein the two electrodes (transmission signal electrode 554 and transmission reference electrode 555) are disposed facing one another across the casing 553. In this case, the electrostatic coupling of the two electrodes is stronger than in the case in Fig. 12, but is suitable for a case wherein the casing 553 is relatively small. The two electrodes in this case should be placed so as to be as far away from each other as much as possible in the casing 553.

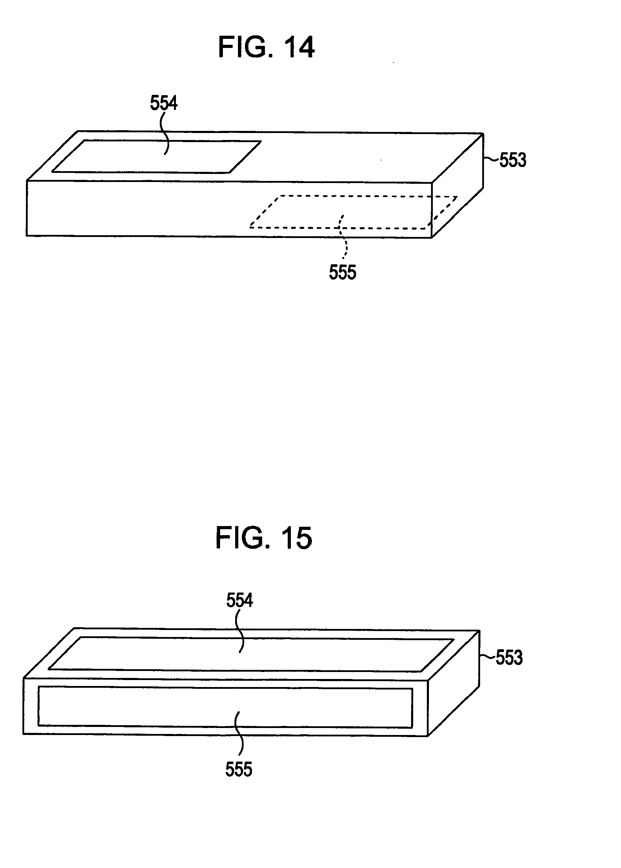

Fig. 14 illustrates an arrangement wherein the two electrodes (transmission signal electrode 554 and transmission reference electrode 555) are disposed on opposing faces of the casing 553 but so as to not directly face one another. The electrostatic coupling in this case is smaller than that of that shown in Fig. 13.

Fig. 15 illustrates an arrangement wherein the two electrodes (transmission signal electrode 554 and transmission reference electrode 555) are disposed perpendicular one to another. According to this configuration, in an application wherein the face of the transmission signal electrode 554 and the opposing face thereof come close to the communication medium, electrostatic coupling with space remains for the side face (the face on which the transmission reference electrode 555 is placed), so communication is enabled.

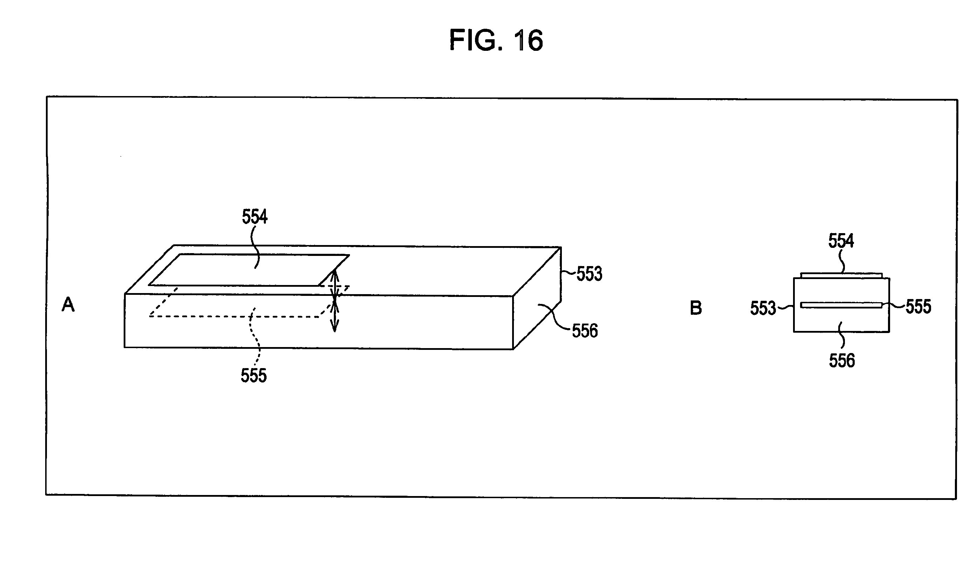

Fig. 16 illustrates an arrangement wherein the placement shown in Fig. 13 is such that the transmission reference electrode 555, which is one of the electrodes, is placed within the casing 553. That is to say, as shown in Fig. 16A, only the transmission reference electrode 555 is provided within the casing 553. Fig. 16B is a diagram illustrating an example of the electrode position as viewed from the face 556 in Fig. 16A. As shown in Fig. 16B, the transmission signal electrode 554 is disposed on the surface of the casing 553, with only the transmission reference electrode 555 positioned within the casing 553. According to this configuration, even in the event that the casing 553 is broadly covered with the communication medium, there is space around the one electrode within the casing 553, so communication is enabled.

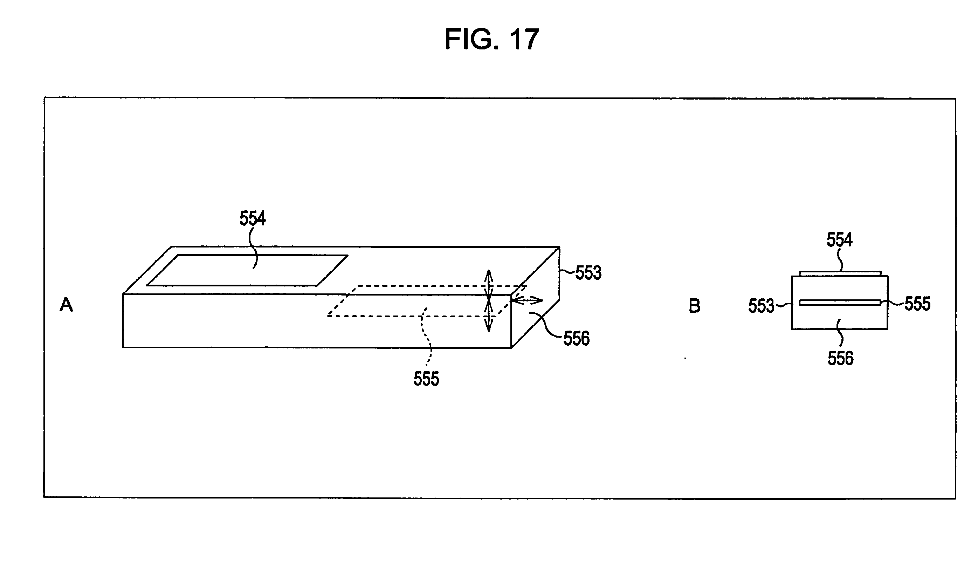

Fig. 17 illustrates an arrangement wherein the placement shown in Fig. 12 or Fig. 14 is such that the transmission reference electrode 555, which is one of the electrodes, is placed within the casing 553. That is to say, as shown in Fig. 17A, only the transmission reference electrode 555 is provided within the casing 553. Fig. 17B is a diagram illustrating an example of the electrode position as viewed from the face 556 in Fig. 17A. As shown in Fig. 17B, the transmission signal electrode 554 is disposed on the surface of the casing 553, with only the transmission reference electrode 555 positioned within the casing 553. According to this configuration, even in the event that the casing 553 is broadly covered with the communication medium, there is space around the one electrode within the casing, so communication is enabled.

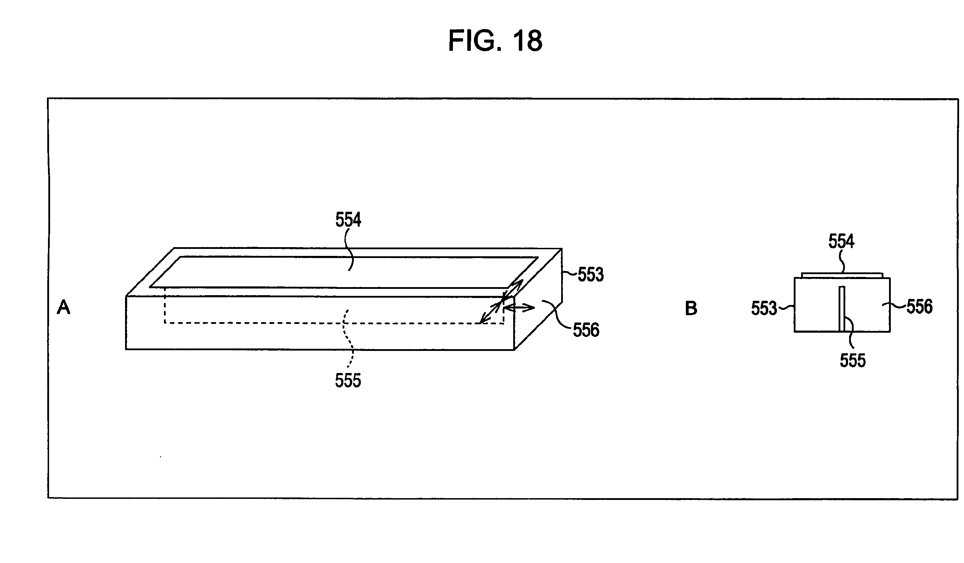

Fig. 18 illustrates an arrangement wherein the placement shown in Fig. 15 is such that the transmission reference electrode 555, which is one of the electrodes, is placed within the casing 553. That is to say, as shown in Fig. 18A, only the transmission reference electrode 555 is provided within the casing 553. Fig. 18B is a diagram illustrating an example of the electrode position as viewed from the face 556 in Fig. 18A. As shown in Fig. 18B, the transmission signal electrode 554 is disposed on the surface of the casing 553, with only the transmission reference electrode 555 positioned within the casing 553. According to this configuration, even in the event that the casing 553 is broadly covered with the communication medium, there is space around the one electrode 555 within the casing, so communication is enabled.

All of the electrode placements described above have been made such that one electrode is closer to the communication medium than the other electrode, and such that the electrostatic coupling with space of the one electrode is strengthened. Also, each placement is preferably made such that the electrostatic coupling between the two electrodes is weakened.

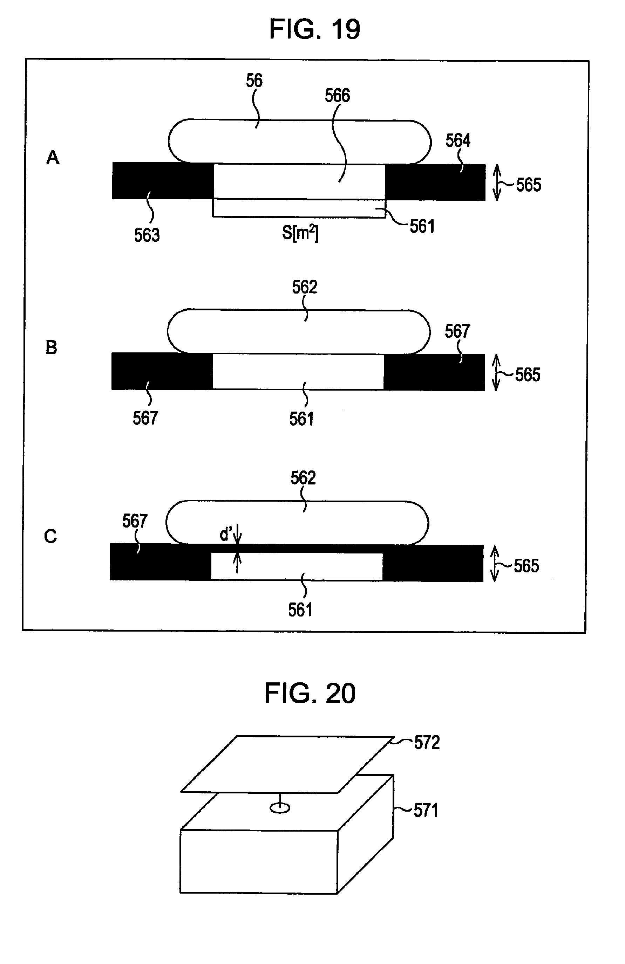

The transmission device or reception device may be assembled into some sort of casing. With the equipment according to the present invention, there are at least two electrodes, and these are in an electrically insulated state, so the casing is formed of an insulator having a certain thickness. Fig. 19 is cross-sectional views of around the transmission signal electrode. The transmission reference electrode, reference signal electrode, and reception reference electrode, are all of similar configuration as the transmission signal electrode, and accordingly the following description can be applied thereto. Accordingly, description thereof will be omitted.

Fig. 19A illustrates a cross-sectional view of around the electrode. The casing 563 and casing 564 will always have a physical thickness (d [m]), indicated by the arrows 565, so there will be a gap between the electrode and communication medium (e.g., transmission electrode 561 and communication medium 562), or between the electrode and space, that is equivalent to this thickness, at the very least. As can be understood from the description so far, the capacitance is generally better to be increased between the electrode and communication medium or between the electrode and space.

Now, let us consider a case wherein the communication medium 562 is in close contact with the casing 563 and the casing 564. The capacitance C between the transmission reference electrode 561 and communication medium 562 in this case can be obtained by Expression (9), so the following Expression (22) holds.

Expression (22)

$$C = (\varepsilon_r \times \varepsilon_0) \times \frac{S}{d} \quad [F] \qquad \cdots (22)$$

Here, $\varepsilon_0$ represents permittivity in a vacuum, which is the fixed value of $8.854 \times 10^{-12}$ [F/m]. $\varepsilon_r$ represents the relative permittivity in this case, and S the surface area of the transmission signal electrode 561. Disposing a dielectric material having a high relative permittivity in the space 566 formed above the transmission signal electrode 561 increases the capacitance, and accordingly performance can be improved.

Capacitance can also be increased regarding the surrounding space. Note that in the case of Fig. 19A, the dielectric material is inserted in the thickens portion of the casing (indicated by arrows 565), but this is not indispensable, and may be at an arbitrary position.

Conversely, Fig. 19B illustrates an example of a case wherein the electrode is embedded within the casing. In Fig. 19B, the transmission signal electrode 561 is positioned so as to be embedded within the casing 567 (so as to be a part of the casing 567). This way, at the same time the communication medium 562 comes into contact with the casing 567, the communication medium 562 also comes into contact with the transmission signal electrode 561. Also, an insulation layer may be formed on the surface of the transmission signal electrode 561, so as to realize a noncontact state between the communication medium 562 and the transmission signal electrode 561.

Fig. 19C illustrates a state wherein, as compared with that in Fig. 19B, the casing 567 is formed in a recessed shape such that there is a thickness d' to the surface of the electrode, and the transmission signal electrode 561 is embedded therein. In the event that the casing is integrally formed, this technique can suppress manufacturing costs and parts costs, and easily increase capacitance.

According to the above description, in a case wherein multiple electrodes are placed on a single plane such as shown in Fig. 12, communication can be performed by generating potential difference between the electrodes since the coupling of the transmission signal electrode 554 as to the communication medium is stronger even incases wherein both the transmission signal electrode 554 and the transmission reference electrode 555 couple with the communication medium, by inserting a dielectric matter to the transmission signal electrode 554 side (or by inserting a dielectric matter having higher permittivity than the transmission signal reference electrode 555 side to the transmission signal electrode 554 side).

Next, description will be made regarding the size of the electrodes. While there is the need for at least the transmission reference electrode and reception reference electrode to form sufficient capacitance with space in order to obtain sufficient potential for the communication medium, the transmission signal electrode and reception signal electrode can be formed to a suitable size, taking into consideration the electrostatic coupling thereof with the communication medium, and the nature of signals to be sent over the communication medium. Accordingly, normally, the larger the transmission reference electrode is made to be than the transmission signal electrode, the larger the reception reference electrode is made to be than the reception signal electrode. However, relations other than this may be employed so long as signals sufficient for communication can be obtained.

Particularly, in the event of matching the size of the transmission reference electrode with the size of the transmission signal electrode, and the size of the reception reference electrode with the size of the reception signal electrode, these electrodes can be viewed as having mutually equivalent properties from a reference point at a point of infinity. Accordingly, a feature thereof is that equivalent communication performance can be obtained regardless of which electrode is used as the reference electrode (signal electrode) (an arrangement wherein the reference electrode and signal electrode are interchangeable).

In other words, in the event of a design wherein the size of the reference electrode and signal electrode are different from each other, there is the feature that communication can be enable only in the event that one electrode (the electrode set to be the signal electrode) is brought into proximity of the communication medium.

Next, shielding of the circuit will be described. While in the above, the transmission unit and reception unit and the like, other than the electrodes, have been considered to be transparent existences, as far as the physical configuration of the communication system goes, in reality, these are generally configured of electronic parts, in order to realize this communication system. Electronic parts are configured of substances having some sort of electric nature, such as conductivity, permittivity, or the like, and since these are present in the vicinity of the electrodes, there will be some sort of effect thereupon. With the present invention, spatial capacitance and the like brings various effects, so the electronic circuits mounted on the boards are also subject to such effects. Accordingly, in the event that more stable operations are desired, the entirety is preferably shielded with a conductor.

While a shielded conductor can normally be though to be connected to the transmission reference electrode or reception reference electrode which forms the reference potential of a transmission/reception device, this may be connected to the transmission signal electrode or reception signal electrode, as long as there are no problems in operation. The conductor itself of this shield has a physical size, so along the line of the principle described so far, there is the need to take into consideration the fact that operations are made under the mutual relation with the other electrodes, communication medium, and space.

Fig. 20 illustrates an exemplary embodiment thereof. This example assumes that the equipment runs on batteries, with electronic parts including a battery being stored within a shield case 571, also serving as a reference electrode. An electrode 572 is a signal electrode.

Next, description will be made regarding the communication medium. While the examples so far has been made primarily regarding examples of conductors, communication may be made with dielectric matter having no conductivity as well. This is since an electric field injected from the transmission signal electrode to the communication medium is propagated by the polarization effect of the dielectric matter.

Specifically, while metals such as electric lines or the like can be conceived as conductors, and pure water or the like as dielectric matter, communication can also be made with organisms, normal saline solution, and so forth, having both natures. Also, vacuums and the atmosphere have permittivity, and accordingly allow communication as a communication medium.

Next, noise will be described. In the air, the potential fluctuates due to various factors, such as noise from AC power sources, fluorescent lamps, various home appliances and electrical equipment, charged particles in the air, and so forth. While such potential fluctuation has been ignored so far, these noises are imposed on the various components of the transmission device, communication medium, and reception device.

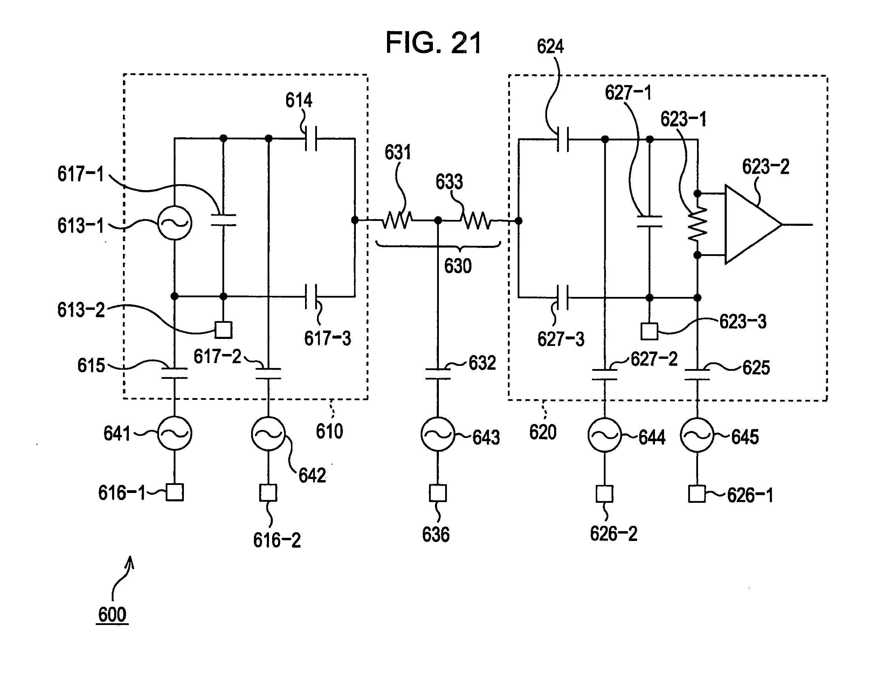

Fig. 21 is a schematic diagram illustrating the communication system 100 shown in Fig. 100 as an equivalent circuit including noise components. That is to say, with the communication system 600 shown in Fig. 21 which corresponds to the communication system shown in Fig. 9, the transmission device 610 of the communication system 600 corresponds to the transmission device 510 of the communication system 500, the reception device 620 corresponds to the reception device 520, and the connection line 630 corresponds to the connection line 630.

In the transmission device 610, the signal source 613-1, in-transmission-device reference point 613-2, Cte 614, Ctg 615, reference point 616-1, reference point 616-2, Ctb 617-1, Cth 617-2, and Cti 617-3, correspond to the signal source 513-1, in-transmission-device reference point 513-2, Cte 514, Ctg 515, reference point 516-1, reference point 516-2, Ctb 517-1, Cth 517-2, and Cti 517-3, of the transmission device 510, respectively. What is different from Fig. 9 is that the transmission device 610 has two signal sources of noise 641 and noise 642 provided between the Ctg 615 and reference point 616-1, and between the Cth 617-2 and reference point 616-2, respectively.

In the reception device 620, the Rr 623-1, detector 623-2, in-reception-device reference point 623-3, Cre 624, reference point 626-1, reference point 626-2, Crb 627-1, Crh 627-2, and Cri 627-3, correspond to the Rr 523-1, detector 523-2, in-reception-device reference point 523-3, Cre 524, Ctg 525, reference point 526-1, reference point 526-2, Crb 527-1, Crh 527-2, and Cri 527-3, of the reception device 520, respectively. What is different from Fig. 9 is that the reception device 620 has two signal sources of noise 644 and noise 645 provided between the Crh 627-2 and reference point 626-2, and between the Crg 625 and reference point 626-1, respectively.

In the connection line 630, Rm 631, Cm 632, Rm 633, and reference point 636, correspond to the Rm 531, Cm 532, Rm 533, and reference point 536, of the connection line 530, respectively. What is different from Fig. 9 is that the connection line 630 has a noise 643 signal source provided between Cm 532 and the reference point 536.

Each of the devices operate based on the in-transmission-device reference point 613-2, which is the ground electrode of each, and the in-reception-device reference point 623-2 thereof, so as long as the noise imposed thereupon is of the same relative component between the transmission device, communication medium, and reception device, there is no effect on operations. On the other hand, in cases wherein there is distance between the devices, or under environments with much noise, there is a higher possibility that there will be relative difference in noise between the devices. That means that the behavior of noise 641 through noise 645 will differ. Even this difference is not problematic as long as there is no temporal fluctuation, since the relative difference of signal levels to be used can be transmitted, but in the event that the fluctuation frequency of the noise overlaps the frequency band being used, there is need to determine the frequency and signal level to be used taking into consideration the noise properties. In other words, the communication system 600 is resistant to noise components, does not need a physical reference point path, and can realize communication only with the communication signal conveyance path, simply by setting the frequency and signal level to be used while taking into consideration noise properties, so a communication environment which is not restricted by the usage environment can be easily provided.

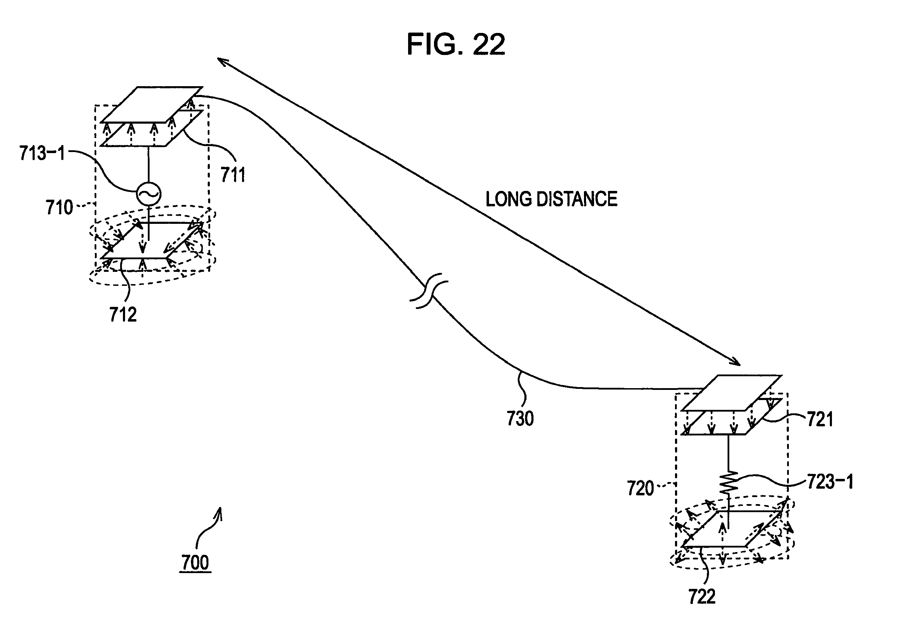

Next, the influence of the magnitude of distance between the transmission device and reception device on communication will be described. As described above, according to the principle of the present invention, as long as sufficient capacitance can be formed in the space between the transmission reference electrode and reception reference electrode, there is no need for a path through the earth around between the transmission and reception devices, or other electrical paths, and the system not dependent on the distance between the transmission signal electrode and the reception signal electrode. Accordingly, for example, as with the communication system 700 shown in Fig. 22, the transmission device 710 and reception device 720 can be placed at a long distance, and communication is enabled by electrostatically coupling the transmission signal electrode 711 and reception signal electrode 721 with the communication medium 730 having sufficient conductivity or permittivity. At this time, the transmission reference electrode 712 effects electrostatic coupling with the space outside the transmission device 710, and the reception reference electrode 722 effects electrostatic coupling with the space outside the reception device 720. Accordingly, there is no need for electrostatic coupling between the transmission reference electrode 712 and the reception reference electrode 722. However, as the communication medium 730 becomes longer and greater, capacitance as to the space also increases, which needs to be taken into consideration at the time of determining the parameters.

Note that the communication system 700 shown in Fig. 22 is a system corresponding to the communication system 100 shown in Fig. 1, wherein the transmission device 710 corresponds to the transmission device 110, the reception device 720 corresponds to the reception device 120, and the communication medium 730 corresponds to the communication medium 130.

In the transmission device 710, the transmission signal electrode 711, transmission reference electrode 712, and signal source 713-1, correspond to the transmission signal electrode 111, transmission reference electrode 112, and signal source 113 (or a part thereof), respectively. In the same way, in the reception device 720, the reception signal electrode 721, reception reference electrode 722, and signal source 723-1, correspond to the reception signal electrode 121, reception reference electrode 122, and signal source 123 (or a part thereof), respectively.

Accordingly, description of these components will be omitted.

As described above, the communication system 700 does not need a physical reference point path, and can realize communication only with the communication signal conveyance path, so a communication environment which is not restricted by the usage environment can be easily provided.

While description has been made above that the transmission signal electrode and reception signal electrode are not in contact with the communication medium, arrangements may be made not restricted to this, and the transmission signal electrode and reception signal electrode may be connected with a communication medium having conductivity, as long as sufficient capacitance can be obtained between the transmission reference electrode and reception reference electrode with the space around the respective devices.

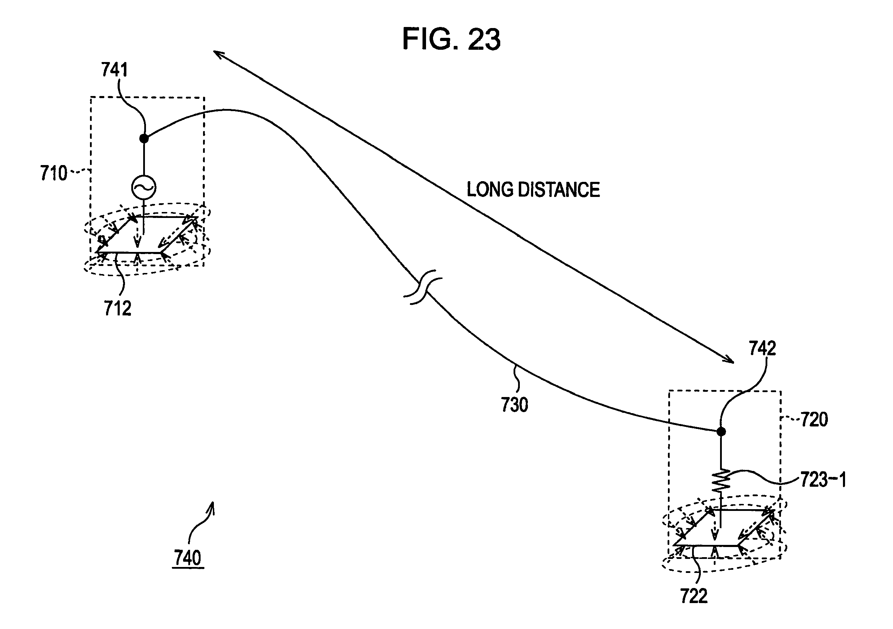

Fig. 23 is a schematic diagram for describing an example of a communication system wherein the transmission reference electrode and reception reference electrode are connected via the communication medium.

In Fig. 23, the communication system 740 is a system corresponding to the communication system 700 shown in Fig. 22. Note that with the communication system 740 however, the transmission device 710 does not have a transmission signal electrode 711, and the transmission device 710 and the communication medium 730 are connected by a contact point 741. In the same way, the reception device 720 in the communication system 740 does not have a reception signal electrode 721, and the reception device 710 and the communication medium 730 are connected by a contact point 742.

While a normal cable communication system is configured having at least two signal lines, with communication being performed using the relative difference in the signal levels, the present invention allows communication to be performed with a single signal line.

That is to say, the communication system 740 also does not need a physical reference point path, and can realize communication only with the communication signal conveyance path, so a communication environment which is not restricted by the usage environment can be easily provided.

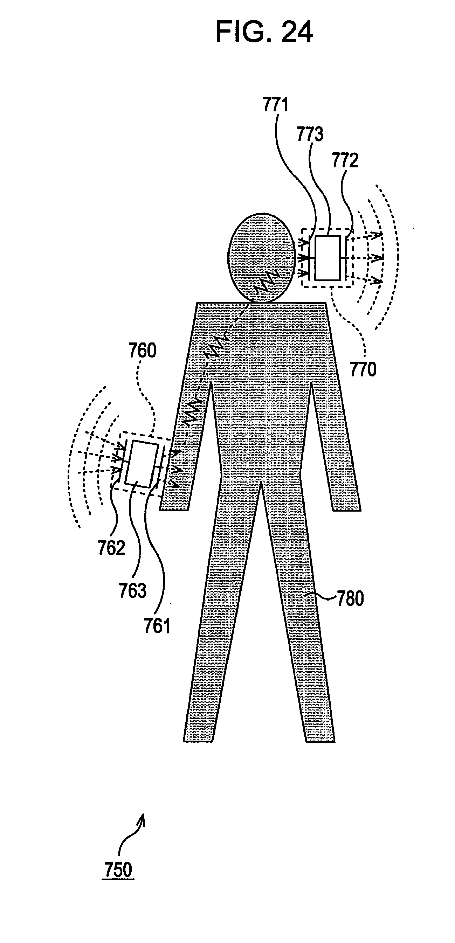

Next, a specific application example of the above communication system will be described. For example, the communication system such as described above can use an organism as the communication medium. Fig. 24 is a schematic diagram illustrating an example of a communication system in a case of performing communication via a human body. In Fig. 24, the communication system 750 is a system wherein music data is transmitted from a transmission device 760 attached to an arm of a human body, and the music data is received by a reception device 770 attached to the head of the human body and converted into audio, so as to be output for the user to listen to. This communication system 750 is a system corresponding to the above-described communication systems (e.g., communication system 100), and the transmission device 760 and reception device 770 correspond to the transmission device 110 and reception device 120, respectively. Also, in the communication system 750, the human body 780 is the communication medium, corresponding to the communication medium 130 in Fig. 1.

That is to say, the transmission device 760 has a transmission signal electrode 761, transmission reference electrode 762, and transmission unit 763, each corresponding to the transmission signal electrode 111, transmission reference electrode 112, and transmission unit 113, shown in Fig. 1. Also, the transmission device 770 has a reception signal electrode 771, reception reference electrode 772, and reception unit 773, each corresponding to the reception signal electrode 121, reception reference electrode 122, and reception unit 123, shown in Fig. 1.

Accordingly, the transmission device 760 and reception device 770 are disposed such that the transmission signal electrode 761 and the reception signal electrode 771 are in contact with or close to the human body 780 which is the communication medium. That transmission reference electrode 762 and the reception reference electrode 772 only have to be in contact with space, so coupling with earth nearby and coupling between the transmission and reception devices (or electrodes) is unnecessary.

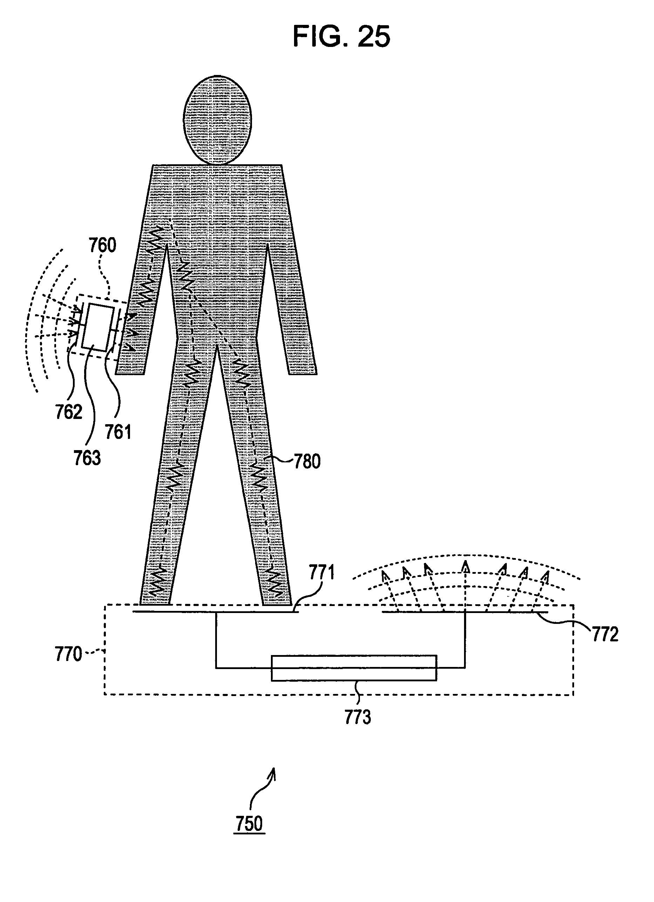

Fig. 25 is a diagram for describing another example for realizing the communication system 750. In Fig. 25, the reception device 770 is in contact with (or close to) the bottom of the feet of the human body 780, and communication is performed with the transmission device 760 attached to an arm of the human body 780. In this case as well, the transmission signal electrode 761 and the reception signal electrode 771 are disposed so as to be in contact with (or close to) the human body 780 which is the communication medium, and the transmission reference electrode 762 and the reception reference electrode 772 are provided facing space. This is in particular an application example which would be impossible to realize with techniques used heretofore which use the earth as a communication path.

That is to say, the communication system 750 as described above does not need a physical reference point path, and can realize communication only with the communication signal conveyance path, so a communication environment which is not restricted by the usage environment can be easily provided.

With such a communication system, there is no particular restriction on the modulation method for signals to be sent over the communication medium as long as both the transmission device and the reception device can handle it, so an optimal method can be selected based on the overall system properties of the communication system. Specific examples of modulation methods include analog signals subjected to base band, amplitude modulation, or frequency modulation, or digital signals subjected to base band, amplitude modulation, frequency modulation, or phase modulation, and any one of these, or a combination of a plurality thereof, may be used.

Further, an arrangement may be made with such a communication system wherein one communication medium is used to establish multiple communications, with full-duplex communication or communication between multiple communication devices of a single communication medium, or the like, being realized.

Examples of methods for realizing such multiplex communication will be described. A first is to apply spread spectrum technology. In this case, frequency bandwidth and a predetermined time-sequence code are determined between the transmission device and the reception device. The transmission device changes the original signal within this frequency bandwidth with regard to frequency according to the time-sequence code, and spreads the signals over the entire frequency band before transmitting. The reception device receives the spread components, and then integrates the received signals so as to decode the received signals.

The advantages of frequency spreading will be described. According to the Shannon-Hartley channel capacity theorem, the following Expression holds.

Expression (23)

$$C = B \times \log_2\left(1 + \frac{S}{N}\right) \quad [bps] \quad \cdots (23)$$

Here, C [bps] represents channel capacity, representing the theoretically greatest data rate which can be sent over the communication path. B [Hz] represents the channel bandwidth, and S/N represents the signal/noise electric power ratio (SN ratio). A Maclaurin expansion of the above Expression for a low S/N ration allows the above Expression (23) to be approximated as in the following Expression (24).

Expression (24)

$$C \fallingdotseq \frac{S}{N} \times B \quad [bps] \quad \cdots (24)$$

Accordingly, it we say that the S/N ratio is at a level of the noise floor or lower, S/N << 1 holds, but the channel capacity C can be raised to a desired level by widening the channel bandwidth B.

Setting a different time-sequence code for each communication path, and differentiating the behavior of frequency spreading, allows frequency spreading without mutual interference, and crosstalk is eliminated, so multiple communications can be held simultaneously.

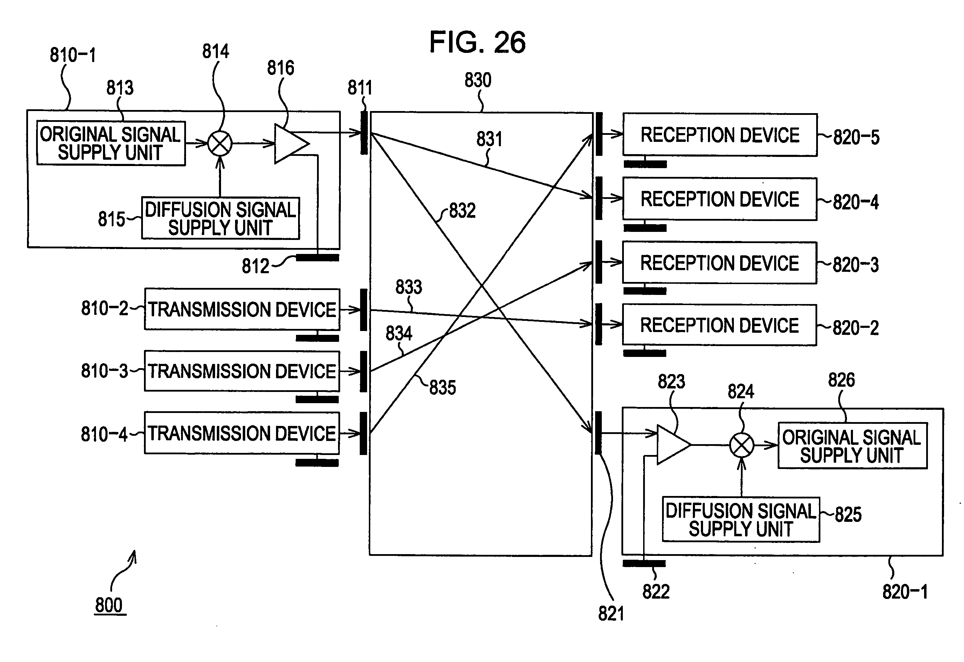

Fig. 26 is a diagram illustrating another configuration example of a communication system to which the present invention is applied. With the communication system shown in Fig. 26, four transmission devices 810-1 through 810-4 and five reception devices 820-1 through 820-5 perform multiple communication over the communication medium 830.

The transmission device 810-1 corresponds to the transmission device 110 in Fig. 1, having a transmission signal electrode 811 and transmission reference electrode 812, and further has an original signal supply unit 813, multiplier 814, spread signal supply unit 815, and amplifier 816, as a configuration corresponding to the transmission unit 113.

The original signal supply unit 813 supplies original signals, which are signals prior to frequency spreading, to the multiplier 814, the spread signal supply unit 815 supplies spread signals for spreading the frequency to the multiplier 814. Note that there are two representative types of spreading with spread signals, which are direct sequence (hereafter referred to as "DS"), and frequency hopping (hereafter referred to as "FH"). The DS method is a method wherein the aforementioned time-sequence code with a frequency component higher than that of the original signal at least, is multiplied at the multiplier 814, and the multiplication results are carried by a predetermined carrier wave, amplified at the amplifier 815, and then output.

Also, the FH method changes the frequency of the carrier wave with the above time-sequence code so as to be used as spread signals, which are multiplied with the original signal supplied from the original signal supply unit 813 at the multiplier 814, amplified at the amplifier 815, and then output. One output of the multiplier 815 is connected to the transmission signal electrode 811, and the other is connected to the transmission reference electrode 812.

The transmission device 810-2 through transmission device 810-4 are of the same configuration, and the description of the above transmission device 810-1 is applicable thereto, so description thereof will be omitted.

The reception device 820-1 corresponds to the reception device 120 in Fig. 1, having a reception signal electrode 821 and reception reference electrode 822, and further has an amplifier 823, multiplier 824, spread signal supply unit 825, and an original signal supply unit 826, as a configuration corresponding to the transmission unit 123.

The reception device 820-1 first restores electric signals based on the method of the invention, and then restores the original signals (signals supplied from the original signal supply unit 813) by signal processing reverse to that of the transmission device 810-1.

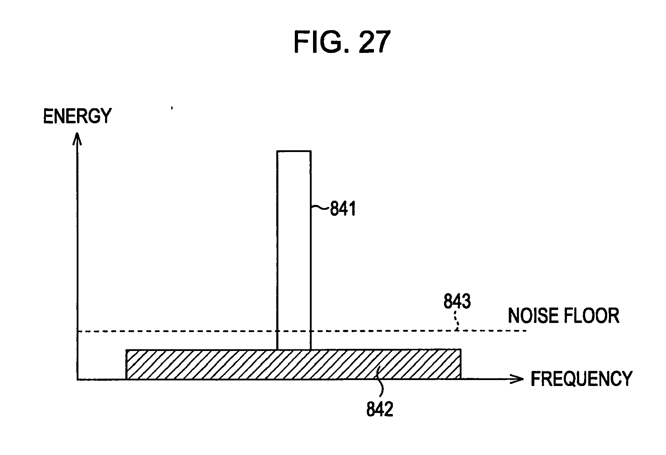

Fig. 27 shows a frequency spectrum according to this method. The horizontal axis represents frequency, and the vertical axis represents energy. The spectrum 841 is a spectrum of a type wherein the frequency is fixed, and energy is concentrated on a particular frequency. With this method, signals cannot be restored if the energy thereof drops below the noise floor 843. On the other hand, the spectrum 842 represents a spectrum spread type spectrum, with energy spread over a wide frequency band. The entire rectangular area in the diagram can be thought of as representing the overall energy, so the signals of the spectrum 842 can be restored to the original signals by integrating the energy over the entire frequency band and communication can be performed, despite the fact that the frequency components are all under the noise floor 843.

Performing communication with spectrum spreading as described above allows the communication system 800 to perform simultaneous communication using the same communication medium 830, as shown in Fig. 26. As can be seen in Fig. 26, path 831 through path 835 represent communication paths on the communication medium 830. Also, using spectrum spread means that the communication system 800 can perform many-to-one communication as indicated by path 831 and path 832, and many-to-many communication.

A second is to determined frequency bandwidths between a transmission device and reception device, and further divide this into multiple regions, thereby applying frequency division means. In this case, the transmission device (or reception device) either follows certain rules for frequency allocation, or detects frequency bands that are available when starting communication and allocates frequency bands based on the detection results.

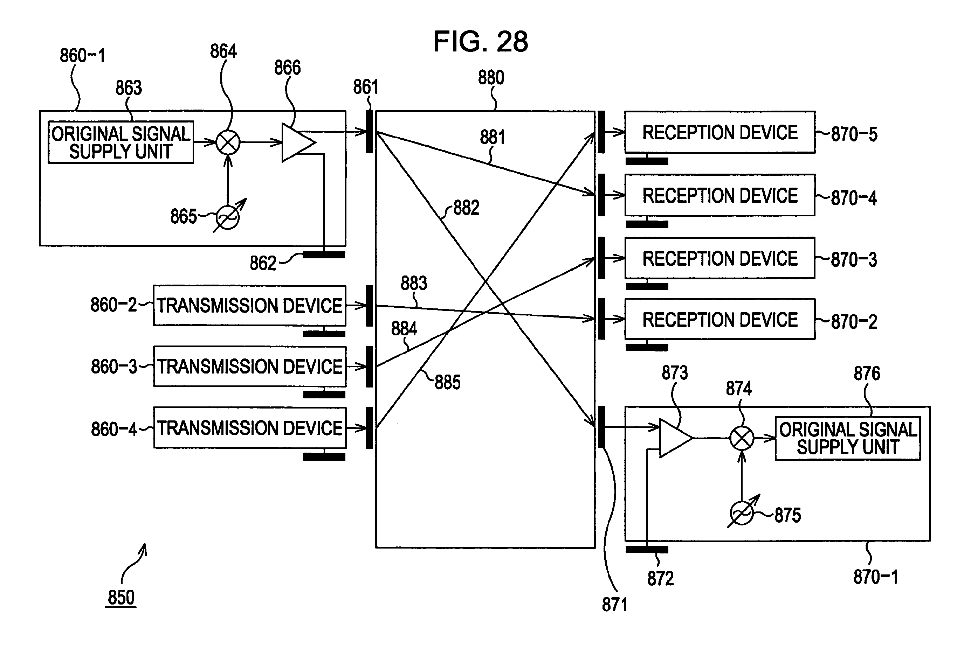

Fig. 28 is a diagram illustrating another configuration example of a communication system to which the present invention is applied. With the communication system 850 shown in Fig. 28, four transmission devices 860-1 through 860-4 and five reception devices 870-1 through 870-5 perform multiplex communication over the communication medium 880 using frequency division means.

The transmission device 860-1 corresponds to the transmission device 110 in Fig. 1, having a transmission signal electrode 861 and transmission reference electrode 862, and further has an original signal supply unit 863, a multiplier 864, a frequency-variable oscillator 865, and an amplifier 866, as a configuration corresponding to the transmission unit 113.

Oscillation signals generated by the frequency-variable oscillator 865 having predetermined frequency component are multiplied with the original signals supplied from the original signal supply unit 863 at the multiplier 864, amplified at the amplifier 866, and then output (filtered as suitable). One output of the multiplier 866 is connected to the reception signal electrode 861, and the other is connected to the reception reference electrode 862.

The reception device 860-2 through reception device 860-4 are of the same configuration, and the description of the above reception device 860-1 is applicable thereto, so description thereof will be omitted.

The reception device 870-1 corresponds to the reception device 120 in Fig. 1, having a reception signal electrode 871 and reception reference electrode 872, and further has an amplifier 873, multiplier 874, frequency variable oscillator 875, and an original signal supply unit 876, as a configuration corresponding to the transmission unit 123.

The reception device 870-1 first restores electric signals based on the method of the invention, and then restores the original signals (signals supplied from the original signal supply unit 863) by processing reverse to that of the transmission device 860-1.

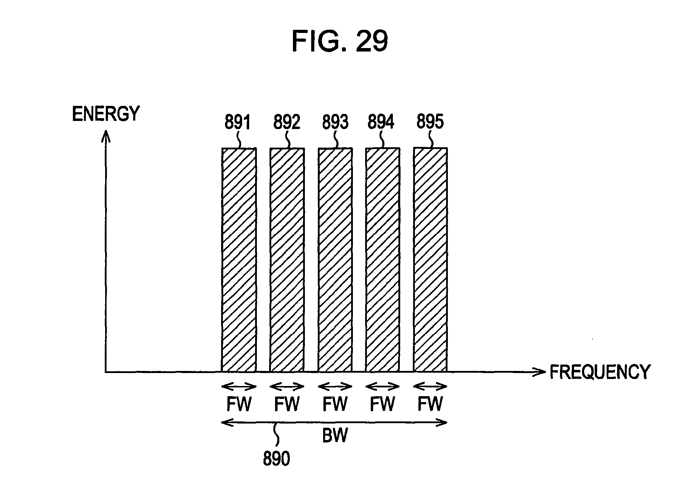

Fig. 29 shows a frequency spectrum according to this method. The horizontal axis represents frequency, and the vertical axis represents energy. Note that in order to facilitate description, an example is shown wherein the entire frequency bandwidth 890 (BW) has been divided into five bandwidths 891 through 895 (FW). The frequency bands thus divided are used for communication on differing communication paths. That is to say, the transmission device 860 (reception device 870) of the communication system 850 uses frequency bands differing for each communication path, so that crosstalk is suppressed and multiple communications can be simultaneously performed over a single communication medium 880, as shown in Fig. 28. In Fig. 28, path 881 through path 885 represent communication paths on the communication medium 880. Also, using frequency division means that the communication system 850 can perform many-to-one communication as indicated by path 881 and path 882, and many-to-many communication.

Now, description has been made with the communication system 850 (transmission device 860 or reception device 870) being divided into five bandwidths 891 through 895, but the number of divisions is not restricted at all, and each of the bandwidths may be of differing sizes.

A third is a method applying time division, wherein communication time between the transmission device and reception device is divided into multiple times. In this case, the transmission device (or reception device) either follows certain rules for time division, or detects time regions that are available when starting communication and performs communication time division based on the detection results.

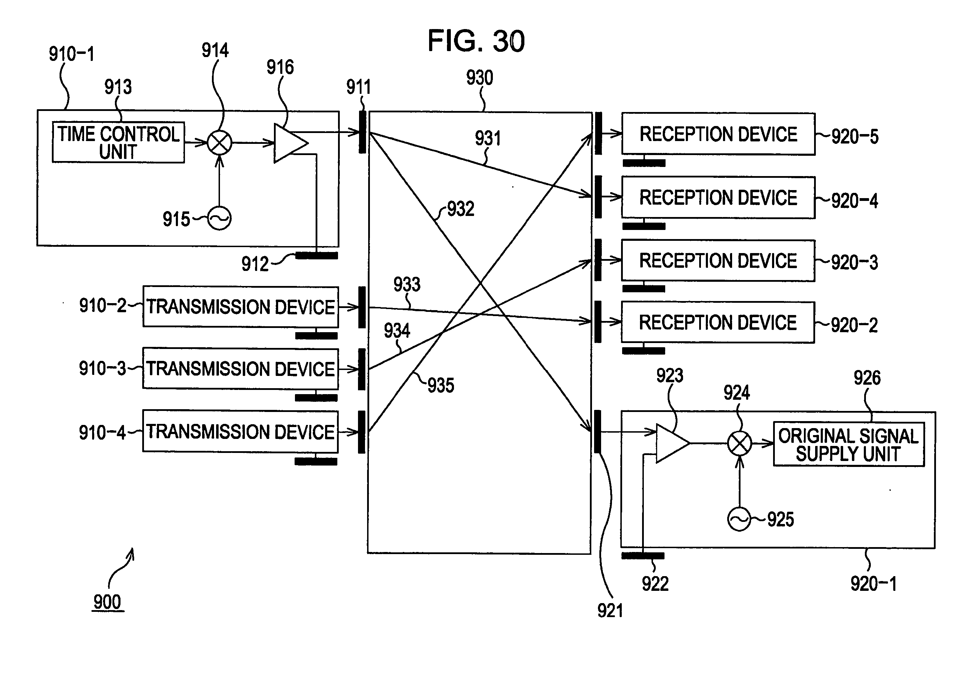

Fig. 30 is a diagram illustrating another configuration example of a communication system to which the present invention is applied. With the communication system 900 shown in Fig. 30, four transmission devices 910-1 through 910-4 and five reception devices 920-1 through 920-5 perform multiplex communication over the communication medium 930 using time division.

The transmission device 910-1 corresponds to the transmission device 110 in Fig. 1, having a transmission signal electrode 911 and transmission reference electrode 912, and further has a time control unit 913, a multiplier 914, an oscillator 915, and an amplifier 916, as a configuration corresponding to the transmission unit 113.

The time control unit 913 outputs original signals at a predetermined time. The multiplier 914 multiplies the original signals with the oscillation signals generated by the oscillator 915, which are then output from the amplifier 916 (filtered as suitable). One output of the multiplier 916 is connected to the reception signal electrode 911, and the other is connected to the reception reference electrode 912.

The reception device 910-2 through reception device 910-4 are of the same configuration, and the description of the above reception device 910-1 is applicable thereto, so description thereof will be omitted.

The reception device 920-1 corresponds to the reception device 120 in Fig. 1, having a reception signal electrode 921 and reception reference electrode 922, and further has an amplifier 923, multiplier 924, oscillator 925, and an original signal supply unit 926, as a configuration corresponding to the transmission unit 123.

The reception device 920-1 first restores electric signals based on the method of the invention, and then restores the original signals (signals supplied from the original signal supply unit 913) by signal processing reverse to that of the transmission device 920-1.

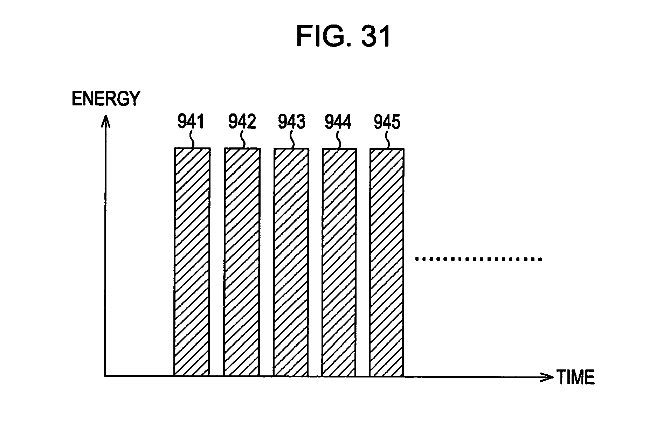

Fig. 31 shows a spectrum on a time axis according to this method. The horizontal axis represents time, and the vertical axis represents energy. Note that in order to facilitate description, an example is shown wherein the entirety has been divided into five time regions 941 through 945, but in reality, subsequent time regions continue in the same way. The time regions thus divided are used for communication on differing communication paths. That is to say, the transmission device 910 (reception device 920) of the communication system 900 uses time regions differing for each communication path, so that crosstalk is suppressed and multiple communications can be performed over a single communication medium 930, as shown in Fig. 30. In Fig. 30, path 931 through path 935 represent communication paths on the communication medium 930. Also, using time division means that the communication system 900 can perform many-to-one communication as indicated by path 931 and path 932, and many-to-many communication.

Now, the time widths of the time regions which the communication system 900 (transmission device 910 or reception device 920) performs division of may be different from each other.

Further, as a method other than the above-described, two or more of the first through third communication methods may be combined.

The fact that the transmission device and reception device can perform simultaneous communication with multiple other devices is particularly important with particular applications. For example, assuming application to tickets for mass transit systems, various handy applications can be made, such as at the time of a user having both a device A holding information of a pass and a device B having an electronic money function pasting through an automatic wicket, communication can be simultaneously made with both device A and device B by using a method such as described above, so in the event that the route which the user has used includes a section other than that covered by the pass of the user, the difference in fee can be deducted from the electronic money in the device B.

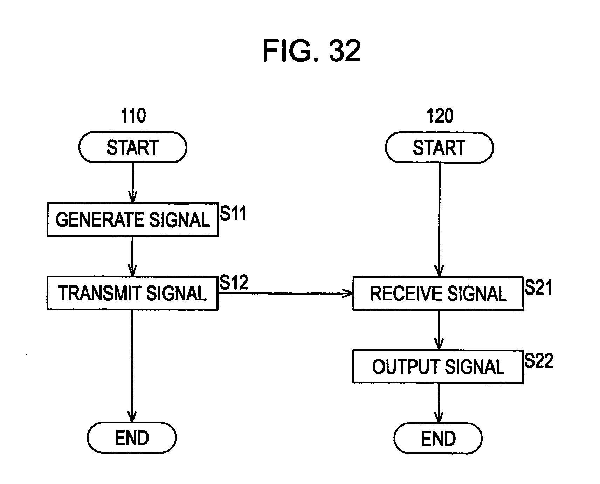

The flow of communication processing executed in the communication between the transmission device and reception device such as described above will be described with reference to the flowchart shown in Fig. 32, by way of an example of the transmission device 110 and reception device 120 of the communication system 100 shown in Fig. 1.

In step S1, the transmission device 113 of the transmission device 110 generates a signal to be transmitted, and in step S2, the generated signal is transmitted onto the communication medium 130 via the transmission signal electrode 111. The transmission unit 113 of the transmission device transmitting the signal ends communication processing. The signal transmitted form the transmission device 110 is supplied to the reception device 120 via the communication medium 130. The reception unit 123 of the reception device 120 receives the signal via the reception signal electrode 121 in step S21, and in step s22 outputs the received signal. The reception unit 123 which has output the received signal ends the communication processing.

As described above, the transmission device 110 and the reception device 120 do not need to have a closed circuit configured using reference electrodes, and stable communication processing can be easily performed without being affected by the environment, simply by exchanging signals via the signal electrodes. Note that the structure of communication processing is simple, so the communication system 100 can be easily used along with a wide variety of communication methods, such as modulation, encoding, encryption, multiplexing, and so forth.

Now, while description has been made in the above communication system that the transmission device and the reception device are configured as separate entities, other arrangements may be made, and the communication system may be configured using a transmission/reception device having both functions of the transmission device and the reception device.

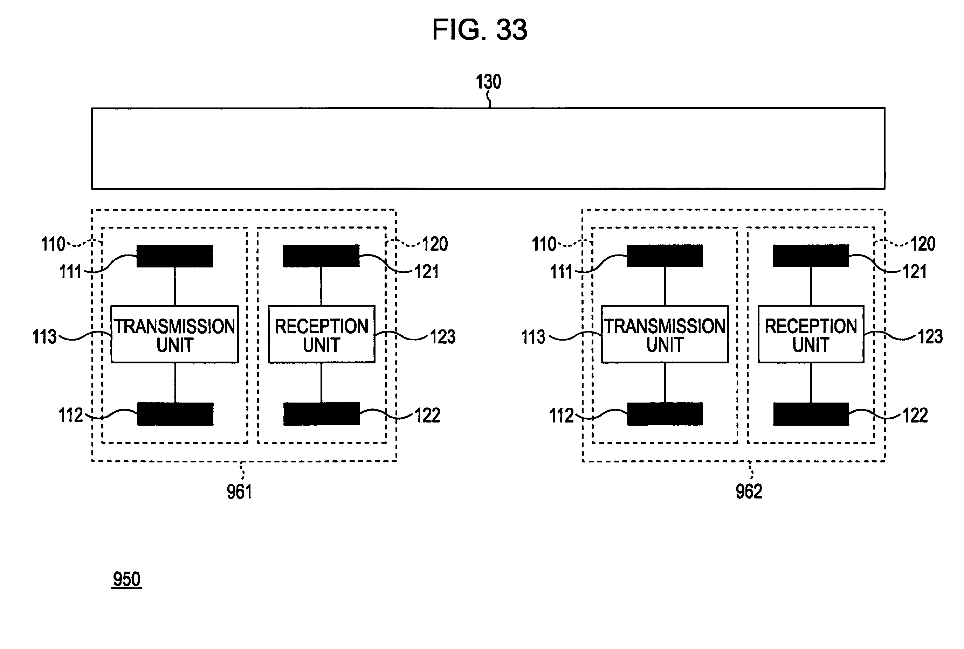

Fig. 33 is a diagram illustrating another configuration example of the communication system to which the present invention is applied.

In Fig. 33, the communication system 950 has a transmission/reception device 961, a transmission/reception device 962, and a communication medium 130. The communication system 950 is a system wherein the transmission/reception device 961 and the transmission/reception device 962 bi-directionally exchange signals via the communication medium 130.

The transmission/reception device 961 has the configuration of both a transmission unit 110 the same as the transmission device 110 in Fig. 1, and a reception unit the same as the reception device 120. That is to say, the transmission/reception device 961 has a transmission electrode 111, transmission reference electrode 112, transmission unit 113, reception electrode 121, reception reference electrode 122, and reception unit 123.

That is to say, the transmission/reception device 961 transmits signals over the communication medium 130 using the transmission unit 110, and receives signals supplied thereto via the communication medium 130 using the reception unit 120. As described above, multiplex communication can be made with the communication method of the present invention, so an arrangement may be made wherein communication by the transmission unit 110 and communication with the reception unit 120 occur simultaneously (temporally overlapping).

The transmission/reception device 962 has the same configuration as the transmission/reception device 961, and operates in the same way, so description thereof will be omitted. That is to say, the transmission/reception device 961 and the transmission/reception device 962 communicate bi-directionally over the communication medium 130 with the same method as each other.

Thus, the communication system 950 (transmission/reception device 961 and transmission/reception device 962) can easily realize bidirectional communication not restricted by the usage environment.

Note that the transmission/reception device 961 and the transmission/reception device 962 may also be electrically connected to the communication medium by transmission signal electrodes and reception signals electrodes, as with the transmission device and reception device described with reference to Fig. 23 (provided as a contact point 741 or contact point 742). Also, through description has been made regarding a configuration wherein the transmission signal electrode 111, transmission reference electrode 112, reception signal electrode 121, and reception reference electrode 122, are configured as mutually separate entities, but arrangements may be made not restricted to this, and for example, the transmission signal electrode 111 and the reception signal electrode 121 may be configured as a single electrode, or the transmission reference electrode 112 and the reception reference electrode 122 may be configured as a single electrode (such that the transmission unit 113 and reception unit 123 share signal electrodes or reference electrodes).

Further, while description has been made above that the devices of the communication system to which the present invention is applied (transmission device, reception device, and communication device) each have the reference potential within the device connected to a reference electrode, but arrangements may be made not restricted to this, and for example may be configured of a differential circuit operating under two signals with different phases, or connecting one signal of a differential circuit to the signal electrode to effect transmission to the communication medium, and connecting the other signal of the differential circuit to the reference electrode, whereby transmission of information can also be enabled.

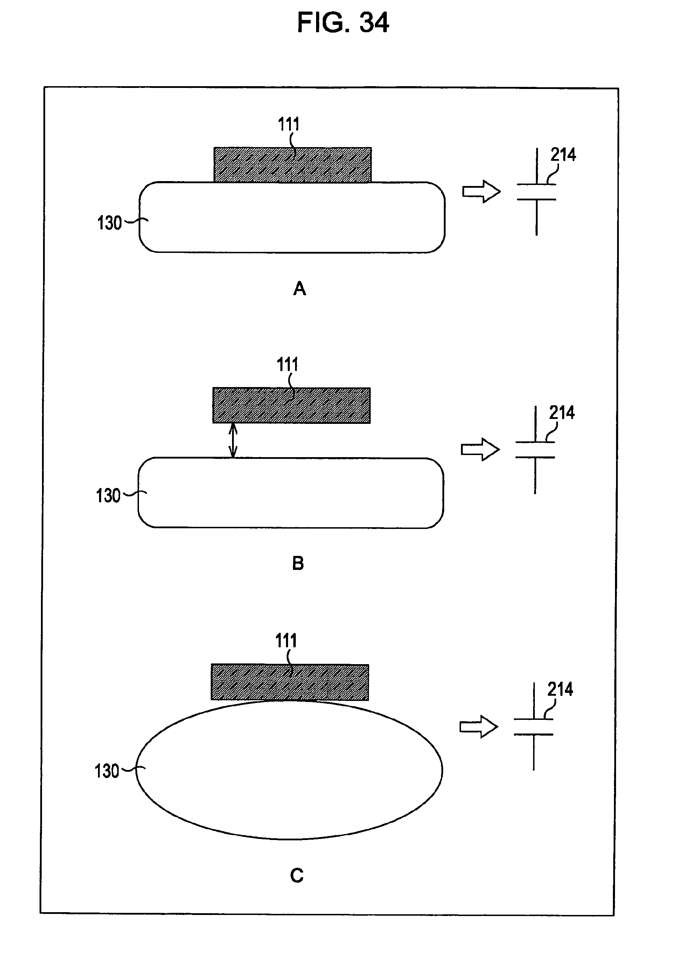

Next, a communication system to which the present invention is applied will be described. First, description will be made regarding the capacitance between the signal electrode and communication medium, with reference to Fig. 34. Fig. 34 is a schematic diagram for describing the relation between positional relation between the transmission signal electrode 111 of the transmission device 110 of the communication system 100 shown in Fig. 1 and the communication medium 130, and the capacitance therebetween. In Fig. 34, the transmission signal electrode 111 is either in contact or in proximity with the communication medium 130 so as to form capacitance Cte 214. For example, the transmission signal electrode 111 is in contact with the communication medium 130 across an insulating layer. Or, the transmission signal electrode 111 is in close proximity with the communication medium 130 via a layer of air.

In A in Fig. 34, the transmission signal electrode 111 has the entire contact surface thereof in contact with the surface of the communication medium 130 via an insulating layer (or is in sufficiently close proximity with the communication medium via a layer of air). That is to say, in the example of A in Fig. 34, the transmission signal electrode 111 and the communication medium 130 are in close proximity with a greater area, so as to form the capacitance Cte 214.

In this positional relation, the Cte 214 between the transmission signal electrode 111 and the communication medium 130 is the greatest.

Conversely, in B in Fig. 34, the transmission signal electrode 111 is away from the communication medium 130, as indicated by the arrows. That is to say, in the example of B in Fig. 34, the distance between the transmission signal electrode 111 and the communication medium 130 is greater as compared with the case of A in Fig. 34. Accordingly, the value of Cte 214 in the positional relation is smaller than in the case of A in Fig. 34. That is to say, the magnitude of Cte 214 is dependent on the distance between the transmission signal electrode 111 and the communication medium 130.

Also, in C in Fig. 34, the surface of the communication medium 130 is a curve, with only a part of the contact face of the transmission signal electrode 111 being in contact with the surface of the communication medium 130 via the insulating layer (or is in sufficiently close proximity via a layer of air). That is to say, with the example in C in Fig. 34, while the transmission signal electrode 111 and the communication medium 130 are in close proximity as with the case in A in Fig. 34, the area in contact is smaller as compared with the case of A in Fig. 34. That is to say, the magnitude of Cte 214 depends not only on the distance between the transmission signal electrode 111 and the communication medium 130, but on a relative positional relation of the two including contact area and direction and so forth as well.

Accordingly, the correct value of Cte 214 cannot be obtained simply be measuring the distance between the transmission device or reception device and the communication medium. In order to obtain the value of Cte 214 more accurately, there is the need to understand the relative positional relation (communication environment) between the device and the communication medium.

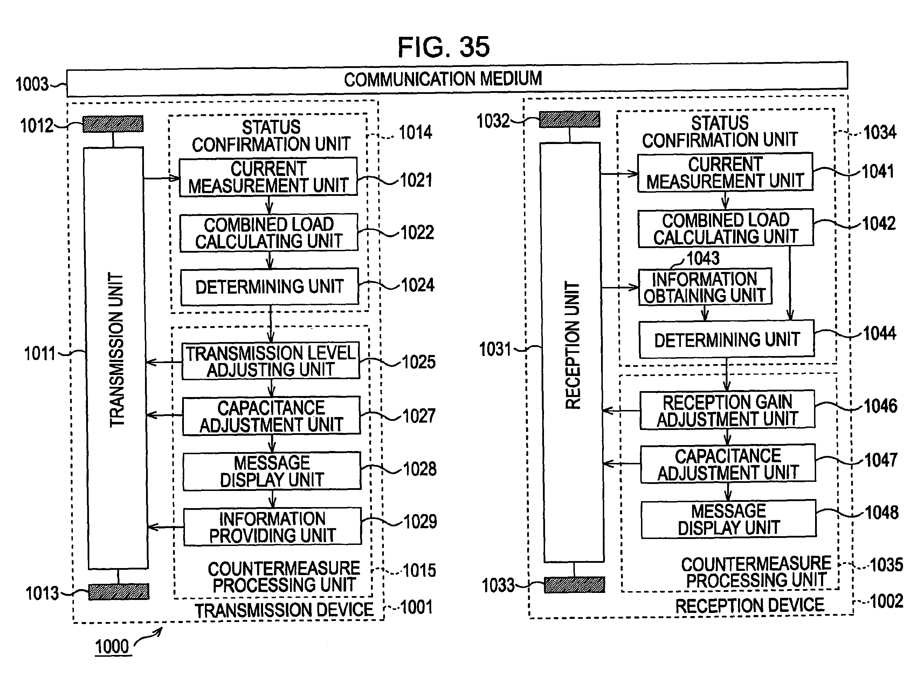

Fig. 35 is a diagram illustrating a configuration example relating to an embodiment of the communication system to which the present invention is applied.

The communication system 1000 shown in Fig. 35 is a communication system wherein a transmission device 1001 and a reception device 1002 perform communication via a communication medium 1003 (for example the human body of a user), and is a communication system such as described above, wherein there is no need to configure a closed circuit using reference electrodes, and stable communication processing unaffected by the environment can be easily performed simply by exchanging signals via the signal electrodes. That is to say, the communication system 1000 is a communication system which performs communication with the same method as that of the communication system 100 shown in Fig. 1.

The transmission device 1001 has a transmission unit 1011 for generating a transmission signal, a transmission signal electrode 1012 which is one electrode of an electrode pair provided for the purpose of transmitting the signal to be transmitted via the communication medium 1003, and a transmission reference electrode 1013 which is the other electrode of the electrode pair, and is a device for transmitting the signal to the reception device 1002 via the communication medium 1003. An arrangement may be made wherein the electrode of the electrode pair in the transmission device 1001 with the stronger electrostatic coupling to the communication medium 1003 is the transmission signal electrode 1012, and the other is the transmission reference electrode 1003. The transmission unit 1011 is provided between the transmission signal electrode 1012 and the transmission reference electrode 1013, and the electrical signal (electric potential) to be transferred to the reception device 1002 is applied between these electrodes.

Note that the transmission signal electrode 1012 and the transmission reference electrode 1013 illustrated in Fig. 35 may be configured with multiple electrodes (a group of electrodes) arranged in an array on a flat surface, for example. The transmission unit 1011 can control the connection (connection and disconnection) with each of the multiple electrodes configured as the transmission signal electrode 1012 and transmission reference electrode 1013. In other words, by controlling the connection with each electrode, the transmission unit 1011 can control the surface area of the electrodes (for example, the area that the transmission signal electrode 1012 is in contact with the communication medium 1003 via an insulation layer, or that is in close proximity via a layer of air), that is to say, the transmission unit 1011 can control the capacitance of the electrodes. Note that an arrangement may be made wherein the transmission signal electrode 1012 and the transmission reference electrode 1013 are each configured with one electrode.

The transmission device 1001 further has a status confirmation unit 1014 and a handling processing unit 1015.

The status confirmation unit 1014 performs processing relating to the status regarding communication of the transmission device 1001, that is to say, processing relating to the confirmation of the communication environment of a relative position relationship and so forth of the transmission device 1001 and the communication medium 1003 or reception device 1002, for example. The status confirmation unit 1014 has a current measurement unit 1021, a combined load calculating unit 1022, and a determining unit 1024.

The current measurement unit 1021 is a processing unit for measuring the current value of the signal output by the transmission unit 1011 by measuring the electric potential of both ends of a resistor, for example, as will be described later. In other words, the current measurement unit 1021 measures the size of current flowing between the transmission signal electrode 1012 and transmission reference electrode 1013. The current measurement unit 1021 supplies the measurement value (current value) thereof to the combined load calculating unit 1022.

The combined load calculating unit 1022 calculates the combined load of the transmission device 1001 and communication medium 1003, to be described later, relating to the transmission of the transmission device 1001, based on the measurement value supplied from the current measurement unit 1021, and supplies the calculation results thereof to the determining unit 1024.

The determining unit 1024 determines the status of the transmission device 1001 based on the calculation results thereof, and decides the necessary content of handling processing, based on the determined results thereof. Then the determining unit 1024 supplies the status determining results including the decided results thereof to the handling processing unit 1015, along with information showing the combined load calculated by the combined load calculating unit 1022.

The handling processing unit 1015 performs processing relating to control of the transmission unit 1011 according to the status confirmed by the status confirmation unit 1014. The handling processing unit 1015 has a transmission level adjusting unit 1025, a capacitance adjusting unit 1027, a message display unit 1028, and an information providing unit 1029.

The transmission level adjusting unit 1025 adjusts the transmission level (output size) of the transmission unit 1011, based on the status determining results supplied by the determining unit 1024 of the status confirmation unit 1014. Also, the transmission level adjusting unit 1025 supplies the status determining results supplied by the determining unit 1024 of the status confirmation unit 1014 and the information showing combined load to the capacitance adjusting unit 1027, along with the information showing the set transmission level.

The capacitance adjusting unit 1027 controls the connection with each of the multiple electrodes configuring the transmission signal electrode 1012 and the transmission unit 1011, based on the status determining results supplied via the transmission level adjusting unit 1025 so as to adjust the capacitance of the transmission signal electrode 1012 as to the communication medium 1003. Also, the capacitance adjusting unit 1027 supplies the status determining results, information showing combined load, and information showing transmission level to a message display unit 1028.

The message display unit 1028 has a display such as an LCD (Liquid Crystal Display), and displays messages or images to the user on the display, based on the status determining result supplied via the capacitance adjusting unit 1027. Also, the message display 1028 supplies the status determining results, information showing combined load, and information showing transmission level to an information providing unit 1029.

The information providing unit 1029 controls the transmission unit 1011 to provide information showing combined load and information showing transmission levels to the reception device 1002, based on the status determining results supplied via the message display unit 1028.

The reception device 1002 has a reception unit 1031 for detecting a reception signal, a reception signal electrode 1032 which is one electrode of an electrode pair provided to receive signals transmitted via the communication medium 1003, and a reception reference electrode 1033 which is the other electrode of the electrode pair thereof, and is a device for receiving signals transmitted from the transmission device 1001 via the communication medium 1003. An arrangement may be made wherein the electrode of the electrode pair in the reception device 1002 with the stronger electrostatic coupling to the communication medium 1003 is the reception signal electrode 1032, and the other is the reception reference electrode 1033. The reception unit 1031 is provided between the reception signal electrode 1032 and the reception reference electrode 1033, detects the electrical signal (electric potential) generated between these electrodes by the signals transferred via the communication medium 1003, converts the electrical signal thereof to a preferred electrical signal, and restores the electrical signal generated in the transmission unit 1011 of the transmission device 1001.

Note that the reception signal electrode 1032 and the reception reference electrode 1033 illustrated in Fig. 35 may be configured with multiple electrodes (a group of electrodes) arranged in an array on a flat surface, for example. The reception unit 1031 can control the connection (connection and disconnection) with each of the multiple electrodes configured as the reception signal electrode 1032 and reception reference electrode 1033. In other words, by controlling the connection with each electrode, the reception unit 1031 can control the surface area of the electrodes (for example, the area that the reception signal electrode 1032 is in contact with the communication medium 1003), that is to say, the reception unit 1031 can control the capacitance of the electrodes. Note that an arrangement may be made wherein the reception signal electrode 1032 and the reception reference electrode 1033 are each configured with one electrode.

The reception device 1002 further has a status confirmation unit 1034 and a handling processing unit 1035.

The status confirmation unit 1034 performs processing relating to the status regarding communication of the reception device 1002, that is to say, processing relating to the confirmation of the communication environment of a relative position relationship and so forth of the reception device 1002 and the communication medium 1003 for example. The status confirmation unit 1034 has a current measurement unit 1041, a combined load calculating unit 1042, an information obtaining unit 1043, and a determining unit 1044.

The current measurement unit 1041 is a processing unit for measuring the current value of the signal input into the reception unit 1031 (reception signal), by applying a predetermined voltage between the reception signal electrode 1032 and the reception reference electrode 1033 for example, to measure the electric potential of both ends of a resistor, regarding the voltage thereof, as will be described later. In other words, the current measurement unit 1041 measures the size of current flowing between the reception signal electrode 1032 and reception reference electrode 1033. The current measurement unit 1041 supplies the measurement value (current value) thereof to the combined load calculating unit 1042.

The combined load calculating unit 1042 calculates the combined load of the reception device 1002 and communication medium 1003, to be described later, relating to the reception of the reception device 1002, based on the measurement value supplied from the current measurement unit 1041, and supplies the calculation results thereof to the determining unit 1044.

The information obtaining unit 1043 controls the reception unit 1031 to obtain information showing the combined load and information showing the transmission level which is transmitted (provided) via the communication medium 1003 from the transmission device 1001 with the processing of the information providing unit 1029, and supplies this to the determining unit 1044.

The determining unit 1044 determines the status of the reception device 1002 based on calculation results supplied from the combined load calculating unit 1042 and at least one of the information showing combined load and information showing transmission level which are supplied from the information obtaining unit 1043, and determines the necessary content of handling processing, based on the decided results thereof. Then the determining unit 1044 supplies the status determining results including the decided results thereof to the handling processing unit 1035.

The handling processing unit 1035 performs processing relating to control of the reception unit 1031 according to the status confirmed by the status confirmation unit 1034. The handling processing unit 1035 has a reception gain adjusting unit 1046, a capacitance adjusting unit 1047, and a message display unit 1048.

The reception gain adjusting unit 1046 adjusts reception gain (reception sensitivity) of the reception unit 1031, based on the status determining results supplied from the determining unit 1044 of the status confirmation unit 1034. Also, the reception gain adjusting unit 1046 supplies the status determining results supplied from the determining unit 1044 of the status confirmation unit 1034 to the capacitance adjusting unit 1047.

The capacitance adjusting unit 1047 controls the connection with each of the multiple electrodes configuring the reception signal electrode 1032 and the reception unit 1031, based on the status determining results supplied via the reception gain adjusting unit 1046 so as to adjust the capacitance of the reception signal electrode 1032 as to the communication medium 1003. Also, the capacitance adjusting unit 1047 supplies the status determining results to a message display unit 1048.

The message display unit 1048 has a display such as an LCD, and displays messages or images to the user on the display, based on the status determining results supplied via the capacitance adjusting unit 1047.

The communication medium 1003 may be configured of: an electric conductor, a representative example of which is metal, such as copper, iron, aluminum, or the like; a dielectric material such as pure water, rubber, glass, or the like; or a compound material having the nature of both a conductor and a dielectric substance, such as an organism, an electrolytic solution of saltwater, or the like. Note that the communication medium 1003 is described here as a user (human body) of the transmission device 1001 and the reception device 1002.

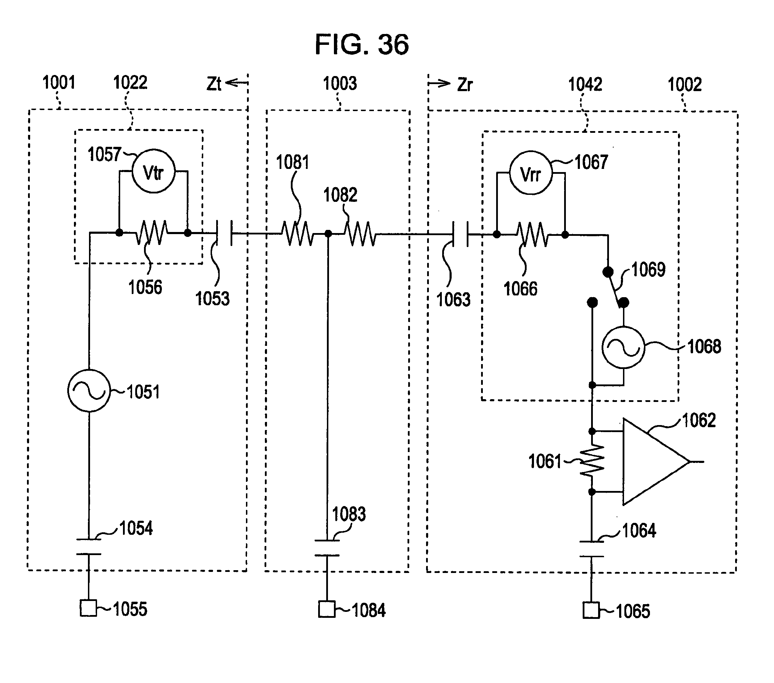

Fig. 36 is a diagram illustrating the communication system 1000 in Fig. 35 with an equivalent circuit. However, the equivalent circuit in Fig. 36 only shows the elements of the communication system 1000 relating to the present invention. In other words, in actuality, the communication system in Fig. 35 also includes elements other than the elements shown in Fig. 36, but omits any elements not necessary to the description of the present invention.

In Fig. 36, the transmission device 1001 has a Vto 1051, Cte 1053, Ctg 1054, and a combined load calculating unit 1022. This combined load calculating unit 1022 has an Rtr 1056 and Vtr 1057.

The Vto 1051 represents a signal source generating the transmission signal, and shows the elements relating to the signal output of the transmission unit 1011. The Cte 1053 illustrates capacitance of the transmission signal electrode 1012 as to the communication medium 1003. The Ctg 1054 illustrates capacitance as to the space (reference point 1055) of the transmission reference electrode 1013. The reference point 1055 references an point of infinity (virtual point) with the transmission reference electrode 1013 as the reference, for example.

The Rtr 1056 and Vtr 1057 of the combined load calculating unit 1022 illustrate a configuration (resistance and voltmeter) for measuring current values flowing between the transmission signal electrode 1012 and transmission reference electrode 1013. In other words, the combined load calculating unit 1022 can measure the current values flowing between the two electrodes by measuring the electric potential Vtr 1057 on both ends of the resistor Rtr 1056. The combined load calculating unit 1022 calculates the combined load relating to the signal transmission from the current value and output level of the Vto 1051.

Also, the reception device 1001 has an Rr 1061, Amp 1062, Cre 1063, Crg 1064, and a combined load calculating unit 1042. This combined load calculating unit 1042 has an Rrr 1066, Vrr 1067, Vro 1068, and SW 1069.

The Rr 1061 and Amp 1062 reference a resistor and amplifier, respectively, and reference elements illustrating the signal detecting function in the reception unit 1031 in Fig. 35. In other words, the Amp 1062 detects the reception signal by amplifying and detecting the electric potential generated on both ends of the Rr 1061 by receiving the signal. The Cre 1063 shows capacitance of the reception signal electrode 1032 as to the communication medium 1003. The Crg 1064 illustrates capacitance as to the space (reference point 1065) of the reception reference electrode 1033. The reference point 1065 references a point of infinity (virtual point) with the reception reference electrode 1033 as the reference.

The Vro 1068 of the combined load calculating unit 1042 illustrates a signal source for flowing current to the reception device 1002 for the purpose of calculating combined load relating to signal reception. The SW 1069 references a switching circuit, which disconnects the connection with the Vro 1068 at normal times wherein the combined load is not being calculated. In other words, the Vro 1068 connects between the Rrr 1066 and Rr 1061 only when the combined load is being calculated. In other words, the SW 1069 references an element for switching the operating mode of the reception device 1002 between combined load calculating mode and normal mode.

Also, the Rrr 1066 and Vrr 1067 of the combined load calculating unit 1042 illustrate a configuration (resistance and voltmeter) for measuring current value flowing between the reception signal electrode 1032 and reception reference electrode 1033. In other words, the combined load calculating unit 1042 can measure the current values flowing between the two electrodes by measuring the electric potential Vtr 1067 on both ends of the resistor Rrr 1066. The combined load calculating unit 1042 calculates the combined load relating to the signal transmission from the current value and output level of the Vro 1068.

Further, the Rm 1081 and Rm 1082 of the communication medium 1003 illustrate resistance components of the communication medium (human body). Also, the Cm 1083 illustrates capacitance formed between the communication medium 1003 and the space (reference point 1084). The reference point 1084 references a point of infinity (virtual point) with the communication medium 1003 as the reference, for example.

Note that the impedance Zt and impedance Zr illustrate impedance of the transmission device 1001 and reception device 1002, respectively, when viewed from the reception device 1002 and transmission device 1001.

Hereafter, "stabilized communication" is defined as "the ability to communicate without regard to the positional relationship (including electrodes) of the communication medium 1003 and transmission device 1001 (or reception device 1002), wherein the communication medium 1003 and transmission device 1001 (or reception device 1002) are within a fixed distance range". For example, in the case of securing a "stabilized communication" up to 10 cm from the transmission device 1001 and reception device 1002 to the communication medium 1003, an arrangement may be made wherein "stabilized communication" can be made only when the condition "distance between transmission device 1001 and communication medium 1003 ≤ 10 cm" and the condition "distance between reception device 1002 and communication medium 1002 ≤ 10 cm " both have been fulfilled. Note that the distance at which "stabilized communication" can be made can be changed according to usage, such as an arrangement wherein communication can be made in the event that the transmission device 1001 and the reception device 1002 are within 10 cm distance from the communication medium 1003 with a given usage A, or wherein communication can be made only in the event that the transmission device 1001 and the reception device 1002 are within 5 cm distance from the communication medium 1003 with a given usage B, and so forth.

Next, description will be given for an example of a combined load calculation method using the equivalent circuit in Fig. 36.

In Fig. 36, the Ctg 1054 and Crg 1064 illustrate capacitance of the transmission reference electrode 1013 and capacitance as to the space of the reception reference electrode 1033, respectively. These values become an approximately fixed value regardless of the communication environment of the position and so forth of the transmission device 1001 or reception device 1002. Also, the Cte 1053 and Cre 1063 illustrate coupling capacitance of the transmission signal electrode 1012 and communication medium 1003 (human body), and the coupling capacitance of the reception signal electrode 1032 and communication medium 1003 (human body), respectively, and so these values can vary widely based on the communication environment such as the distance between a human body and each device or the facing direction of the contact surface of the signal electrode or the shape of the human body, and so forth. Further, the Rm 1081 and Rm 1082 reference the burden components of the human body, and so can vary widely based on the communication environment such as the positional relationship between the transmission device 1001 or reception device 1002 on the human body. Also, the Cm 1083 references capacitance of the human body serving as the communication medium 1003, and so the values thereof becomes an approximately fixed value regardless of the communication environment of the position and so forth of the transmission device 1001 or reception device 1002.

Now, the capacitance Cte 1053 formed between the transmission signal electrode 1012 and communication medium 1003 and the capacitance Cre 1063 formed between the reception signal electrode 1032 and communication medium 1003 vary based on the distance between each device and the communication medium 1003, but the capacitance Ctg 1054 formed between the transmission reference electrode 1013 and space (reference point 1055), the capacitance Cm 1083 formed between the communication medium and space (reference point 1084), and the capacitance Crg 1064 formed between the reception reference electrode 1033 and space (reference point 1065) vary a sufficiently small amount compared to that of the Cte 1053 or Cre 1063, and so can be considered to be fixed. Accordingly these values are defined as predetermined constant numbers which are fixed in advance (can be known in advance). In other words, with the equivalent circuit in Fig. 36, the values of Cte 1053, Rm 1081, Rm 1082, and Cre 1063 change based on status changes (changes in the communication environment).

Now, the combined load calculating unit 1022 of the transmission device 1001 calculates the combined load of Cte 1053 and Rm 1081 by measuring the Vtr 1057. However, here the communication medium 1003 is sufficiently large physically, wherein the expressions Cm 1083 >> Cte 1053 and Cm 1083 >> Cre 1063 hold. Also, when the communication medium 1003 is seen from the transmission device 1001, the impedance Zr of the Rm 1082 and reception device 1002 can be ignored. Further, when the communication medium 1003 is seen from the reception device 1002, the impedance Zt of the Rm 1081 and transmission device 1001 can be ignored. Accordingly, in the event of calculating the combined load relating to transmission of the transmission device 1001, this can be considered as a closed circuit of Vto 1051, Rtr 1056, Cte 1053, Rm 1081, Cm 1083, and Ctg 1054, wherein by using a constant number (for example, a value within several tens of picofarads to several hundred picofarads) previously determined in advance as the approximate value of Cm 1083, the combined load of Cte 1053 and Rm 1081 can be calculated.

Note that a calculation method such as the above described can also be applied for the reception device 1002. In other words, in the case of calculating combined load relating to reception of the reception device 1002, this can be considered as a closed circuit of Rr 1061, Rrr 1066, Cr 1063, Rm 1082, Cm 1083, and Ctg 1064, wherein by using a constant number previously determined in advance as the approximate value of Cm 1083, the combined load of Cre 1053 and Rm 1082 can be calculated.

Using the combined load thus calculated, the transmission device 1001 and reception device 1002 can perform control processing (appropriate handling processing) relating to transmission or reception according to the communication environment.

Processing is known for this handling processing such as adjusting the transmission level of the transmission device or capacitance of the signal electrode, or adjusting reception gain of the reception device or capacitance of the signal electrode. Also, an arrangement may be made wherein a message is displayed relating to the control thereof.

At this time, an arrangement may be made wherein the handling processing with the transmission device 1001 is performed based only on the communication environment (status) of the transmission device 1001, or can be performed based only on the communication environment (status) of the reception device 1002, or can be performed based on both of the communication environment (status) of the transmission device 1001 and the communication environment (status) of the reception device 1002.

Similarly, an arrangement may be made wherein the handling processing with the reception device 1002 is performed based only on the communication environment (status) of the reception device 1002, or can be performed based only on the communication environment (status) of the transmission device 1001, or can be performed based on both of the communication environment (status) of the transmission device 1001 and the communication environment (status) of the reception device 1002.

In other words, information relating to the communication environment (status) of the transmission device 1001 which is confirmed by the transmission device 1001 can be used only with the handling processing of the transmission device 1001, or can be used only with the handling processing of the reception device 1002, or can be used for the handling processing for both of the transmission device 1001 and reception device 1002.

Similarly, information relating to the communication environment (status) of the reception device 1002 which is confirmed by the reception device 1002 can be used only with the handling processing of the reception device 1002, or can be used only with the handling processing of the transmission device 1001, or can be used for the handling processing for both of the transmission device 1001 and reception device 1002.

An example of specific flow of the communication control processing with consideration for the communication environment with the communication system 1000 in Fig. 35 will be described below.

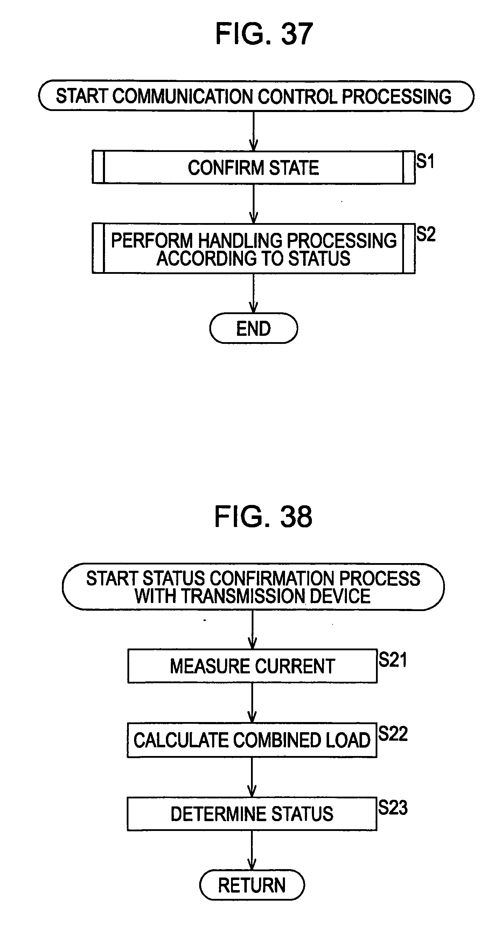

First, the communication control processing to be executed with the transmission device 1001 will be described with reference to the flowchart in Fig. 37.

Upon the communication control processing starting, the status confirmation unit 1014 of the transmission device 1001 confirms the status (communication environment) of the transmission device 1001 in step S1. In step S2, the handling processing unit 1015 of the transmission device 1001 performs handling processing according to the confirmed status (communication environment) of the transmission device 1001. Upon the handling processing finishing, the handling processing unit 1015 performs communication control processing.

Next, the detailed flow of the status confirmation processing executed in step S1 of Fig. 37 will be described with reference to the flowchart in Fig. 38.

In step S21, the current measurement unit 1021 controls the transmission unit 1011 to measure the current, and supplies the value thereof to the combined load calculating unit 1022. In step S22, the combined load calculating unit 1022 calculates the combined load (Cte 1053 and Rm 1081) relating to transmission processing based on the supplied current value, and supplies the calculation results thereof to the determining unit 1024. In step S23, the determining unit 1024 determines the status (communication environment) of the transmission device 1001 based on the supplied calculation results, determines the necessary handling processing, and supplies the status determining results including the information thereof, along with the information showing the combined load which is calculated by the combined load calculating unit 1022, to the handling processing unit 1015. Upon the processing in step S23 ending, the determining unit 1024 ends the status confirmation processing, returns the processing to step S1 in Fig. 37, and executes the processing of step S2 and thereafter.

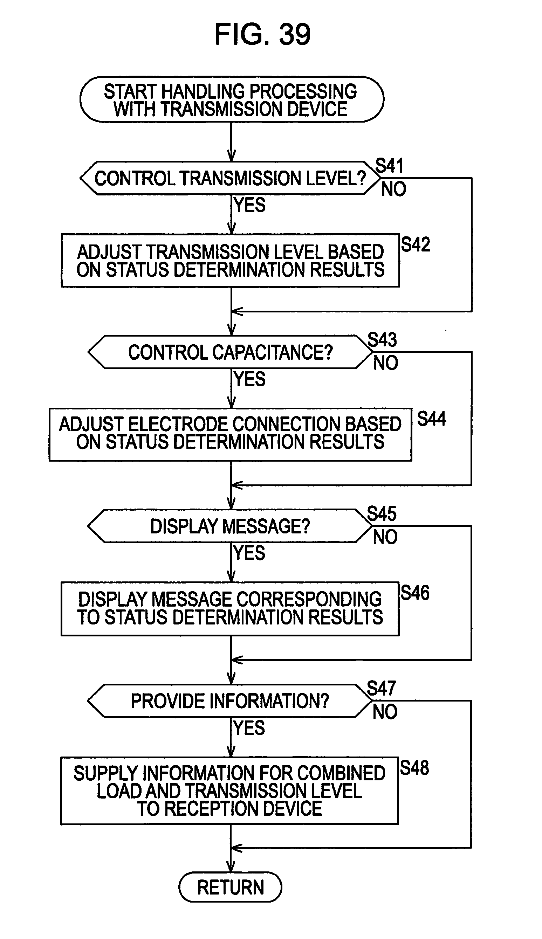

Next, the detailed flow of the handling processing executed in step S2 in Fig. 37 will be described with reference to the flowchart in Fig. 39.

In step S41, the transmission level adjusting unit 1025 determines whether or not to control the transmission level, based on the status determining results supplied from the determining unit 1024, and in the event it is determined to perform control, the flow proceeds to step S42, and the transmission unit 1011 is controlled to control the transmission level based on the status determining results (in other words, transmission level control is performed according to the communication environment). Upon ending the processing in step S42, the transmission level adjusting unit 1025 supplies information referencing the status determining results supplied by the determining unit 1024 of the status confirmation unit 1014 and the combined load to the capacitance adjusting unit 1027, along with information reference the set transmission level, and the flow proceeds to step S43. Also, in the event it is determined not to perform control in step S41, the transmission level adjusting unit 1025 omits the processing in step S42, and supplies the information referencing the status determining results supplied by the determining unit 1024 of the status confirmation unit 1014 and the combined load to the capacitance adjusting unit 1027, along with information referencing the set transmission level (default value if the transmission level is not set), and the flow proceeds to step S43.

In step S43, the capacitance adjusting unit 1027 determines whether or not to control the capacitance formed between the transmission signal electrode 1012 and the communication medium 1003, based on the status determining results supplied via the transmission level adjusting unit 1025, and in the event it is determined to perform control, the flow proceeds to step S44, the transmission unit 1011 is controlled to control the connection with each of the multiple electrodes configuring the transmission signal electrode 1012 and the transmission unit 1011 based on the status determining results, and adjusts the capacitance of the transmission signal electrode 1012 as to the communication medium 1003 (in other words, performs capacitance control according to the communication environment). Upon ending the processing in step S44, the capacitance adjusting unit 1027 supplies the status determining results, information showing the combined load, and information showing the transmission level to a message display unit 1028, and the flow proceeds to step S45. Also, in the event it is determined not to perform control in step S43, the capacitance adjusting unit 1027 omits the processing in step S44 and supplies the status determining results, information showing the combined load, and information showing the transmission level to a message display unit 1028, and the flow proceeds to step S45.

In step S45, the message display unit 1028 determines whether or not to display a message based on the status determining results supplied via the capacitance adjusting unit 1027, and in the event it is determined to perform display, the flow proceeds to step S46, and messages or images are displayed to the user on a display not shown, based on the status determining results. (In other words, display of messages according to the communication environment is performed.) Upon ending the processing in step S46, the message display unit 1028 supplies the status determining results, information showing the combined load, and information showing the transmission level to the message display unit 1028, and the flow proceeds to step S47. Also, in the event it is determined not to perform displaying in step S45, the message display unit 1028 omits the processing in step S46, and supplies the status determining results, information showing the combined load, and information showing the transmission level to a information providing unit 1029, and the flow proceeds to step S47.

In step S47, the information providing unit 1029 determines whether or not to provide information, based on the status determining results supplied via the message display unit 1028, and in the event it is determined to provide information, the flow proceeds to step S48, and the transmission unit 1011 is controlled to provide information indicating the combined load and information indicating the transmission level to the reception device 1002 (in other words, information relating to the communication environment is provided). Upon ending the processing in step S48, the information providing unit 1029 ends the handling processing, and ends the communication control processing by returning the flow to step S2 in Fig. 37. Also, in the event it is determined not to provide information in step S47, the information providing unit 1029 omits the processing in step S48, and ends the handling processing.

By performing each of such processing, the transmission device 1001 may be arranged such that the user can easily perform appropriate communication setting according to the communication environment.

Next, the processing of the reception device 1002 will be described. The communication control processing by the reception device 1002 is similar to the case of the transmission device 1001 described with reference to the flowchart in Fig. 37, so the description thereof will be omitted.

However, in the case of the reception device 1002, in the event of performing communication control processing, the SW 1069 connects the Vro 1068 between the Rrr 1066 and Rr 1061, and switches the operation mode of the reception device 1002 to combined load calculation mode.

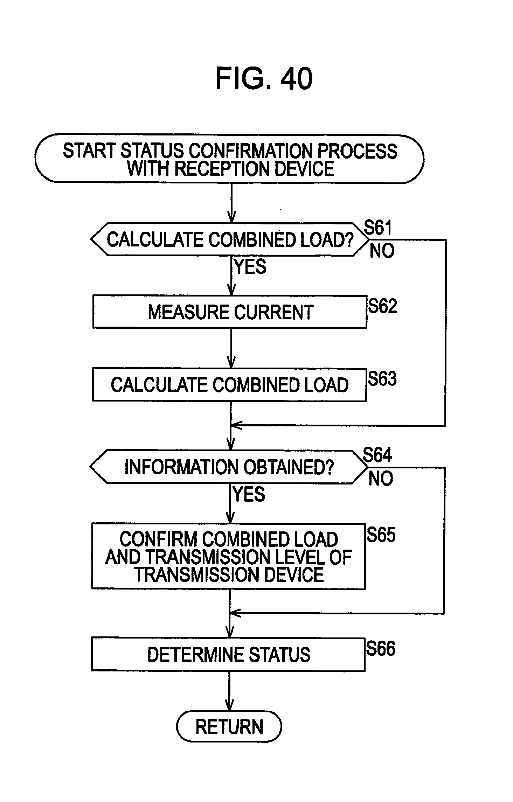

Next, an example of detailed flow of the status confirmation processing executed in step S1 will be described with reference to the flowchart in Fig. 40, with a case wherein the reception device 1002 executes the communication control processing in Fig. 37.

Upon the status confirmation processing being executed, the current measurement unit 1041 determines whether or not to calculate the combined load in step S61. In the case of calculating the combined load with the reception device 1002, the current measurement unit 1041 determines to calculate the combined load, advances the processing to step S62, measures the current, and supplies the measured value thereof (current value) to the combined load calculating unit 1042.

In step S63, the combined load calculating unit 1042 calculates the combined load (Cre 1063 and Rm 1082) based on the current value supplied from the current measurement unit 1041, and the flow proceeds to step S64. Also, if it is determined not to calculate combined load in step S61, the current measurement unit 1041 advances the processing to step S64.

In step S64, the information obtaining 1043 determines whether or not the information supplied from the transmission device 1001 (information indicating combined load and information indicating transmission level) has been obtained. If it is determined that the information has been obtained, the information obtaining unit 1043 advances the processing to step S65, confirms the combined load calculated with the transmission device 1001 and the transmission level value set by the transmission device 1001, and advances the processing to step S66. Also, if it is determined that the information is not obtained in step S64, the information obtaining unit 1043 omits the processing in step S65 and the flow proceeds to step S66.

In step S66, the determining unit 1044 determines the status of the reception device 1002 (communication environment), based on at least one of the value of combined load (reception device side) supplied from the combined load calculating unit 1042 and the information (information relating to combined load or transmission level) supplied from the transmission device 1001. Upon the processing in step S66 ending, the determining unit 1044 supplies the determining results thereof to the handling processing unit 1035, ends the status confirmation processing, returns the processing to step S1 in Fig. 37, and executes the processing of S2 and thereafter.

Note that with the above, for example, an arrangement may be made wherein the processing in steps S64 and S65 are performed prior to the processing in steps S61 through S63, whereby if the information is determined to be obtained in step S64 and the processing in step S65 is performed, the processing in steps S61 through S63 is omitted and the flow proceeds to step S66, and if the information is determined to not be obtained in step S64, the flow proceeds to step S61, whereby the processing is advanced to step S66 after the processing in steps S61 through S63 are performed.

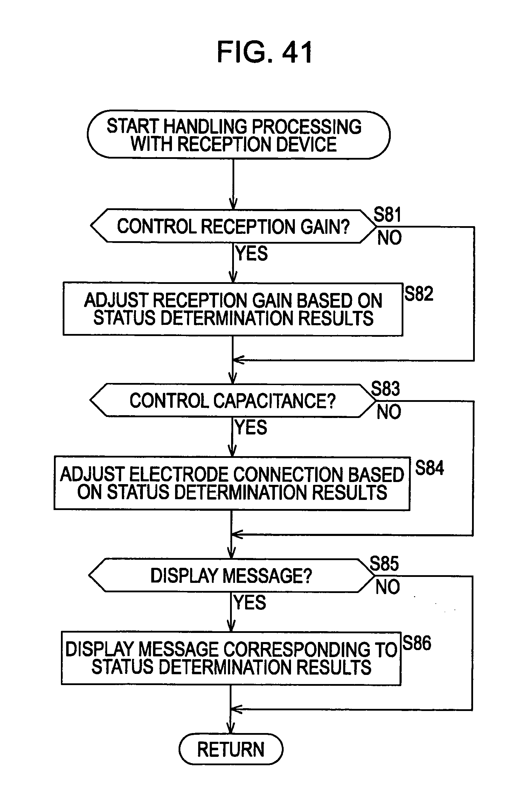

Next, a detailed flow example of the handling processing which is executed in step S2 when the reception device 1002 executes the communication control processing in Fig. 37 will be described with reference to the flowchart in Fig. 41.

In Step S81, the reception gain adjusting unit 1046 determines whether or not to control the reception gain, based on the status determining results supplied form the determining unit 1044, and if it is determined to perform control, the flow proceeds to step S82, the reception unit 1031 is controlled, and the reception gain is controlled based on the status determining results (in other words, control is performed for reception gain according to the communication environment). Upon the processing in step S82 ending, the reception gain adjusting unit 1046 supplies the status determining results supplied from the determining unit 1044 of the status confirmation unit 1034 to the capacitance adjusting unit 1047, and the flow proceeds to step S83. Also, if it is determined not to perform control in step S81, the reception gain adjusting unit 1046 omits the processing of step S82, and supplies the status determining results supplied from the determining unit 1044 of the status confirmation unit 1034 to the capacitance adjusting unit 1047, and the flow proceeds to step S83.

In step S83, the capacitance adjusting unit 1047 determines whether or not to control the capacitance formed between the reception signal electrode 1032 and the communication medium 1003, based on the status determining results supplied via the reception gain adjusting 1046, and if it is determined to perform control, the flow proceeds to step S84, the reception unit 1031 is controlled to control the connections with each of the multiple electrodes configuring the reception signal electrode 1032 based on the status determining results, and the capacitance of the reception signal electrode 1032 to the communication medium 1003 is adjusted (in other words, control of capacitance is performed according to the communication environment). Upon ending the processing in step S84, the capacitance adjusting unit 1047 supplies the status determining result to the message display unit 1048, and the flow proceeds to step S85. Also, if it is determined not to perform control in step S83, the capacitance adjusting unit 1047 omits the processing in step S84, supplies the status determining results to the message display unit 1048, and the flow proceeds to step S85.

In step S85, the message display unit 1048 determines whether or not to display messages, based on the status determining results supplied via the capacitance adjusting unit 1047, and if it is determined to perform display, the processing is advanced to step S86, and messages or images to the user are displayed on a display not shown. (In other words, display of messages according to the communication environment is performed.) Upon ending the processing in step S86, the message display unit 1048 ends the handling processing, and ends the communication control processing by returning the processing to step S2 in Fig. 37. Also, if it is determined not to perform display in step S85, the message display unit 1048 omits the processing in step S86, and ends the handling processing.

The reception device 1002 may be arranged such that by performing each of such processing, the user can easily perform appropriate communication setting according to the communication environment. Also, the reception device 1002 can make communication settings which are suitable in accordance with the communication environment, based on information supplied from the transmission device 1001.

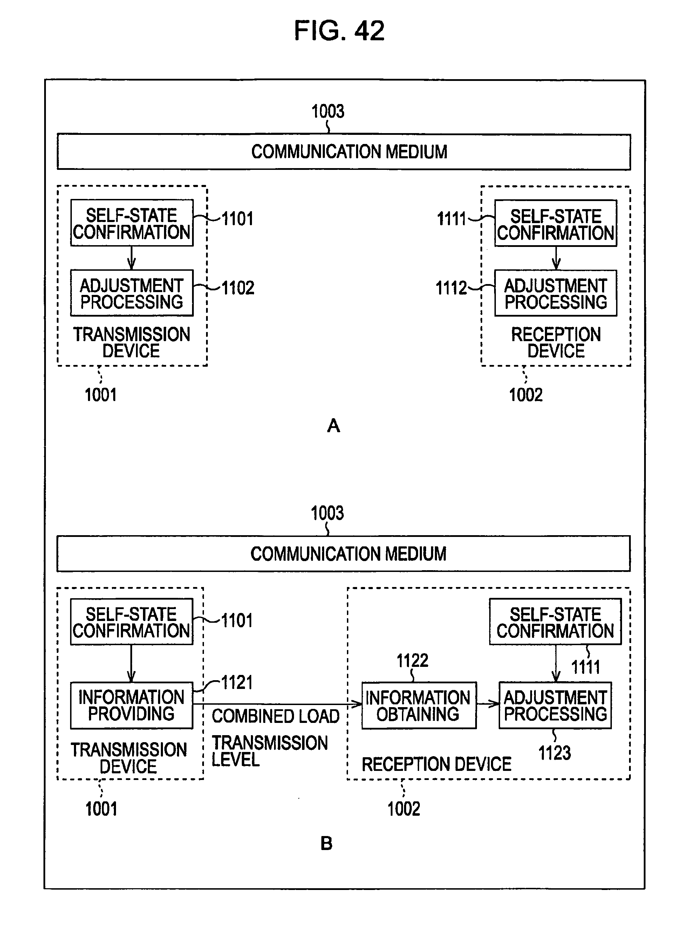

In other words, in the case of this communication system 1000, for example as illustrated in A in Fig. 42, the transmission device 1001 performs self-state confirmation processing 1101 for confirming the status (communication environment) of itself (the transmission device 1001 itself), and performs adjustment processing 1102 according to the processing results thereof, and independent from this the reception device 1002 performs self-state confirmation processing 1111 for confirming the status (communication environment) of itself (the reception device 1002 itself), and performs adjustment processing 1112 according to the processing results thereof. Thus, the transmission device 1001 and reception device 1002 can perform adjustment processing according to the communication environment independently from one another. In other words, in this case, each device can easily perform appropriate adjustment processing while there is no need for each device to perform communication processing with other devices. Further, in the case that the communication environment of only one thereof worsens, the other device can appropriately adjust the communication processing without being influenced thereby, and so for example in a case wherein transmission/reception processing is performed on three or more devices (transmission device or reception device), the worsening of the communication environment can be prevented from needlessly influencing other devices.

Also, an arrangement may be made for example wherein the communication system 1000 performs information providing processing 1121 for the transmission device 1001 to transmit information relating to the combined load or transmission level, as processing results of the self-state confirmation processing 1101, to the reception device 1002, as shown in Fig. 42B.

Corresponding to this, the reception device 1002 executes information obtaining processing 1122, obtains information relating to the combined load or transmission level thereof, and performs adjusting processing 1123 based on one or both of the information thereof or the processing results of the self-state confirmation processing 1111.

Thus, the reception device 1002 can perform adjustment processing 1123 not only for the communication environment of the reception device 1002, but also considering the state of the transmission device 1001 (adjustment processing can be performed appropriate to the communication environment of both of the reception device 1002 and transmission device 1001).

Although description has been made regarding a communication system configured with a transmission device and a reception device, arrangements may be made not restricted to this, and a communication system configured with multiple communication devices capable of communication exchange may be used.

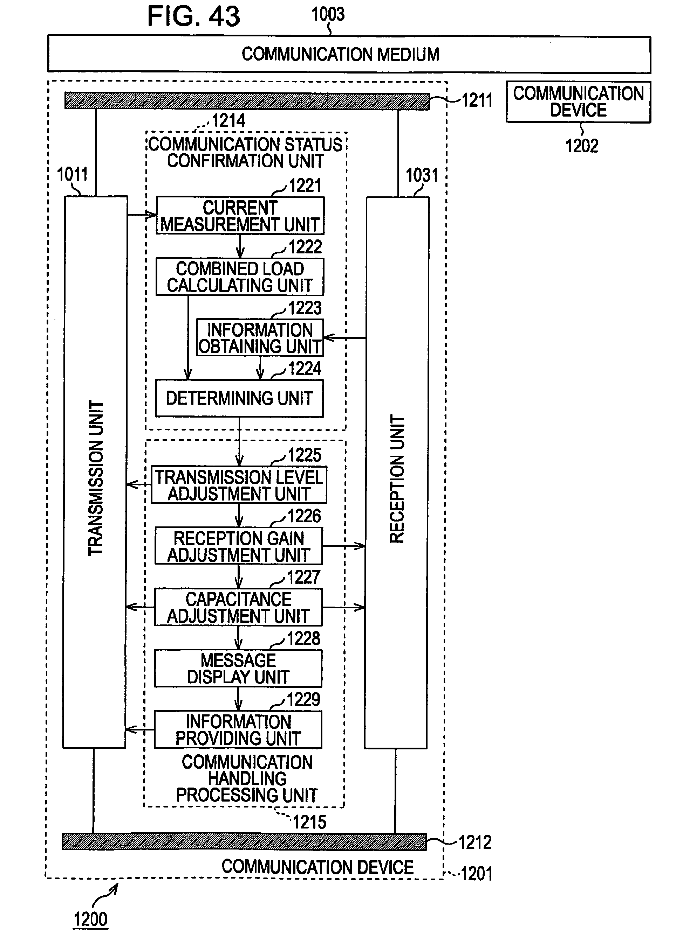

Fig. 43 is a diagram showing another configuration example of a communication system to which the present invention is applied.

The communication system 1200 shown in Fig. 43 is a communication system wherein a communication device 1201 and a communication device 1202 perform communication via a communication medium 1003 (human body), and is a communication system wherein there is no need to configure a closed circuit using reference electrodes, and stable communication processing unaffected by the environment can be easily performed simply by exchanging signals via the signal electrodes. That is to say, the communication system 1200 is a communication system which performs communication with the same method as that of the communication system 100 shown in Fig. 1. Note that the configuration portions which are the same as the communication system 1000 in Fig. 35 have the same reference numerals.

With the communication system 1200 in Fig. 43, the communication device 1201 is basically configured of a combination of the transmission device 1001 and reception device 1002 shown in Fig. 35. In other words, the communication 1201 has both of a transmission unit 1011 and reception unit 1031. However, the communication device 1201 has only one shared configuration with the transmission device 1001 and reception device 1002. In other words, the transmission unit 1011 and reception unit 1031 are connected with a shared signal electrode 1211 and a shared reference electrode 1212. The signal electrode 1211 corresponds to both of the transmission signal electrode 1012 of the transmission device 1001 and the reception signal electrode 1032, and the reference electrode 1212 corresponds to both of the transmission reference electrode 1013 of the transmission device 1001 and the reception reference electrode 1033 of the reception device 1002.

Note that the signal electrode 1211 and reference electrode 1212 shown in Fig. 43 may be configured with multiple electrodes (a group of electrodes) arranged in an array on a flat surface, for example. The transmission unit 1011 or reception unit 1031 can control the connection (connection and disconnection) with each of the multiple electrodes configured as the signal electrode 1211 or reference electrode 1212. In other words, by controlling the connection with each electrode, the transmission unit 1011 and reception unit 1031 can control the surface area of the electrodes (for example, the area that the signal electrode 1211 is in contact with the communication medium 1003), that is to say, the transmission unit 1011 and reception unit 1031 can control the capacitance of the electrodes. Note that an arrangement may be made wherein the signal electrode 1211 and the reference electrode 1212 are each configured with one electrode.

Also the communication device 1201 has one each of a communication status confirmation unit 1214 and a communication handling processing unit 1215. The communication status confirmation unit 1214 is arranged in a combination configured by a status confirmation unit 1014 and status confirmation unit 1034, and has one each of a current measurement unit 1221, combined load calculating unit 1222, information obtaining unit 1223, and determining unit 1224.

The current measurement unit 1221 corresponds to the current measurement unit 1021, measures the size of current (current value) flowing between the signal electrode 1211 and reference electrode 1212 using the signal source in the transmission unit 1011, and supplies this to the combined load calculating unit 1222. The combined load calculating unit 1222 corresponds to the combined load calculating unit 1022, calculates the combined load based on the measurement results supplied from the current measurement unit 1221, and supplies the calculation results thereof to the determining unit 1224. The information obtaining unit 1223 corresponds to the information obtaining unit 1043, and controls the reception unit 1031 to obtain the information showing the combined load and the information showing the transmission level which is supplied from the other communication device 1202, and supplies this to the determining unit 1224. The determining unit 1224 corresponds to the determining unit 1024 or the determining unit 1044, determines the status of the communication device 1201 based on at least one of calculation results supplied from the combined load calculating unit 1222, and the information showing combined load and information showing transmission level supplied from the information obtaining unit 1223, and decides the necessary content for handling processing, based on the determined results thereof. Then the determining unit 1224 supplies the status determining results including the decided content thereof to the communication handling processing unit 1215.

The communication handling processing unit 1215 is arranged to combine the configuration of the handling processing unit 1015 and handling processing unit 1035, and has one each of the transmission level adjusting unit 1225, reception gain adjusting unit 1226, capacitance adjusting unit 1227, message display unit 1228, and information providing unit 1229.

The transmission level adjusting unit 1225 corresponds to the transmission level adjusting unit 1025, and adjusts the transmission level (size of output), based on the status determining results supplied from the determining unit 1224. Also, the transmission level adjusting unit 1225 supplies the information showing combined load and the status determining results supplied from the determining unit 1224, along with the information showing the set transmission level, to the reception gain adjusting unit 1226.

The reception gain adjusting unit 1226 corresponds to the reception gain adjusting unit 1046, and adjusts the reception gain (reception sensitivity) of the reception unit 1031, based on the status determining results supplied via the transmission level adjusting unit 1225. Also, the reception gain adjusting unit 1226 supplies the status determining results, information showing combined load, and information showing transmission level supplied via the transmission level adjusting unit 1225, along with the information showing the provided reception gain to the capacitance adjusting unit 1227.

The capacitance adjusting unit 1227 corresponds to the capacitance adjusting unit 1027 or the capacitance adjusting unit 1047, and controls the connection with the transmission unit 1011 and reception unit 1031 and each of the multiple electrodes configuring the signal electrode 1211, based on the status determining results supplied via the reception gain adjusting unit 1226, and adjusts the connection with the transmission unit 1011 and reception unit 1031. Also, the capacitance adjusting unit 1227 supplies the status determining results, information showing combined load, information showing transmission level, and information showing reception gain to the message display unit 1228.

The message display unit 1228 corresponds to the message display unit 1028 or the message display unit 1048, and has a display such as an LCD, and displays the messages or images to the user on this display, based on the status determining results supplied via the capacitance adjusting unit 1227. Also, the message display unit 1228 supplies the status determining results, information showing combined load, information showing transmission level, and information showing reception gain to the information providing unit 1229.

The information providing unit 1229 corresponds to the information providing unit 1029, and controls the transmission unit 1011 to provide the information showing combined load, information showing transmission level, and information showing reception gain to the other communication device 1202, based on the status determining results supplied via the message display unit 1228.

The communication device 1202 is a communication device similar to the communication device 1201, has the same configuration as the communication device 1201, and performs the same processing, and so the description thereof will be omitted.

Next, the flow of the communication control processing executed by this communication device 1201 will be described. As with the transmission device 1001 or reception device 1002 in Fig. 35, the communication device 1201 executes the communication control processing as shown in the flowchart in Fig. 37. Accordingly, the description thereof will be omitted.

The details of each of the processing in step S1 and step S2 in the case that the communication device 1201 executes communication control processing will be described below.

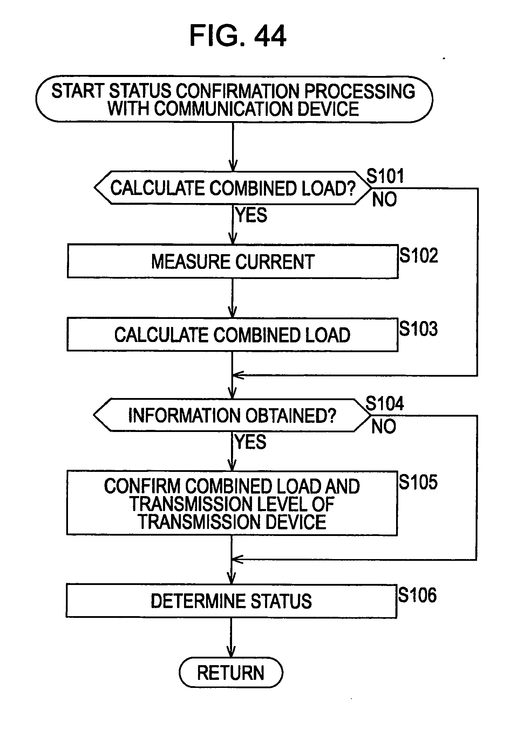

First, a detailed example of the flow of the status confirmation processing executed with the communication device 1201 in step S1 in Fig. 37 will be described with reference to the flowchart in Fig. 44. As described above, the configuration of communication device 1201 is a combination of the configuration of the transmission device 1001 and reception device 1002, and so the processing which the communication device 1201 executes is also basically configured of a combination of the processing which the transmission device 1001 executes and the reception device 1002 which the reception device 1002 executes.

Accordingly, the status confirmation processing the communication device 1201 executes is basically executed in the same way as the status confirmation processing which the reception device 1002 executes as described with reference to the flowchart in Fig. 40.

In other words, each of the processing in step S101 through step S106 in Fig. 44 correspond to the various processing in step S61 through step S66, and the various units of the communication status confirmation unit 1214 of the communication device 1201 execute the various processing in step S101 through step S106 in the same way that the various units of the status confirmation unit 1034 of the reception device 1002 execute the various processing in step S61 through step S66.

However, the information obtaining unit 1223 confirms the combined load calculated on the other device with which communication is being performed, the settings for transmission level, and the settings for reception gain in step S105.

Accordingly, in step S106, the determining unit 1224 determines the status of the communication device 1201 (communication environment) based on at least one of the value of combined load (on the communication device 1201 side) supplied from the combined load calculating unit 1222 and the information supplied from the communication device 1202 which is obtained with the information obtaining unit 1223 (information relating to combined load, transmission level, and reception gain).

Note that with the above, for example, an arrangement may be made wherein the processing in steps S104 and S105 are performed prior to the processing in steps S101 through S103, whereby if the information is determined to be obtained in step S104 and the processing in step S105 is performed, the processing in steps S101 through S103 is omitted and the flow proceeds to step S106, and if the information is determined to not be obtained in step S104, the flow proceeds to step S101, whereby the flow proceeds to step S106 after the processing in steps S101 through S103 are performed.

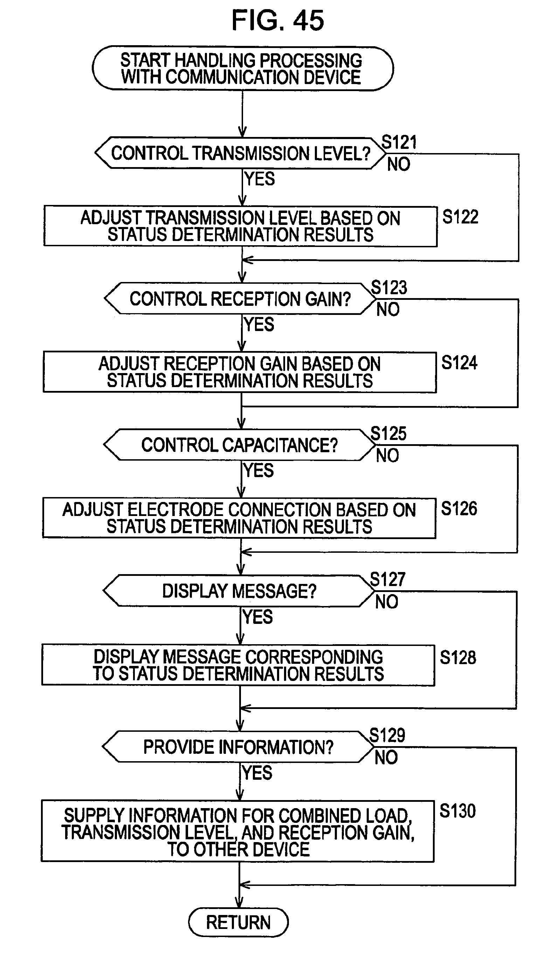

Next, a detailed flow example of the handling processing executed with the communication device 1201 in step S2 in Fig. 37 will be described with reference to the flowchart in Fig. 45. The handling processing which this communication device 1201 executes is also basically configured as a combination of the handling processing executed with the transmission device 1001, as described with reference to the flowchart in Fig. 39, and the handling processing executed with the reception device 1002, as described with reference to the flowchart in Fig. 41, and is executed in the same way as the processing thereof.

In other words, the transmission level adjusting unit 1225 of the handling processing unit 1215 of the communication device 1201 executes the various processing in step S121 and step S122 the same way as with the case of step S41 and step S42. Also, the reception gain adjusting unit 1226 executes the various processing in step S123 and step S124 in the same way as with the case of step S81 and step S82. Further, the capacitance adjusting unit 1227 executes the various processing in step S125 and step S126 in the same way as with the case of step S43 and step S44 (or with the case of step S83 and step S84).

Also, the message display unit 1228 executes the various processing in step S127 and step S128 in the same way as with the case of step S45 and step S46 (or with the case of step S85 and step S86). Further, the information providing unit 1229 executes the various processing in step S129 and step S130 in the same way as with the case of step S47 and step S48. However, in this case, the information providing unit 1229 supplies not only the combined load and transmission level in step S130, but also supplies the reception gain information to the other device with which communication is being performed.

By performing such various processing, the communication device 1201 can be arranged wherein the user can easily perform appropriate communication settings according to the communication environment. Note that the communication device 1202 can also perform similar communication control processing as the communication device 1201. In other words, the communication device 1201 and the communication device 1202 exchange and share information with one another, and can also perform appropriate communication settings according to the communication environment of the other.

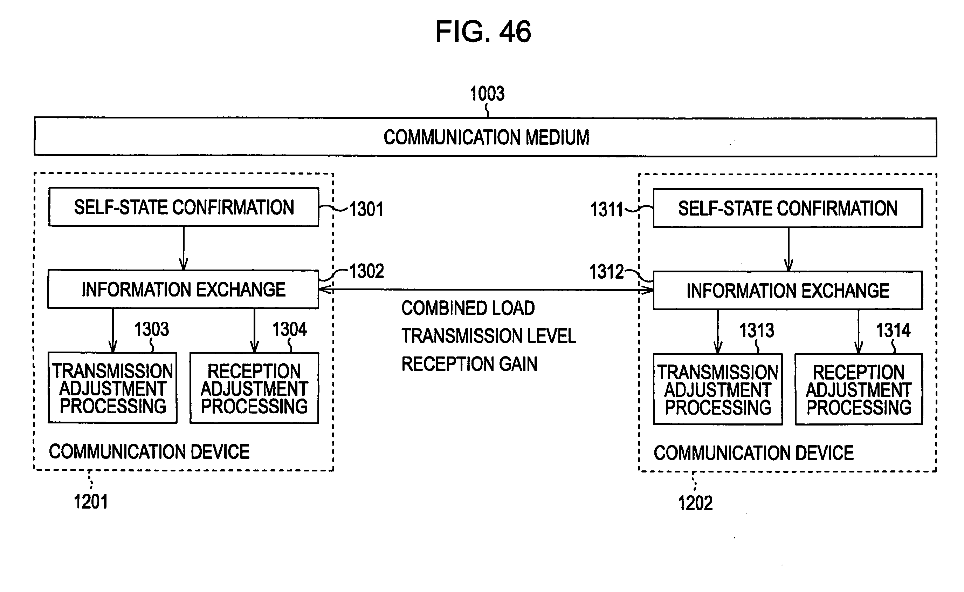

In other words, in the case of the communication system 1200, for example, as illustrated in Fig. 46, the communication device 1201 performs self-state confirmation processing 1301 for confirming the status (communication environment) of itself (the communication device 1201 itself), and independent from this processing, the communication device 1202 also performs self-state confirmation processing 1311 for confirming the status (communication environment) of itself (the communication device 1202 itself). Then by the communication device 1201 performing information exchange processing 1302 and the communication device 1202 performing information exchange processing 1312, information relating to combined load, transmission level, and reception gain obtained in the self-state confirmation processing 1301 and the self-state confirmation processing 1311 can be exchanged and shared.

The communication device 1201 can perform transmission adjustment processing 1303 or reception adjustment processing 1304 using the information relating to combined load, transmission level, and reception gain, which is shared by the information exchange processing 1302. Independently from this, the communication device 1202 can perform transmission adjustment processing 1313 or reception adjustment processing 1314 using the information relating to combined load, transmission level, and reception gain, which is shared by the information exchange processing 1312.

In other words, the communication device 1201 and the communication device 1202 are independent of one another, and can perform appropriate adjustment processing based on the communication environment of each, or can perform adjustment processing on the other (or both) based on the communication environment of one, or can perform adjustment processing of both based on the communication environment of both. Various cases can be imagined as far as communication environments, so by the communication device 1201 and communication device 1202 thus performing communication control processing, the communication system 1200 (communication device 1201 and communication device 1202) not only obtains the advantages described with the communication system 1000, but can appropriately handle more communication environments flexibly. In other words, the breadth widens for communication environments which can be handled by the communication system 1200.

Note that the capacitance Cm 1083 as to the air of the communication medium 1003 (human body) has been described above as being a predetermined constant, but arrangements may be made not restricted to this, and for example, an arrangement may be made wherein by using the body type and so forth of the user which serves as the communication medium 1003, the user can directly or indirectly specify the value of the Cm 1083.

The communication system described above is a communication system for performing communication via a human body or the like, wherein the communication medium 1003 is configured primarily with a human body. Accordingly, values of the parameters of the above-described communication media (Rm 1081, Rm 1082, and Cm 1083) can differ, according to the individual differences of the human bodies (for example weight or surface area and so forth) such as with adult and a child for example.

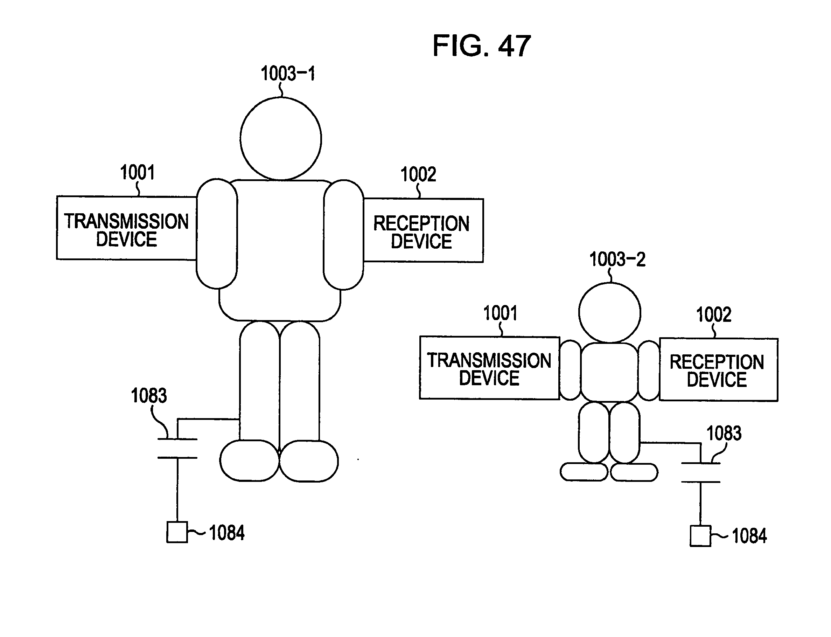

Fig. 47 is a diagram showing an example of individual differences of communication media.

In the case of the left side in Fig. 47, the transmission device 1001 and the reception device 1002 are attached to an adult 1003-1, and an arrangement is made wherein communication is performed with this adult 1003-1 as the communication medium 1003. Conversely, in the case of the right side in Fig. 47, the transmission device 1001 and the reception device 1002 are attached to a child 1003-2, and an arrangement is made wherein communication is performed with this child 1003-2 as the communication medium 1003. As shown in Fig. 47, the adult 1003-1 and child 1003-2 differ from one another as to the body type thereof (height, weight, surface area and so forth). With these differences in body type, for example the capacitance Cm 1083 as to the space of the communication medium 1003 (reference point 1084) also differs. Although omitted from the diagram, the resistor component Rm 1081 and Rm 1082 also differ as to the body type (for example, whether it is an adult 1003-1 or a child 1003-2) of the human body serving as the communication medium 1003.

Therefore, as described above, by the user for example inputting the communication medium information (human body information such as the height or weight or the like of the user serving as the communication medium) which is information relating to the communication medium 1003, the parameter values (Rm 1081, Rm 1082, and Cm 1083) of such communication medium 1003 can be estimated, and settings for transmission level, reception gain, or capacitance and so forth can be performed more appropriately, based on the estimated values thereof.

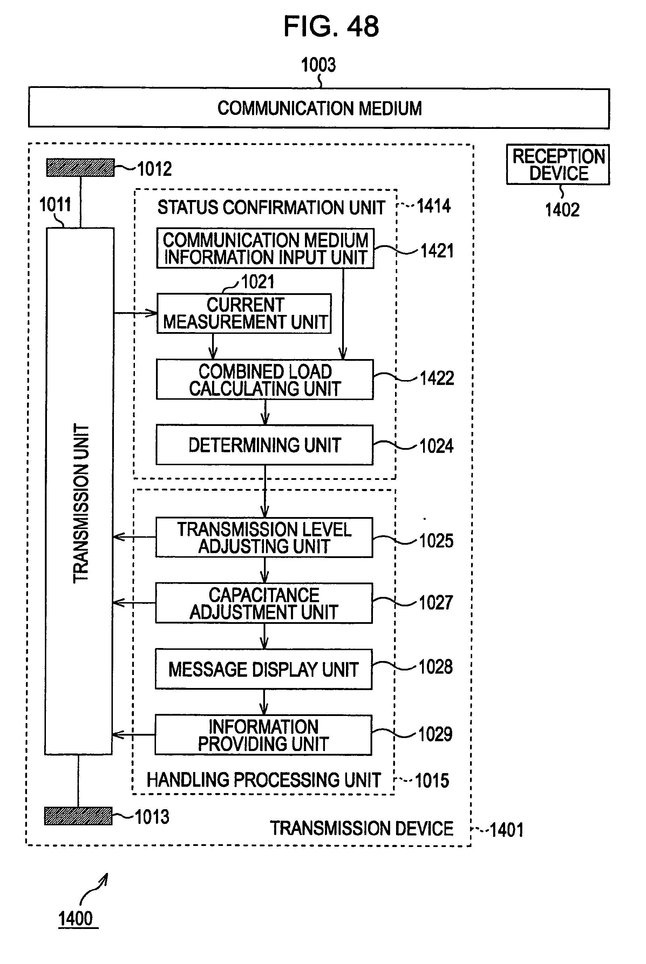

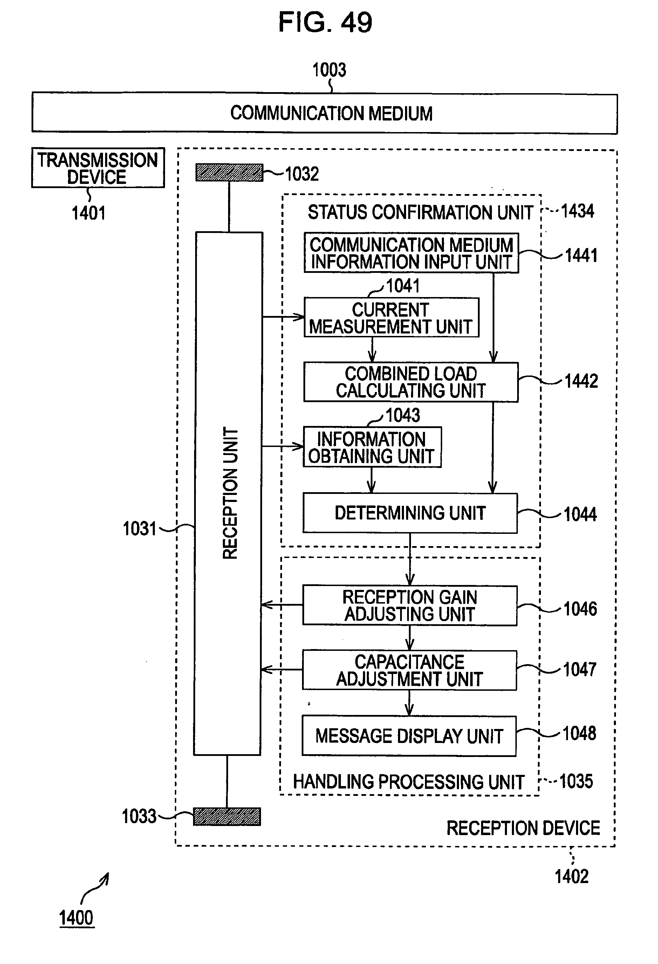

Fig. 48 and Fig. 49 are block diagrams illustrating configuration example of the communication system in this case, and of the various devices configuring the communication system. As shown in Fig. 48 and Fig. 49, the communication system 1400 is configured with a transmission device 1401 and reception device 1402 which exchange signals via the communication medium 1003.

Fig. 48 is a block diagram illustrating a configuration example of the transmission device 1401. In Fig. 48, the status confirmation unit 1414 of the transmission device 1401 has a communication medium information input unit 1421 in addition to the configuration of the status confirmation unit 1014 of the transmission device 1001 in Fig. 35.

The confirmation medium information input unit 1421 has an input unit not shown such as a keyboard, mouse, button, or touch panel, and accepts input of communication medium information (for example, the human body information such as height or weight of the user serving as the communication medium) which is information relating to features (load or capacitance) of the communication medium 1003 by the user or the like, for example. Upon the communication medium information input unit 1421 accepting input of the communication medium information, the communication medium information input therein is supplied to the combined load calculating unit 1422. The combined load calculating unit 1422 calculates the combined load, not only with the measurement results from the current measurement unit 1021, but also using load or capacitance of the communication medium estimated from the communication medium information input into the communication medium information input unit 1421. Thus, the transmission device 1401 can calculate combined load more accurately than in the case of the transmission device 1001, and more appropriate handling processing can be performed.

Fig. 49 is a block diagram illustrating a configuration example of the reception device 1402. In Fig. 49, the status confirmation unit 1434 of the transmission device 1402 has a communication medium information input unit 1441 in addition to the configuration of the status confirmation unit 1034 of the reception device 1002 in Fig. 35.

The communication medium information input unit 1441 has an input unit not shown such as a keyboard, mouse, button, or touch panel, similar to the communication medium information input unit 1421, and accepts input of communication medium information (for example, the human body information such as height or weight of the user serving as the communication medium) which is information relating to features (load or capacitance) of the communication medium 1003 by the user or the like, for example. Upon the communication medium information input unit 1441 accepting input of the communication medium information, the communication medium information input therein is supplied to the combined load calculating unit 1442. The combined load calculating unit 1442 calculates the combined load, not only with the measurement results from the current measurement unit 1041, but also using load or capacitance of the communication medium estimated from the communication medium information input into the communication medium information input unit 1441. Thus, the reception device 1402 can calculate combined load more accurately than in the case of the reception device 1002, and more appropriate handling processing can be performed.

Accordingly, the communication control processing executed with the transmission device 1401 and reception device 1402 is basically similar to the communication control processing executed by the transmission device 1001 and reception device 1002, but a portion of the content of the status confirmation processing differs.

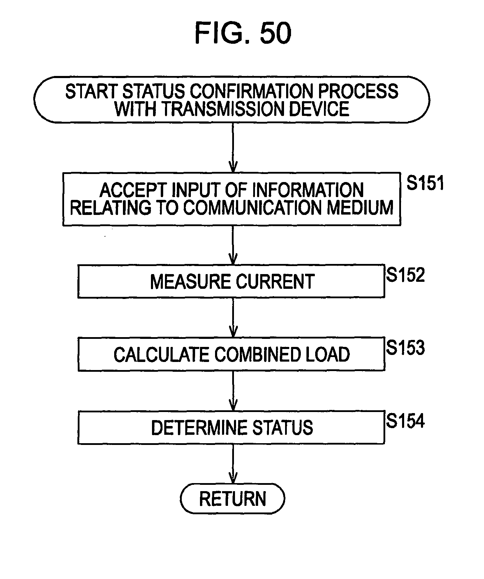

First, the flow of status confirmation processing executed by the transmission device 1401 will be described with reference to the flowchart in Fig. 50.

Upon status confirmation processing being started, in step S151 the communication medium information input unit 1421 of the status confirmation unit 1414 of the transmission unit 1401 accepts input of communication medium information, which is information relating to the communication medium (i.e., human body information of the user to serve as the communication medium, such as height and body weight and the like). Upon receiving communication medium information, the communication medium information input unit 1421 estimates the load and capacitance using an unshown table or the like, for example, based on the communication medium information, supplies the estimated values (load, capacitance, etc.) to the combined load calculating unit 1422, and the flow proceeds to step S152. The processing from step S152 through step S154 is executed in basically the same way as the processing of step S21 through step S23 in Fig. 38. However, in step S153, the combined load calculating unit 1422 calculates the combined load using not only the electric current measurement results obtained in step S152, but also the load and capacitance of the communication medium obtained in step s151 (specifically, Rm 1081 and Cm 1083).

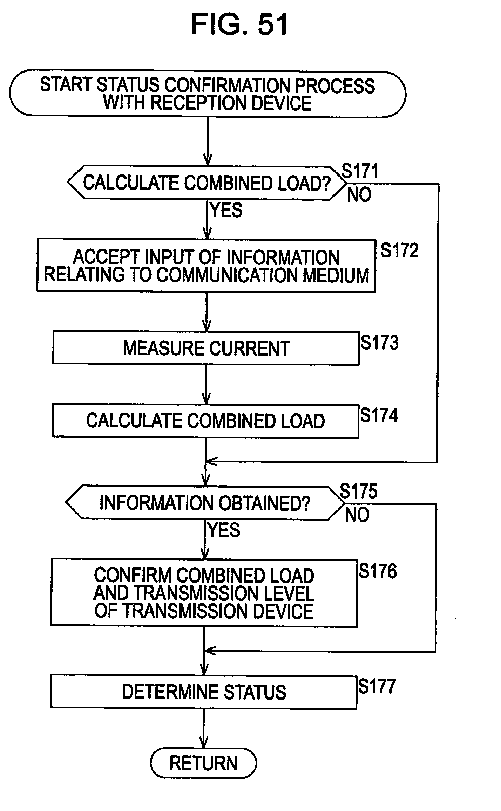

Next, the flow of status confirmation processing executed by the reception device 1402 will be described with reference to the flowchart shown in Fig. 51.

In the case of the status confirmation processing executed by the reception device 1402, in step S171 the communication medium information input unit 1441 of the status confirmation unit 1434 determines whether or not to calculate the combined load, instead of the electric current measurement unit 1041. In the event that determination is made to calculate the combined load, the communication medium information input unit 1441 advances the flow to step S172, and receives input of communication medium information which is information relating to the communication medium (for example, human body information such as the height and body weight and the like of the user to serve as the communication medium). Upon receiving communication medium information, the communication medium information input unit 1441 estimates the load and capacitance using an unshown table or the like, for example, based on the communication medium information, supplies the estimated values (load, capacitance, etc.) to the combined load calculating unit 1442, and the flow proceeds to step S173. In step S173, the electric current measurement unit 1041 measure the current in the same way as with step S62. In step S174, the combined load calculating unit 1442 calculates the combined load using not only the electric current measurement results obtained in step S173, but also the load and capacitance of the communication medium obtained in step S172 (specifically, Rm 1082 and Cm 1083).

In the event that the processing of step S174 ends, or in the event that determination is made in step S171 to not calculate the combined load, the flow proceeds to step S175. the processing of step S175 through step S177 is executed in the same way as with step S64 through step S66.

As described above, the transmission device 1401 and the reception device 1402 can calculate the combined load more accurately, and can perform handling processing more appropriately.

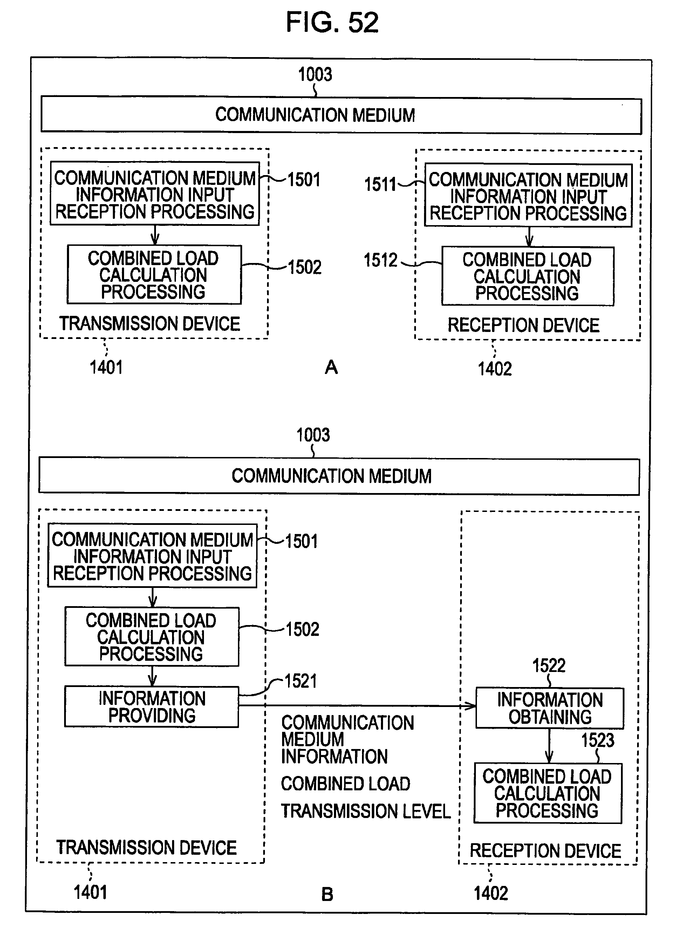

That is to say, as shown in Fig. 52A for example, in the case of this communication system 1400, the transmission device 1401 can use the load and capacitance and the like estimated from the communication medium information (e.g., human body information such as the height and body weight and the like of the user to serve as the communication medium) input by the communication medium information input accepting processing 1501, for the combined load calculating processing 1502. Independently from this, the reception device 1402 can use the load and capacitance and the like estimated from the communication medium information (e.g., human body information such as the height and body weight and the like of the user) input by the communication medium information input accepting processing 1511, for the combined load calculating processing 1512. Thus, the transmission device 1401 and the reception device 1402 can each independently reflect the communication medium information (e.g., human body information such as the height and body weight and the like of the user) in adjustment processing according to the communication environment. That is to say, in this case, there is no need to unify the standards of the devices, and each device can use the communication medium information for adjustment processing as necessary.

Also, as shown in Fig. 52B for example, with the communication system 1400, the transmission device 1401 not only uses the communication medium information (e.g., human body information such as the height and body weight and the like of the user) input by the communication medium information input accepting processing 1501 for the combined load calculation processing 1502, but also can supply to the reception device 1402 in the information providing processing 1521.

In response the reception device 1402 executes the information obtaining processing 1522 to obtain the communication medium information (e.g., human body information such as the height and body weight and the like of the user) along with information relating to the combined load and transmission level, and can reflect the load and capacitance and the like of the communication medium estimated from the communication medium information in the combined load calculating processing 1523.

Thus, the reception device 1402 can calculate the combined load, taking into consideration the communication medium information input to the transmission device 1401. That is to say, in the case of this communication system 1400, just by inputting communication medium information (e.g., human body information such as the height and body weight and the like of the user) to the transmission device 1401, the user can reflect the communication medium information (e.g., human body information such as the height and body weight and the like of the user) in the combined load calculation processing of both the transmission device 1401 and the reception device 1402 (can calculate the combined load more accurately, more easily).

Note that the method using this communication medium information can also be applied to a communication system made up of multiple communication devices capable of transmission/reception.

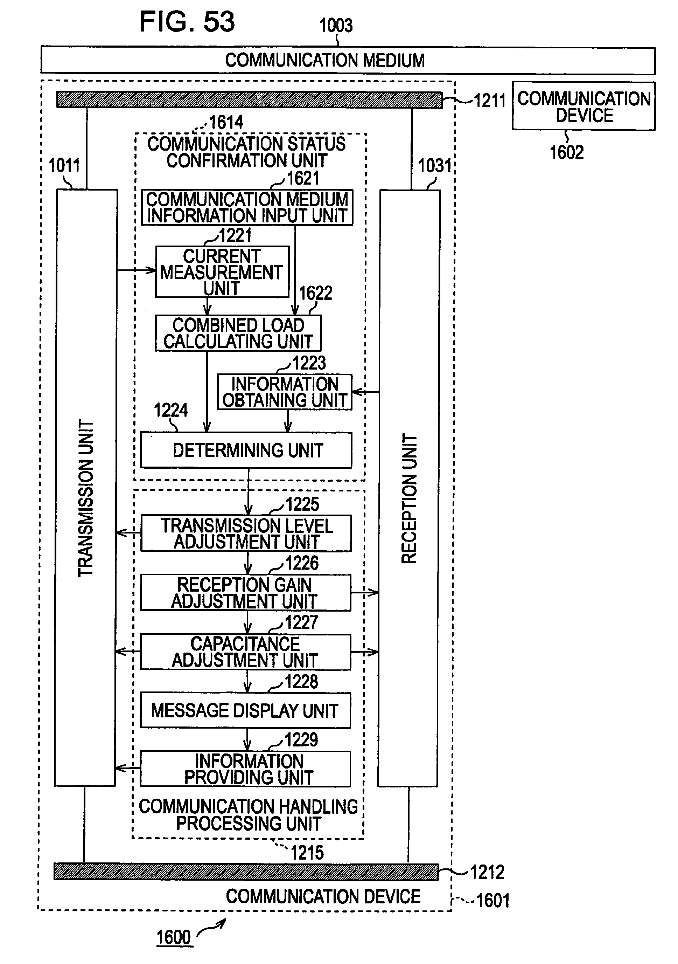

Fig. 53 is a block diagram illustrating a configuration example of a communication system in this case. The communication system 1600 has a communication device 1601 and a communication device 1602 which perform communication with each other via a communication medium 1003. Note that the communication device 1601 and the communication device 1602 have the same configuration, and perform the same processing. Accordingly, in the following, only the communication device 1601 will be described, and description of the communication device 1602 will be omitted, but it is to be understood that the description of the communication device 1601 is applicable to the communication device 1602.

In Fig. 53, a communication status confirmation unit 1614 of the communication device 1601 has a communication medium information input unit 1621, in addition to the configuration of the communication status confirmation unit 1214 of the communication device 1201. Also, the communication status confirmation unit 1614 has a combined load calculation unit 1622 instead of the combined load calculation unit 1222. The communication medium information input unit 1621 has an unshown input unit made up of a keyboard, mouse, buttons, touch panel, or the like, as with the communication medium information input unit 1421, and accepts input of communication medium information (e.g., human body information such as the height and body weight and the like of the user) regarding the communication medium 1003 from the user or the like for example. Upon accepting input of the communication medium information, the communication medium information input unit 1621 estimates the load and capacitance of the communication medium 1003 from the input communication medium information, and supplies the values thereof to the combined load calculation unit 1622. The combined load calculation unit 1622 calculates the combined load using not only the measurement results by the electric current measurement unit 1221, but also uses the load and capacitance of the communication medium 1003 estimated from the communication medium information input from the communication medium information input unit 1621. Thus, the communication device 1601 can calculate the combined load more accurately than with the case of the communication device 1201, and can perform more appropriate handling processing.

Accordingly, the communication control processing executed by the communication device 1601 is basically the same as the communication control processing executed by the communication device 1201, but a part of the status confirmation processing differs.

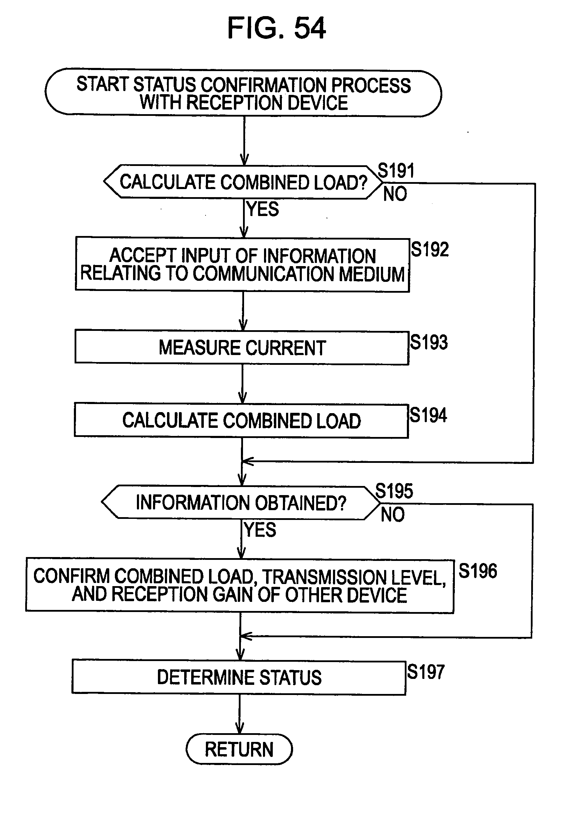

An example of the flow of status confirmation processing with the communication device 1601 will be described with reference to the flowchart in Fig. 54, this processing basically being performed in the same way as the status confirmation processing described with reference to the flowchart in Fig. 44.

That is to say, the processing of step S191, step S193, and step S195 through step S197, is basically performed in the same way as with step S101, step S102, and step S104 through step S106. Note however that step S191 is executed by the communication medium information input unit 1621 instead of the electric current measurement unit 1221.

In step S192, the communication medium information input unit 1621 receives input of communication medium information (e.g., human body information such as the height and body weight and the like of the user) which is information regarding the communication medium, and supplies the load and capacitance of the communication medium estimated from the input communication medium information to the combined load calculating unit 1622. In step S194, the combined load calculating unit 1622 calculates the combined load based on not only the electric current value obtained from the electric current measurement unit 1221 in step S193, but also on the load and capacitance of the communication medium, estimated by the processing in step S192.

Thus, the communication device 1601 can calculate the combined load taking into account the communication medium information (e.g., human body information such as the height and body weight and the like of the user) as well. That is to say, the communication device 1601 can calculate the combined load more accurately.

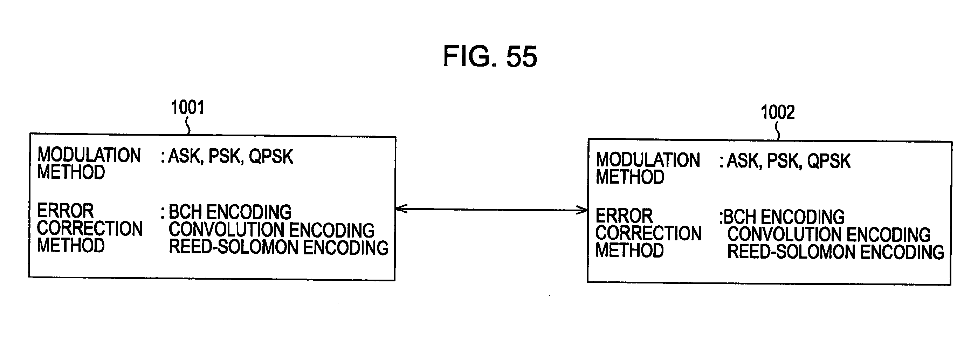

While adjusting the parameters for communication settings, such as the transmission level, reception gain, capacitance, and so forth, in accordance with the communication environment, parameters other than those described above may also be set. For example, the modulation method and error correction method and the like used in communication may be selected and determined as shown in Fig. 55.

Examples of modulation methods include ASK (Amplitude Shift Keying), PSK (Phase Shift Keying), QPSK (Quadrature Phase Shift Keying), OFDM (Orthogonal Frequency Division Multiplexing), and so forth. Of course, other modulation methods may be included as well. Examples of error correction methods include BCH (Bose-Chaudhuri-Hocquenghem) coding, convolution coding, Reed-Solomon coding, and so forth. Of course, other error correction methods may be included. Also, error detection methods may be included besides error correction methods.

For example, in the event that the transmission/reception environment is favorable, the transmission device 1001 and reception device 1002 suppress electric power consumption by using a relatively simple modulation method and relatively simple error correction method. Conversely, in the event that the transmission/reception environment is poor, the transmission device 1001 and reception device 1002 switch to a modulation method with more gain so that information can be accurately transmitted and received, in the same way as with the transmission level and reception gain, and also switches to a higher-level error correction method.

Thus, enabling the optimal modulation method and error correction method to be selected according to the communication environment allows unnecessary increase in transmission level to be suppressed. That is to say, situations wherein poor communication environment excessively increases the transmission level and transmission/reception of unnecessarily strong airwaves is performed can be avoided. Also, power consumption can be reduced, since the transmission level and reception gain are suppressed in this way.

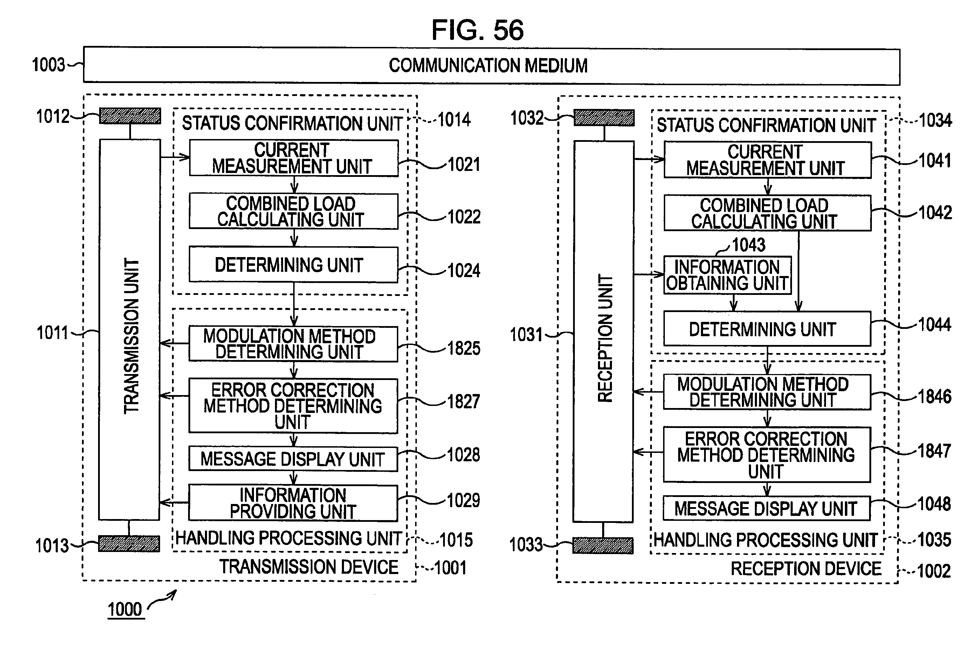

Fig. 56 is a diagram illustrating a detailed configuration example of the transmission device 1001 and reception device 1002 of the communication system 1000 in that case.

In the event of the example illustrated in Fig. 56, the handling processing unit 1015 of the transmission device 1001 includes a modulation method determining unit 1825 for determining a modulation method to be employed for transmission processing by the transmission unit 1011, and an error correction method determining unit 1827 for determining an error correction method to be employed for transmission processing by the transmission unit 1011 instead of the transmission level adjusting unit 1025 and capacitance adjustment unit 1027 included in the example in Fig. 35.

The modulation method determining unit 1825 determines a modulation method as described above based on the status determination results determined at the determining unit 1024 of the status confirmation unit 1014. The modulation method determining unit 1827 determines an error correction method as described above based on the status determination results determined at the determining unit 1024 of the status confirmation unit 1014.

In this case, the information providing unit 1029 controls the transmission unit 1011 to supply the modulation method determined at the modulation determining unit 1825, and the error correction method determined at the error correction method determining unit 1827 to the reception device 1002 along with the information indicating the status determination results and combined load.

In the event of the example illustrated in Fig. 56, the handling processing unit 1035 of the reception device 1002 includes a modulation method determining unit 1846 for determining a modulation method (i.e., demodulation method) to be employed for reception processing by the reception unit 1031, and an error correction method determining unit 1847 for determining an error correction method to be employed for reception processing by the reception unit 1031 instead of the reception gain adjustment unit 1046 and capacitance adjustment unit 1047 included in the example in Fig. 35.

The modulation method determining unit 1846 determines a modulation (demodulation) method as described above based on the status determination results determined at the determining unit 1044 of the status confirmation unit 1034, and the information relating to the modulation method determined at the transmission device 1001, which is supplied from the determining unit 1044. The error correction method determining unit 1847 determines an error correction method as described above based on the status determination results determined at the determining unit 1044 of the status confirmation unit 1034, and the information relating to the error correction method determined at the transmission device 1001, which is supplied from the determining unit 1044.

That is to say, in this case, the determining unit 1044 determines the status of the reception device 1002 based on the combined load calculated by the combined load calculating unit 1042, and supplies the information relating the modulation method and error correction method determined at the transmission device 1001, which is supplied from the transmission device 1001, and is obtained under control of the information obtaining unit 1043 to the handling processing unit 1035 along with the determination results.

For example, the modulation method determining unit 1846 employs the modulation method (demodulation method corresponding to the modulation method) determined at the transmission device 1001 if possible in light of the status of the reception device 1002. Also, for example, the error correction method determining unit 1847 employs the error correction method determined at the transmission device 1001 if possible in light of the status of the reception device 1002.

The communication control processing and status confirmation processing to be executed by the transmission device 1001 in this case is basically the same as those described with reference to the flowcharts in Fig. 37 and Fig. 38.

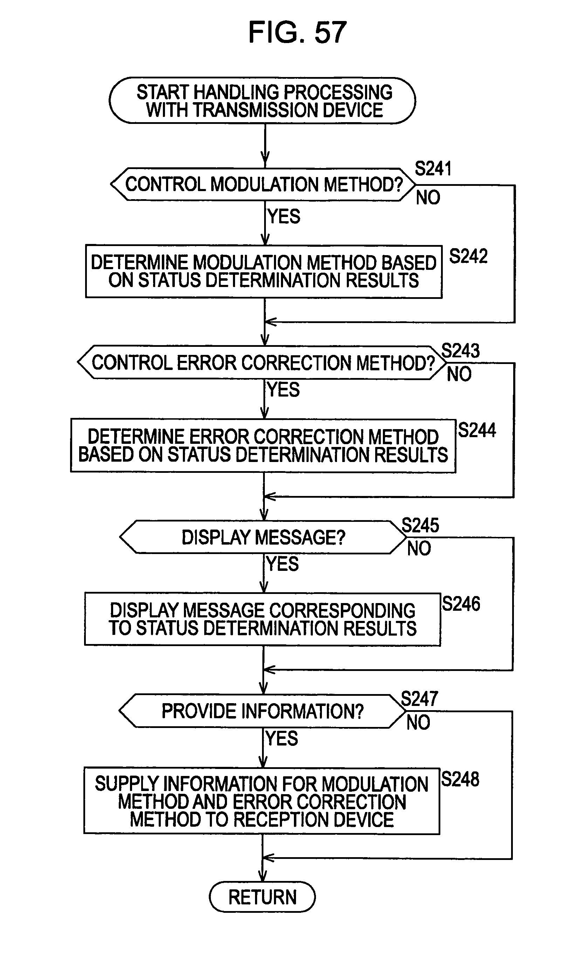

However, in this case, the handling processing illustrated in the flowchart in Fig. 39 is performed such as illustrated in the flowchart in Fig. 57.

That is to say, the modulation method determining unit 1825 determines in step S241 whether to control the modulation method based on the status determination results which are supplied from the determining unit 1024, and in the event that determination is made to control the modulation method, proceeds to the processing in step S242, and determines the modulation method based on the status determination results. For example, the modulation method determining unit 1825 selects the most appropriate method from the candidates of multiple modulation methods prepared beforehand based on whether or not a communication environment is a preferable state. Upon the processing in step S242 being completed, the modulation method determining unit 1825 supplies the information obtained from the determining unit 1024 of the status confirmation unit 1014, and the information relating to the determined modulation method to the error correction method determining unit 1827, and proceeds to the processing in step S243. Also, in step S241, in the event that determination is made not to control the modulation method, for example, such that a predetermined modulation method which has been determined as an initial value beforehand is employed, the modulation method which is currently selected is maintained, or the like, the modulation method determining unit 1825 omits the processing in step S242, supplies the information which is supplied from the determining unit 1024 of the status confirmation unit 1014 to the error correction method determining unit 1827 along with the information relating to the current modulation method, and proceeds to the processing in step S243.

In step S243, the error correction method determining unit 1827 determines whether to control the error correction method based on the status determination results which are supplied via the modulation method determining unit 1825, and in the event that determination is made to control the modulation method, proceeds to the processing in step S244, and determines the error correction method based on the status determination results. For example, the error correction method determining unit 1827 selects the most appropriate method from the candidates of multiple error correction methods prepared beforehand based on whether or not a communication environment is a preferable state.

Upon completing the processing in step S244, the error correction method determining unit 1827 supplies the information acquired from the modulation method determining unit 1825, and the information relating to the determined error correction method to the message display unit 1028, and proceeds to the processing in step S245. Also, in step S243, in the event that determination is made not to control the error correction method, for example, such that a predetermined error correction method which has been determined as an initial value beforehand is employed, the error correction method which is currently selected is maintained, or the like, the error correction method determining unit 1827 omits the processing in step S244, supplies the information which is supplied from the modulation method determining unit 1825 to the message display unit 1028 along with the information relating to the current error correction method, and proceeds to the processing in step S245.

In step S245, the message display unit 1028 determines whether to display a message based on the status determination results, as with the case of step S45, and in the event that determination is made to display a message, proceeds to the processing in step S246, and displays a message or image as to the user on an unshown display based on the status determination results, as with the case of step S46. (That is to say, the message display unit 1028 performs displaying of a message in accordance with the communication environment.) Upon completing the processing in step S246, the message display unit 1028 supplies various information which is supplied from the error correction method determining unit 1827 to the message display unit 1028, and proceeds to the processing in step S247. Also, in step S245, in the event that determination is made not to display a message, the message display unit 1028 omits the processing in step S246, and proceeds to the processing in step S247.

In step S247, the information providing unit 1029 determines whether to provide information based on the status determination results which are supplied via the message display unit 1028, and in the event that determination is made to provide information, proceeds to the processing in step S248, and controls the transmission unit 1011 to provide the information indicating the modulation method and the error correction method employed at the transmission device 1001 to the reception device 1002. At this time, an arrangement may be made wherein the information providing unit 1029 also provides the information relating to another communication environment such as the combined load of the transmission device 1001, and so forth to the reception device 1002 as necessary. Upon completing the processing in step S248, the information providing unit 1029 completes the handling processing, and returns to the processing in step S2 in Fig. 37, thereby completing the communication control processing. Also, in step S247, in the event that determination is made not to provide the information, the information providing unit 1029 omits the processing in step S248, and completes the handling processing.

Note that the status confirmation processing by the reception device 1002 is executed in the same way in the case of the flowchart in Fig. 40. Also, the reception device 1002 executes the handling processing illustrated in the flowchart in Fig. 41 basically in the same way in the above case of the transmission device 1001 with reference to the flowchart in Fig. 57. Accordingly, detailed description thereof will be omitted. However, such as the flowchart illustrated in Fig. 41, the reception device 1002 does not transmit information like the transmission device 1001, so in the event of the handling processing using the reception device 1002, the processing in step S247 and step S248 in Fig. 57 is omitted.

Thus, the transmission device 1001 and the reception device 1002 can set a modulation method, an error correction method, and so forth readily appropriately depending on a communication environment.

That is to say, in the event that the transmission device 1001 and the reception device 1002 determine a modulation method or an error correction method as handling processing, the respective configurations differ only in the handling processing unit and the content of the handling processing, the configuration of each unit and each processing other than that is basically the same as the case of the transmission device 1001 and the reception device 1002 described with reference to the respective drawings up to Fig. 41. Accordingly, control of the modulation method and error correction can be applied to each case described with reference to Fig. 42 through Fig. 54 in the same way.

That is to say, for example, control of the modulation method and error correction method can be applied to the communication device 1201 and the communication device 1202 of the communication system 1200 illustrated in Fig. 43, and the communication handling processing unit 1215 may include the modulation method determining unit 1825 and the error correction method determining unit 1827 instead of the transmission level adjustment unit 1225, reception gain adjustment unit 1226, and the capacitance adjustment unit 1227. In this case, consequently, the handling processing executed by the communication handling processing unit 1215 performs control of the modulation method and error correction method instead of transmission level adjustment, reception level adjustment, and capacitance adjustment, in the same way as the above case of the transmission device 1001 and the reception device 1002, so that detailed description thereof will be omitted.

Of course, an arrangement may be made wherein determination of the modulation method, and determination of the error correction method is performed at one of the communication devices of the communication system 1200, and the determined method is unconditionally employed at the other communication device, or an arrangement may be made wherein transmission level adjustment, reception gain adjustment, and capacitance adjustment are not deleted but remained, and control of the modulation method and control of the error correction method is only added.

Also, in addition to the above modulation method and error correction method, the frequency of a carrier signal to be transmitted or received may be controlled, for example. For example, the communication device, transmission device, or reception device scans the most appropriate frequency, and performs communication by taking the signal of a frequency band having the most appropriate properties as a carrier signal.

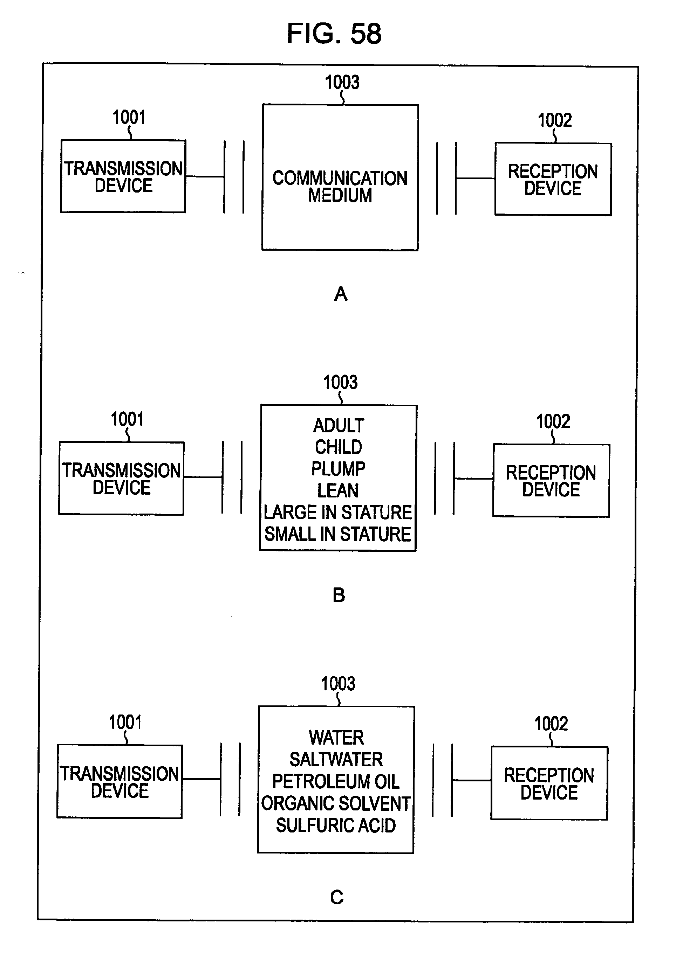

For example, in the case of wireless communication, a communication medium is the air which is generally constant, but the communication medium 1003 of the communication system 1000 (Fig. 58A) may be any of a solid or solution or the like, and the properties as a communication medium such as capacitance, resistance value, and so forth can be extremely fluctuated depending on quality of material, size, shape, and so forth thereof. For example, in the event that a human body is taken as the communication medium 1003, as illustrated in Fig. 58B, the properties as a communication medium are changed depending on whether the communication medium 1003 is an adult, a child, heavy, slim, large, small, or the like.

Similarly, for example, as illustrated in Fig. 58C, the properties of the communication medium 1003 as a communication medium are changed depending on the case wherein the principal components of the communication medium 1003 is the water, the case of salt water, the case of oil, the case of organic solvent, the case of sulfuric acid, or the like.

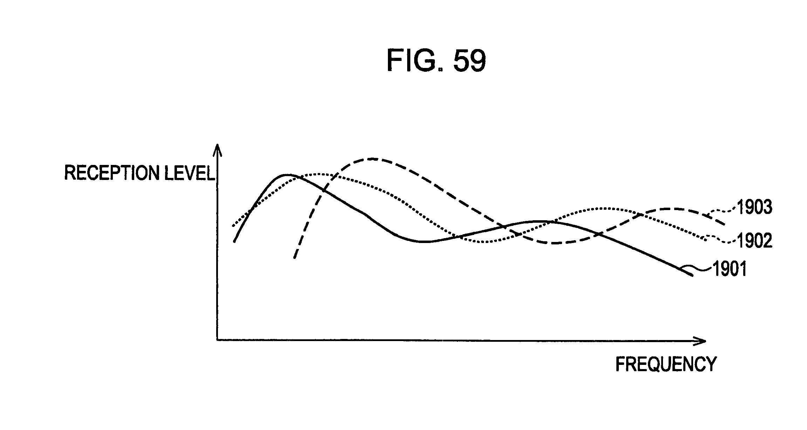

Thus, upon the material, shape, size, or the like of the communication medium 1003 changing, the frequency properties in the communication between the transmission device 1001 and the reception device 1002 are sometimes changed such as curves 1901 through 1903 of the graph illustrated in Fig. 59.

That is to say, constantly performing communication with the same frequency as a carrier signal (carrier) results in that the transmission device 1001 and the reception device 1002 performs communication utilizing a small gain (inefficient) frequency band depending on the material, shape, size, or the like of the communication medium 1003, which needs to unnecessarily raise a transmission gain or reception sensitivity, leading to a risk of increasing power consumption.

Also, a method can be also conceived wherein the information relating to a communication medium is input by the user, and communication settings are performed based on the input, but it is difficult to identify frequency properties correctly by only user input in some cases, for example, such as a case wherein the transmission device 1001 and the reception device 1002 regard a liquid flowing in a certain tube as the communication medium 1003, and perform communication via that tube, or a case wherein the communication medium 1003 (flowing liquid) itself changes.

Thus, the most appropriate frequency of a carrier signal sometimes changes depending on a communication environment, so is not always unchanged, and also with a method for determining a frequency based on user input, a case wherein it is difficult to optimize a frequency as to a communication environment can be conceived.

Consequently, an arrangement is made wherein the communication device (including the transmission device and reception device) searches a frequency having a great gain (searches the frequency properties of a communication environment of the outside of the device), for example, prior to starting communication, and performs frequency settings of a carrier signal based on the search results.

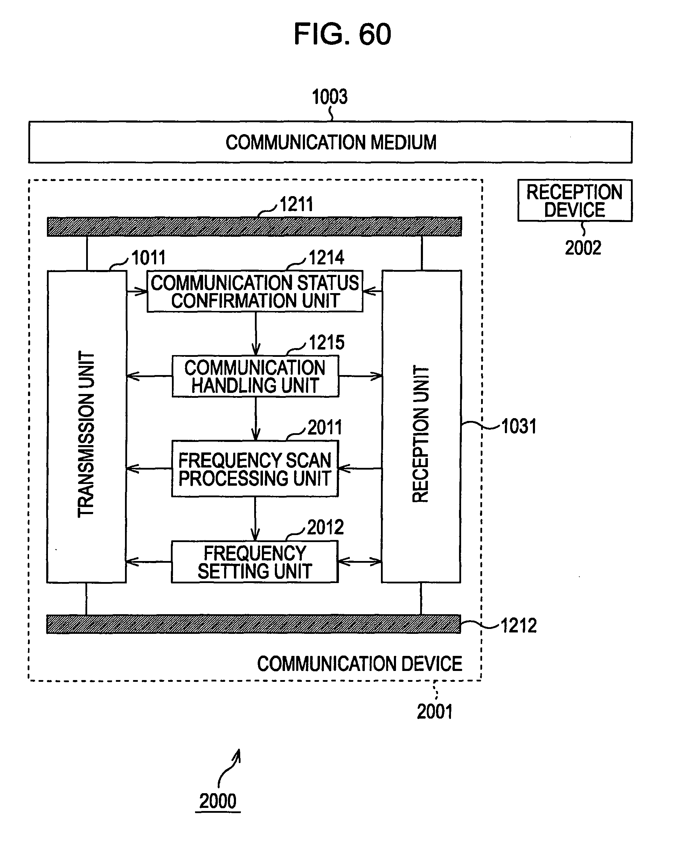

A configuration example of the communication device in that case is illustrated in Fig. 60. The communication system 2000 illustrated in Fig. 60 includes a communication device 2001 and a communication device 2002. The communication device 2001 and communication device 2002 are configured so as to search the frequency properties of a communication environment (principally, communication medium 1003), for example, prior to starting communication or the like, obtain the most appropriate frequency (frequency having a great gain) of a carrier signal, and perform communication using the signal of frequency thereof as a carrier signal, as described above.

That is to say, the communication device 2001 includes the same configuration as the communication device 1201 in Fig. 43 as illustrated in Fig. 60, and further includes a frequency scan processing unit 2011 for identifying the most appropriate frequency of a carrier signal, and a frequency setting unit 2012 for setting the frequency of a carrier signal to the most appropriate frequency. The communication device 2002 has the same configuration as the communication device 2001, and description thereof will be omitted.

The frequency scan processing unit 2011 operates in collaboration with the frequency scan processing unit of the communication device 2002 serving as a communication partner, transmits/receives a signal while changing a frequency with a certain transmission level, and measures reception level thereof regarding each frequency, thereby identifying a frequency which provides the maximum gain. The frequency setting unit 2012 controls the transmission unit 1011 and the reception unit 1031 to set the frequency identified in the processing of the frequency scan processing unit 2011 as the frequency of a carrier signal. The transmission unit 1011 and the reception unit 1031 perform communication as to the communication device 2002 using carrier signal thereof.

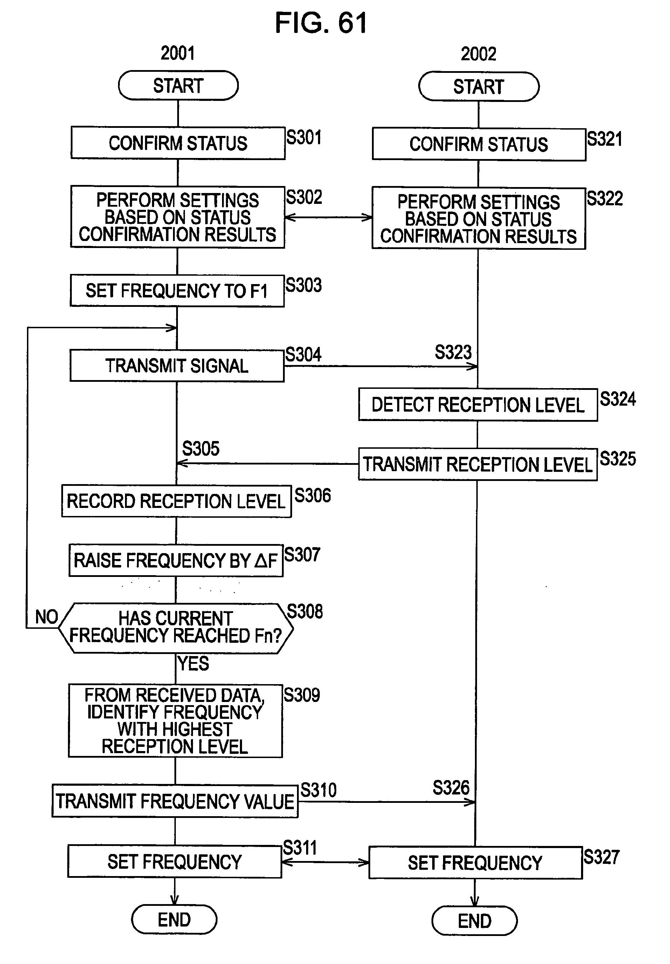

Description will be made regarding a specific processing flow example with reference to the flowchart in Fig. 61.

First, the communication status confirmation unit 1214 of the communication device 2001 performs processing such as calculating combined load, and so forth to confirm a communication status in step S301. In step S302, the communication handling unit 1215 of the communication device 2001 performs settings such as a transmission level, a reception gain, capacitance, and so forth based on the status determination results. At this time, the communication device 2001 performs communication as to the communication device 2002 to give and receive information as necessary. Similarly, the communication status confirmation unit 1214 (not shown) of the communication device 2002 confirms a status relating communication in step S321. In step S322, the communication handling unit 1215 of the communication device 2002 performs communication settings based on the status confirmation results.

Upon the settings such as a transmission level, a reception level, capacitance, and so forth based on a communication environment being completed, the frequency scan processing unit 2011 of the communication device 2001 sets the frequency of a carrier signal to a predetermined frequency F1 (initial value) to perform frequency scan processing for identifying the most appropriate frequency of a carrier signal in step S303, and controls the transmission unit 1011 to transmit carrier signal thereof (e.g., sine wave) to the communication device 2002 in step S304. The transmission level of the transmission signal at this time is the transmission level set in the processing in step S302 (a predetermined certain transmission level in the case of not setting the signal level in the processing in step S302).

The frequency scan processing unit 2011 of the communication device 2002 controls the reception unit 1031 of the communication device 2002 to receive this carrier signal in step S323, and upon receiving the carrier signal, detects the reception level of the carrier signal in step S324, controls the transmission unit 1011 of the communication device 2002 to transmit a signal including the information of the detected reception level to the communication device 2001.

The frequency processing unit 2011 of the communication device 2001 controls the reception unit 1031 of the communication device 2001 to receive a signal including the information of this reception signal in step S305, and upon receiving the signal including the information of this reception level, obtains the information of the reception level from the received signal to record the value of the reception level corresponding to the frequency of the transmitted carrier signal in step S306. In step S307, the frequency scan processing unit 2011 of the communication device 2001 raises (shifts) a predetermined certain width $\Delta F$ from the current value of the frequency of the carrier signal. In step S308, the frequency processing unit 2011 of the communication device 2001 determines whether or not the current frequency of the carrier signal has reached the predetermined certain frequency Fn (maximum value).

As described above, in the event that determination is made that the current frequency of the carrier signal which is transmitted on a trial basis has reached the Fn, the frequency scan processing unit 2011 of the communication device 2001 returns to the processing in step S304 to continue the transmission of the carrier signal, and executes the subsequent processing repeatedly.

That is to say, the frequency scan processing unit 2011 of the communication device 2001 repeats the processing in step S304 through step S308, thereby transmitting the carrier signal repeatedly while raising the frequency of the carrier signal from the initial value F1 (minimum value) to the final value Fn (maximum value) by $\Delta F$, measuring the reception level of each frequency using the communication device 2002, and recording the value of reception level thereof correlating with each frequency. At this time, the frequency scan processing unit 2011 of the communication device 2002 repeats the processing in step S323 through step S325 corresponding to such processing.

Subsequently, in step S308, in the event that determination is made that the current frequency of the carrier signal has reached the Fn, the frequency scan processing unit 2011 of the communication device 2001 proceeds to the processing in step S309. In step S309, the frequency scan processing unit 2011 of the communication device 2001 identifies the frequency of which reception level becomes the maximum based on the information of the reception level for each frequency thus collected and recorded.

Upon identifying the frequency of which reception level becomes the maximum, the frequency scan processing unit 2011 of the communication device 2001 controls the transmission unit 1011 of the communication device 2001 to transmit the signal including the information indicating the value of the identified frequency in step S310. The frequency scan processing unit 2011 of the communication device 2002 controls the reception unit 1031 of the communication device 2001 to receive signal thereof, and obtain the value of the frequency identified at the frequency scan processing unit 2011 of the communication device 2001.

In step S311, the frequency setting unit 2012 of the communication device 2001 sets the frequency searched at the frequency scan processing unit 2011 as the frequency of the carrier signal. In step S326, the frequency setting unit 2012 of the communication device 2002 which obtained the information of the frequency sets the frequency of the carrier signal in step S327. Note that at this time, the frequency setting unit 2012 of the communication device 2001, and the frequency setting unit 2012 of the communication device 2002 communicate each other as necessary, and mutually share information.

Thus, the frequency scan processing unit 2011 of the communication device 2001, and the frequency scan processing unit 2011 of the communication device 2002 can set the frequency of the carrier signal to be employed in the subsequent actual communication so as to become most appropriate for a communication environment.

Note that with the above description has been made wherein the frequency scan processing unit 2011 and frequency setting unit 2012 of the communication device 2001 execute the left-sided flow in Fig. 61, and the frequency scan processing unit 2011 and frequency setting unit 2012 of the communication device 2002 execute the right-sided flow in Fig. 61, but an arrangement is not restricted to this, an arrangement may be made wherein the frequency scan processing unit 2011 and frequency setting unit 2012 of the communication device 2001 execute the right-sided flow in Fig. 61, and the frequency scan processing unit 2011 and frequency setting unit 2012 of the communication device 2002 execute the left-sided flow in Fig. 61. Regarding whether the frequency scan processing unit 2011 executes the right-sided flow in Fig. 61 or the left-sided flow in Fig. 61 may be predetermined, or may be determined by the relation as to the communication partner (e.g., priority) or the like prior to transmitting/receiving the carrier signal.

Further, it is desirable to set the setting timing of the frequency of the carrier signal using the frequency setting unit 2012 so as not to perform communication under a state wherein the mutual settings of the frequency of the carrier signal differ from each other, and so as to obtain the same time (same timing) between the communication device 2001 and the communication device 2002 as same as possible. For example, an arrangement may be made wherein upon performing the processing for transmitting the value of the frequency in step S310 (from the reception processing in step S326), the settings are performed after predetermined time, thereby synchronizing the setting timing of both.

Further, an arrangement may be made wherein one basic communication frequency is set, and the frequency is synchronized by performing communication based on this basic frequency during frequency scan. Further, an arrangement may be made wherein a modification method of the frequency is set based on predetermined table data, thereby giving contrast between a portion searched finely and a portion searched roughly.

Also, such as the flowchart illustrated in Fig. 61, the communication device 2002 which receives the carrier signal may obtain the most appropriate frequency, and propagate the frequency value alone without sending back the detected signal level to the communication device 2001 one after another.

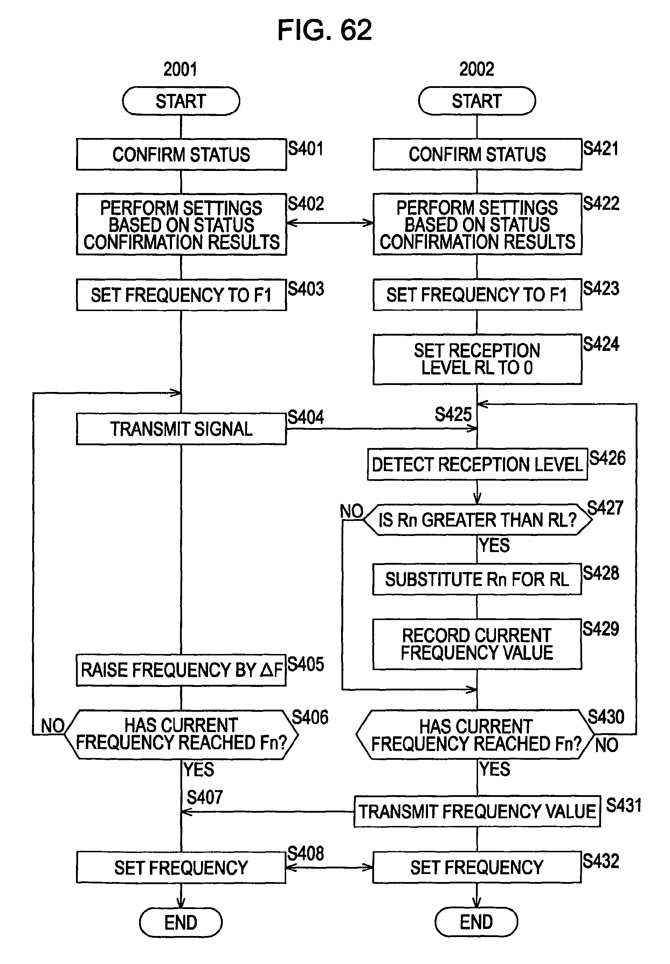

The processing flow in that case will be described with reference to the flowchart in Fig. 62.

As with the case of Fig. 61, the communication status confirmation unit 1214 of the communication device 2001 confirms a communication status in step S401, and the communication handling processing unit 1215 of the communication device 2001 performs settings such as a transmission level, a reception gain, capacitance, and so forth in step S402. Similarly, with the communication device 2002, the communication status confirmation unit 1214 (not shown) confirms a state relating to communication in step S421, and the communication handling processing unit 1215 performs communication settings based on the status confirmation results in step S422.

Upon the transmission level, reception gain, capacitance, and so forth based on a communication environment being set, the frequency scan processing unit 2011 of the communication device 2001 sets the frequency of the carrier signal to the predetermined certain frequency F1 (initial value) in step S403. Also, the frequency scan processing unit 2011 of the communication device 2002 sets the frequency of the carrier signal to the initial value F1 in the same way in step S423. The frequency scan processing unit 2011 of the communication device 2002 further sets the reference value RL of a reception level to zero in step S424.

Next, the communication device 2001 performs the processing in step S404 at predetermined timing wherein the processing in step S424 has been surely completed, and controls the transmission unit 1011 to transmit the carrier signal (e.g., sine wave) to the communication device 2002. The transmission level of the transmission signal at this time is the transmission level set in the processing in step S402 (a predetermined certain transmission level in the case of not setting the signal level in the processing in step S402).

The frequency scan processing unit 2011 of the communication device 2002 controls the reception unit 1031 of the communication device 2002 to receive this carrier signal in step S425, and upon receiving the carrier signal, detects the reception level of the carrier signal in step S426. The frequency scan processing unit 2011 of the communication device 2002 determines whether or not the detected reception level Rn is greater than the reference value RL in step S427, and only in the event that determination is made that the detected reception level Rn is greater than the reference value RL, updates the value of the reference value RL to the value of the reception level Rn in step S428, and records the reference value RL as the current frequency value in step S429. Upon completing the processing in step S429, the frequency scan processing unit 2011 of the communication device 2002 proceeds to the processing in step S430.

In step S427, in the event that determination is made that the reception level Rn is not greater than the reference value RL, the frequency scan processing unit 2011 of the communication device 2002 omits the processing in step S428 and step S429, and proceeds to the processing in step S430.

In step S430, the frequency scan processing unit 2011 of the communication device 2002 determines whether or not the current frequency of the carrier signal to be received has reached the predetermined certain frequency Fn (maximum value), and in the event that determination is made not to reach the Fn, returns to the processing in step S425, and repeats the subsequent processing.

In response to such processing, the frequency scan processing unit 2011 of the communication device 2001 transmits the carrier signal in step S404, following which raises (shifts) the frequency of the carrier signal by the predetermined certain width ΔF from the current value in step S405, and determines whether or not the current frequency of the carrier signal has reached the maximum value Fn in step S406.

In the event that determination is made that the current frequency of the carrier signal has not reached the Fn, the frequency scan processing unit 2011 of the communication device 2001 returns to the processing in step S404 to continue the transmission of the carrier signal, and executes the subsequent processing repeatedly.

That is to say, the frequency scan processing unit 2011 of the communication device 2001 repeats the processing in step S404 through step S406, thereby transmitting the carrier signal repeatedly while raising the frequency of the carrier signal from the initial value F1 (minimum value) to the final value Fn (maximum value) by ΔF. On the contrary, the frequency scan processing unit 2011 of the communication device 2002 repeats the processing in step S425 through step S430, as described above.

In step S430, in the event that determination is made that the current frequency of the carrier signal has reached the maximum value Fn, the frequency scan processing unit 2011 of the communication device 2002 proceeds to the processing in step S431, and controls the transmission unit 1011 of the communication device 2002 to transmit the signal including the frequency value (reference value RL) finally recorded in the processing in step S429 during such a processing flow to the information communication device 2001.

On the contrary, in the event that determination is made that the current frequency of the carrier signal has reached the maximum value Fn in step S406, the frequency scan processing unit 2011 of the communication device 2001 proceeds to the processing in step S407. In step S407, the frequency scan processing unit 2011 of the communication device 2001 controls the transmission unit 1011 of the communication device 2001 to receive the signal including the frequency value transmitted from the communication device 2002 in the processing in step S431.

In step S408, the frequency setting unit 2012 of the communication device 2001 sets the frequency value supplied from the communication device 2002 as the frequency of the carrier signal. In step S432, the frequency setting unit 2012 of the communication device 2002 sets the frequency value transmitted to the communication device 2001 as the frequency of the carrier signal. Note that at this time, the frequency setting unit 2012 of the communication device 2001, and the frequency setting unit 2012 of the communication device 2002 communicate each other as necessary, and mutually share information.

Thus, the frequency scan processing unit 2011 of the communication device 2001 and the frequency scan processing unit 2011 of the communication device 2002 can set the frequency of carrier signals used for actual subsequent communication to be optimal for the communication environment.

Also, in the same way for this case as well, the communication device 2001 and the communication device 2002 may execute either of the left or right flow in Fig. 62. Note however, that each executes the flow to the opposite side from the other.

As described above, the communication system to which the present invention has been applied (transmission device, reception device, and communication device) can perform communication. Particularly, more appropriate communication settings can be easily made according to the properties of the communication medium.

The configuration of each communication system may be of a configuration other than that described above, and the number of transmission devices, reception devices, and communication devices is not restricted. Also, the communication medium may be other than a human body.

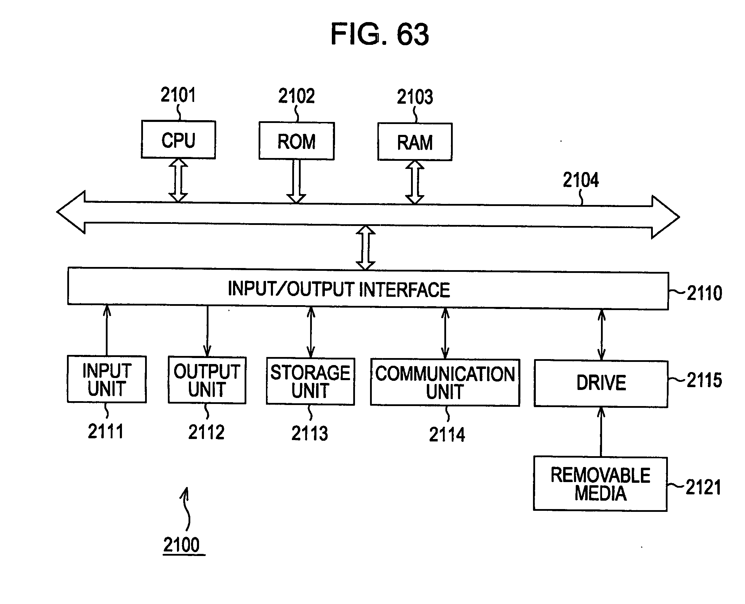

The series of above-described processing can be executed by hardware, or by software. In these cases, the individual devices described above may each be configured as personal computers, such as illustrated in Fig. 63.

In Fig. 63, a CPU (Central Processing Unit) 2101 of the personal computer 2100 executes the various processing following programs stored in ROM (Read Only Memory) 2102 or programs loaded from a storage unit 2113 to RAM (Random Access Memory) 2103. The RAM 2103 also stores data and so forth necessary for the CPU 2101 to execute the various types of processing, as appropriate.

The CPU 2101, ROM 2102, and RAM 2103, are mutually connected via a bus 2104. An input/output interface 2110 is also connected to the bus 2104.

Also connected to the input/output interface 2110 is an input unit 2111 such as a keyboard, mouse, and so forth, an output unit 2112 including a display such as a CRT (Cathode Ray Tube), an LCD (Liquid Crystal Display), or the like, and a speaker or the like, a storage unit 2113 such as a hard disk or the like, and a communication unit 2114 such as a modem or the like. The communication unit 2114 performs communication processing via networks including the Internet.

Also connected to the input/output interface 2110 if necessary is a drive 2115, to which removable media such as magnetic disks, optical disks, magneto-optical disks, semiconductor memory, or the like, is mounted as appropriate, with computer programs read out therefrom being installed to the storage unit 2113 as necessary.

In the event of executing the above-described series of processing by software, programs making up the software are installed from networks and recording media.

This recording media is configured of not only removable media 2121 such as optical disks (including CD-ROM (Compact Disk-Read Only Memory) and DVD (Digital Versatile Disk), magneto-optical disks (including MD (Mini-Disk) (a registered trademark)), in which the programs are recorded and distributed to the user separately from the device itself, as shown in Fig. 63 for example, but also ROM 2102 or the hard disk included in the storage unit 2113 or the like in which programs are recorded and the medium is assembled into the device beforehand and thus provided to the user.

Note that in the present specification, steps described in the program recorded in the recording medium may be executed in time-sequence following the described order as a matter of course, or may be executed in parallel or individually.

Also note that in the present specification, system refers to the entirety of equipment configured of multiple devices. Also note that a configuration described above as being a single device may be divided and be carried out in the form of multiple devices, or conversely, a configuration described above as being multiple devices may be integrated and be carried out in the form of a single device. Further, other configurations than those described above may be added to the configuration of the devices. Moreover, one part of the configuration of one device may be included in the configuration of another device, as long as the overall configuration and operations of the system are substantially the same.

**Claims**

1. A communication system comprising a first communication device and a second communication device which perform communication via a communication medium;
said first communication device including
first status confirming means for confirming the status of said first communication device regarding said communication,
first supply means for supplying first confirmation results, which are confirmation results of said first status confirmation means, to said second communication device,
first obtaining means for obtaining second confirmation results which are confirmation results regarding said communication of said second communication device, supplied from said second communication device, and
first handling processing means for performing control processing regarding said communication, based on said first confirmation results and said second confirmation results;
and said second communication device including
second status confirmation means for confirming the status of said second communication device regarding said communication,
second supply means for supplying said second confirmation results, which are the confirmation results of said second status confirmation means, to said first communication device,
second obtaining means for obtaining said first confirmation results supplied from said first communication device, and
second handling processing means for performing control processing regarding said communication, based on said first confirmation results and said second confirmation results.

2. A communication system comprising a transmission device for transmitting signals via a communication medium, and a reception device for receiving said signals;
   wherein said transmission device includes
   first status confirmation means for confirming the status regarding transmission of said signals, and
   first handling processing means for performing control processing regarding transmission of said signals, based on first confirmation results which are the results of confirmation by said first status confirmation means; and wherein said reception device includes
   second status confirmation means for confirming the status regarding reception of said signals, and
   second handling processing means for performing control processing regarding reception of said signals based on second confirmation results which are the results of confirmation by said second status confirmation means.

3. A communication system comprising a transmission device for transmitting signals via a communication medium, and a reception device for receiving said signals;
   wherein said transmission device includes
   first status confirmation means for confirming the status regarding transmission of said signals,
   supply means for supplying said first confirmation results, which are the confirmation results of said first status confirmation means, to said reception device, and
   first handling processing means for performing control processing regarding transmission of said signals, based on said first confirmation results;
   and wherein said reception device includes
   second status confirmation means for confirming the status regarding reception of said signals,
   obtaining means for obtaining said first confirmation results supplied from said transmission device, and
   second handling processing means for performing control processing regarding reception of said signals based on at least one of second confirmation results which are the results of confirmation by said second status confirmation means, and said first confirmation results obtained by said obtaining means.

4. A communication device for performing communication with another communication device via a communication medium, comprising:

   status communication means for confirming the status regarding said communication of said communication device; and
   handling processing means for performing control processing regarding said communication, based on the confirmation results of said status confirmation means.

5. The communication device according to Claim 4, wherein said status regarding communication includes relative positional relation between said communication device and at least one of said communication medium and said other communication device.

6. The communication device according to Claim 4, said status confirmation means comprising:

   electric current measurement means for measuring the electric current flowing through said communication device;
   combined load output means for outputting the combined load of said communication device and said communication medium with regard to said communication of said communication device, based on the measurement results of said current measurement means; and
   determining means for determining the status of said communication device based on said combined load calculated by said combined load calculating means, and deciding the contents of said control processing by said control means.

7. The communication device according to Claim 6, said status confirmation means further comprising input accepting means for accepting input of communication medium information which is information relating to the properties of said communication medium;
   wherein said combined load calculating means calculate said combined load based on said measurement information of said electric current measurement means, and said communication medium information accepted by said input accepting means.

8. The communication device according to Claim 4, said status confirmation means comprising information obtaining means for obtaining information relating to said status confirmation results at said other communication device provided by said other communication device;
wherein said handling processing means perform control processing relating to said communication based on information regarding said status confirmation results obtained by said information obtaining means.

9. The communication device according to Claim 4, wherein said handling processing means comprise transmission level adjusting means for adjusting the transmission level at the time of said communication device transmitting signals, based on the confirmation results of said status confirmation means.

10. The communication device according to Claim 4, wherein said handling processing means comprise reception gain adjusting means for adjusting the reception gain at the time of said communication device detecting received signals, based on the confirmation results of said status confirmation means.

11. The communication device according to Claim 4,
wherein said handling processing means comprise capacitance adjusting means for adjusting the capacitance as to said communication medium for a signal electrode which is an electrode for transmission/reception of signals, based on the confirmation results of said status confirmation means.

12. The communication device according to Claim 11, wherein said signal electrode is a plurality of electrodes arrayed in array fashion, each configured of a connection-controllable electrode;
wherein said capacitance adjusting means control said capacitance by controlling the connection of each electrode.

13. The communication device according to Claim 4, wherein said handling processing means comprise message display means for displaying messages and images to a user, based on the confirmation results of said status confirmation means.

14. The communication device according to Claim 4, wherein said handling processing means comprise information providing means for providing information relating to the confirmation results of said status confirmation means to said other communication device.

15. The communication device according to Claim 4, wherein said handling processing means comprise modulation method deciding means for deciding the modulation method for said communication, based on the confirmation results of said status confirmation means.

16. The communication device according to Claim 4, wherein said handling processing means comprise error-correction method deciding means for deciding the error correction method of the communication, based on the confirmation results of said status confirmation means.

17. The communication device according to Claim 4, further comprising:

frequency identifying means for identifying a frequency regarding which gain is great for signals transmitted to said other communication device; and
frequency setting means for setting the carrier signal of said communication to the frequency identified by said frequency identifying means.

18. A communication method for a communication device which performs communication with another communication device via a communication medium, said method comprising the steps of:

confirming the status regarding to said communication of said communication device; and
performing control processing regarding said communication, based on the confirmation results thereof.

19. A program for causing a computer to perform processing of communication with another communication device via a communication medium, said program comprising the steps of:

confirming the status regarding to said communication of said communication device; and
performing control processing regarding said communication, based on the confirmation results thereof.

# FIG. 1

EP 1 798 875 A1

# FIG. 2

# FIG. 3

250

| FREQUENCY f [Hz] | RECEPTION LOAD Rr [Ω] | CAPACITANCE [F] | EXECUTION VOLTAGE Vrms [V] |
|---|---|---|---|
| 1. 0E+06 | 1. 0E+04 | 1. 0E−13 | 0. 013 |
| 1. 0E+06 | 1. 0E+04 | 1. 0E−12 | 0. 125 |
| 1. 0E+06 | 1. 0E+04 | 1. 0E−11 | 1. 064 |
| 1. 0E+06 | 1. 0E+05 | 1. 0E−13 | 0. 125 |
| 1. 0E+06 | 1. 0E+05 | 1. 0E−12 | 1. 064 |
| 1. 0E+06 | 1. 0E+05 | 1. 0E−11 | 1. 975 |
| 1. 0E+06 | 1. 0E+06 | 1. 0E−13 | 1. 064 |
| 1. 0E+06 | 1. 0E+06 | 1. 0E−12 | 1. 975 |
| 1. 0E+06 | 1. 0E+06 | 1. 0E−11 | 2. 000 |
| 1. 0E+07 | 1. 0E+04 | 1. 0E−13 | 0. 125 |
| 1. 0E+07 | 1. 0E+04 | 1. 0E−12 | 1. 064 |
| 1. 0E+07 | 1. 0E+04 | 1. 0E−11 | 1. 975 |
| 1. 0E+07 | 1. 0E+05 | 1. 0E−13 | 1. 064 |
| 1. 0E+07 | 1. 0E+05 | 1. 0E−12 | 1. 975 |
| 1. 0E+07 | 1. 0E+05 | 1. 0E−11 | 2. 000 |
| 1. 0E+07 | 1. 0E+06 | 1. 0E−13 | 1. 975 |
| 1. 0E+07 | 1. 0E+06 | 1. 0E−12 | 2. 000 |
| 1. 0E+07 | 1. 0E+06 | 1. 0E−11 | 2. 000 |
| 1. 0E+08 | 1. 0E+04 | 1. 0E−13 | 1. 064 |
| 1. 0E+08 | 1. 0E+04 | 1. 0E−12 | 1. 975 |
| 1. 0E+08 | 1. 0E+04 | 1. 0E−11 | 2. 000 |
| 1. 0E+08 | 1. 0E+05 | 1. 0E−13 | 1. 975 |
| 1. 0E+08 | 1. 0E+05 | 1. 0E−12 | 2. 000 |
| 1. 0E+08 | 1. 0E+05 | 1. 0E−11 | 2. 000 |
| 1. 0E+08 | 1. 0E+06 | 1. 0E−13 | 2. 000 |
| 1. 0E+08 | 1. 0E+06 | 1. 0E−12 | 2. 000 |
| 1. 0E+08 | 1. 0E+06 | 1. 0E−11 | 2. 000 |

# FIG. 4

# FIG. 5

EP 1 798 875 A1

EP 1 798 875 A1

# FIG. 6

# FIG. 7

EP 1 798 875 A1

# FIG. 8

EP 1 798 875 A1

FIG. 9

EP 1 798 875 A1

EP 1 798 875 A1

# FIG. 10

GAIN

551

FREQUENCY

60

FIG. 11

VOLTAGE (V)   10μ

A ← 6.73μ

3.44μ

154μ

-3.1μ

-6.4μ

-9.7μ

ABOUT 10μV

552

B

6.48μ   6.68μ   6.87μ   7.07μ   7.26μ   7.46μ   7.65μ   TIME (t)

# FIG. 12

554    555

~553

# FIG. 13

554

~553

555

## FIG. 14

554

553

555

## FIG. 15

554

553

555

# FIG. 16

A

554

553

556

555

B

554

553 — 555

556

EP 1 798 875 A1

# FIG. 17

EP 1 798 875 A1

# FIG. 18

EP 1 798 875 A1

## FIG. 19

## FIG. 20

# FIG. 21

EP 1 798 875 A1

FIG. 22

EP 1 798 875 A1

FIG. 23

# FIG. 24

# FIG. 25

# FIG. 26

# FIG. 27

ENERGY

841

843

NOISE FLOOR

FREQUENCY

842

# FIG. 28

EP 1 798 875 A1

# FIG. 29

FIG. 30

EP 1 798 875 A1

## FIG. 31

# FIG. 32

110

START

GENERATE SIGNAL S11

TRANSMIT SIGNAL S12

END

120

START

RECEIVE SIGNAL S21

OUTPUT SIGNAL S22

END

## FIG. 33

130

110 ⟋ 120
111 ⟋ 121

113 ⟋ | TRANSMISSION UNIT | | RECEPTION UNIT | 123
112 ⟋ 122

961

110 ⟋ 120
111 ⟋ 121

113 ⟋ | TRANSMISSION UNIT | | RECEPTION UNIT | 123
112 ⟋ 122

962

950

# FIG. 34

A

B

C

## FIG. 35

COMMUNICATION MEDIUM — 1003

TRANSMISSION DEVICE — 1001

1012

TRANSMISSION UNIT — 1011

1013

STATUS CONFIRMATION UNIT — 1014

CURRENT MEASUREMENT UNIT — 1021

COMBINED LOAD CALCULATING UNIT — 1022

DETERMINING UNIT — 1024

TRANSMISSION LEVEL ADJUSTING UNIT — 1025

CAPACITANCE ADJUSTMENT UNIT — 1027

MESSAGE DISPLAY UNIT — 1028

INFORMATION PROVIDING UNIT — 1029

COUNTERMEASURE PROCESSING UNIT — 1015

1000

RECEPTION DEVICE — 1002

1032

RECEPTION UNIT — 1031

1033

STATUS CONFIRMATION UNIT — 1034

CURRENT MEASUREMENT UNIT — 1041

COMBINED LOAD CALCULATING UNIT — 1042

INFORMATION OBTAINING UNIT — 1043

DETERMINING UNIT — 1044

RECEPTION GAIN ADJUSTMENT UNIT — 1046

CAPACITANCE ADJUSTMENT UNIT — 1047

MESSAGE DISPLAY UNIT — 1048

COUNTERMEASURE PROCESSING UNIT — 1035

EP 1 798 875 A1

# FIG. 36

EP 1 798 875 A1

# FIG. 37

START COMMUNICATION CONTROL PROCESSING

CONFIRM STATE | S1

PERFORM HANDLING PROCESSING
ACCORDING TO STATUS | S2

END

# FIG. 38

START STATUS CONFIRMATION PROCESS
WITH TRANSMISSION DEVICE

MEASURE CURRENT | S21

CALCULATE COMBINED LOAD | S22

DETERMINE STATUS | S23

RETURN

## FIG. 39

START HANDLING PROCESSING
WITH TRANSMISSION DEVICE

CONTROL TRANSMISSION LEVEL? S41 / NO

YES

ADJUST TRANSMISSION LEVEL BASED
ON STATUS DETERMINATION RESULTS S42

CONTROL CAPACITANCE? S43 / NO

YES

ADJUST ELECTRODE CONNECTION BASED
ON STATUS DETERMINATION RESULTS S44

DISPLAY MESSAGE? S45 / NO

YES

DISPLAY MESSAGE CORRESPONDING
TO STATUS DETERMINATION RESULTS S46

PROVIDE INFORMATION? S47 / NO

YES

SUPPLY INFORMATION FOR COMBINED
LOAD AND TRANSMISSION LEVEL
TO RECEPTION DEVICE S48

RETURN

# FIG. 40

START STATUS CONFIRMATION PROCESS
WITH RECEPTION DEVICE

CALCULATE COMBINED LOAD? — S61 / NO

YES

MEASURE CURRENT — S62

CALCULATE COMBINED LOAD — S63

INFORMATION OBTAINED? — S64 / NO

YES

CONFIRM COMBINED LOAD
AND TRANSMISSION LEVEL OF
TRANSMISSION DEVICE — S65

DETERMINE STATUS — S66

RETURN

# FIG. 41

```
        ╭─────────────────────────────╮
        │  START HANDLING PROCESSING  │
        │     WITH RECEPTION DEVICE   │
        ╰─────────────────────────────╯
                      │
                      ▼
              ╱─────────────────────╲ S81
        ┌────┤ CONTROL RECEPTION GAIN? ├─── NO ────┐
        │    ╲─────────────────────╱              │
        │           │ YES                         │
        │           ▼                             │
        │  ┌──────────────────────────┐ S82       │
        │  │ ADJUST RECEPTION GAIN BASED ON │     │
        │  │  STATUS DETERMINATION RESULTS  │     │
        │  └──────────────────────────┘           │
        │           │         ◄──────────────────┘
        │           ▼
        │    ╱─────────────────╲ S83
        ├────┤ CONTROL CAPACITANCE? ├─── NO ───────┐
        │    ╲─────────────────╱                   │
        │           │ YES                          │
        │           ▼                              │
        │  ┌───────────────────────────────┐ S84   │
        │  │ ADJUST ELECTRODE CONNECTION BASED │   │
        │  │   ON STATUS DETERMINATION RESULTS │   │
        │  └───────────────────────────────┘       │
        │           │        ◄────────────────────┘
        │           ▼
        │    ╱──────────────╲ S85
        └────┤ DISPLAY MESSAGE? ├──── NO ──────────┐
             ╲──────────────╱                      │
                    │ YES                          │
                    ▼                              │
         ┌────────────────────────────────┐ S86    │
         │ DISPLAY MESSAGE CORRESPONDING TO │      │
         │   STATUS DETERMINATION RESULTS   │      │
         └────────────────────────────────┘        │
                    │        ◄────────────────────┘
                    ▼
              ╭──────────╮
              │  RETURN  │
              ╰──────────╯
```

# FIG. 42

## FIG. 43

COMMUNICATION MEDIUM — 1003

COMMUNICATION DEVICE — 1202

1211

1214

COMMUNICATION STATUS CONFIRMATION UNIT

1011

TRANSMISSION UNIT

1031

RECEPTION UNIT

1221
CURRENT MEASUREMENT UNIT

1222
COMBINED LOAD CALCULATING UNIT

1223
INFORMATION OBTAINING UNIT

1224
DETERMINING UNIT

1225
TRANSMISSION LEVEL ADJUSTMENT UNIT

1226
RECEPTION GAIN ADJUSTMENT UNIT

1227
CAPACITANCE ADJUSTMENT UNIT

1228
MESSAGE DISPLAY UNIT

1229
INFORMATION PROVIDING UNIT

COMMUNICATION HANDLING PROCESSING UNIT

1215

1212

COMMUNICATION DEVICE — 1201

1200

# FIG. 44

START STATUS CONFIRMATION PROCESSING
WITH COMMUNICATION DEVICE

CALCULATE COMBINED LOAD? — S101 — NO

YES

MEASURE CURRENT — S102

CALCULATE COMBINED LOAD — S103

INFORMATION OBTAINED? — S104 — NO

YES

CONFIRM COMBINED LOAD AND
TRANSMISSION LEVEL OF
TRANSMISSION DEVICE — S105

DETERMINE STATUS — S106

RETURN

# FIG. 45

START HANDLING PROCESSING
WITH COMMUNICATION DEVICE

CONTROL TRANSMISSION LEVEL? S121 NO

YES

ADJUST TRANSMISSION LEVEL BASED ON
STATUS DETERMINATION RESULTS — S122

CONTROL RECEPTION GAIN? S123 NO

YES

ADJUST RECEPTION GAIN BASED ON
STATUS DETERMINATION RESULTS — S124

CONTROL CAPACITANCE? S125 NO

YES

ADJUST ELECTRODE CONNECTION BASED ON
STATUS DETERMINATION RESULTS — S126

DISPLAY MESSAGE? S127 NO

YES

DISPLAY MESSAGE CORRESPONDING
TO STATUS DETERMINATION RESULTS — S128

PROVIDE INFORMATION? S129 NO

YES

SUPPLY INFORMATION FOR COMBINED LOAD,
TRANSMISSION LEVEL, AND RECEPTION GAIN,
TO OTHER DEVICE — S130

RETURN

# FIG. 46

1003

COMMUNICATION MEDIUM

**COMMUNICATION DEVICE** (1201)

| SELF-STATE CONFIRMATION | 1301 |

INFORMATION EXCHANGE — 1302

TRANSMISSION ADJUSTMENT PROCESSING — 1303

RECEPTION ADJUSTMENT PROCESSING — 1304

COMBINED LOAD
TRANSMISSION LEVEL
RECEPTION GAIN

**COMMUNICATION DEVICE** (1202)

1311 — SELF-STATE CONFIRMATION

1312 — INFORMATION EXCHANGE

TRANSMISSION ADJUSTMENT PROCESSING — 1313

RECEPTION ADJUSTMENT PROCESSING — 1314

EP 1 798 875 A1

# FIG. 47

# FIG. 48

1003

| COMMUNICATION MEDIUM |
|---|

1012

1011

TRANSMISSION UNIT

STATUS CONFIRMATION UNIT ⌐···1414

| COMMUNICATION MEDIUM INFORMATION INPUT UNIT | ~1421 |
|---|---|

1021

| CURRENT MEASUREMENT UNIT |
|---|

| COMBINED LOAD CALCULATING UNIT | ~1422 |
|---|---|

| DETERMINING UNIT | ~1024 |
|---|---|

| TRANSMISSION LEVEL ADJUSTING UNIT | ~1025 |
|---|---|

| CAPACITANCE ADJUSTMENT UNIT | ~1027 |
|---|---|

| MESSAGE DISPLAY UNIT | ~1028 |
|---|---|

| INFORMATION PROVIDING UNIT | ~1029 |
|---|---|

HANDLING PROCESSING UNIT ⌐···1015

1013

TRANSMISSION DEVICE ⌐···1401

| RECEPTION DEVICE |
|---|

1402

1400

# FIG. 49

1003

| COMMUNICATION MEDIUM |
|---|

TRANSMISSION
DEVICE

1401

~1032

RECEPTION UNIT

1031~

STATUS CONFIRMATION UNIT ┊⋯1434

| COMMUNICATION MEDIUM INFORMATION INPUT UNIT | ~1441 |

1041

| CURRENT MEASUREMENT UNIT |

| COMBINED LOAD CALCULATING UNIT | ~1442 |

1043

| INFORMATION OBTAINING UNIT |

| DETERMINING UNIT | ~1044 |

| RECEPTION GAIN ADJUSTING UNIT | ~1046 |

| CAPACITANCE ADJUSTMENT UNIT | ~1047 |

| MESSAGE DISPLAY UNIT | ~1048 |

HANDLING PROCESSING UNIT ┊⋯1035

1033~

RECEPTION DEVICE

1402

1400

# FIG. 50

```
START STATUS CONFIRMATION PROCESS
       WITH TRANSMISSION DEVICE
                  │
                  ▼
┌──────────────────────────────────┐
│    ACCEPT INPUT OF INFORMATION    │ S151
│ RELATING TO COMMUNICATION MEDIUM  │
└──────────────────────────────────┘
                  │
                  ▼
┌──────────────────────────────────┐
│        MEASURE CURRENT            │ S152
└──────────────────────────────────┘
                  │
                  ▼
┌──────────────────────────────────┐
│      CALCULATE COMBINED LOAD      │ S153
└──────────────────────────────────┘
                  │
                  ▼
┌──────────────────────────────────┐
│        DETERMINE STATUS           │ S154
└──────────────────────────────────┘
                  │
                  ▼
              RETURN
```

# FIG. 51

START STATUS CONFIRMATION PROCESS WITH RECEPTION DEVICE

CALCULATE COMBINED LOAD? S171 — NO

YES

ACCEPT INPUT OF INFORMATION RELATING TO COMMUNICATION MEDIUM S172

MEASURE CURRENT S173

CALCULATE COMBINED LOAD S174

INFORMATION OBTAINED? S175 — NO

YES

CONFIRM COMBINED LOAD AND TRANSMISSION LEVEL OF TRANSMISSION DEVICE S176

DETERMINE STATUS S177

RETURN

# FIG. 52

1003

COMMUNICATION MEDIUM

COMMUNICATION MEDIUM INFORMATION INPUT RECEPTION PROCESSING — 1501

COMBINED LOAD CALCULATION PROCESSING — 1502

TRANSMISSION DEVICE

1401

1511 — COMMUNICATION MEDIUM INFORMATION INPUT RECEPTION PROCESSING

1512 — COMBINED LOAD CALCULATION PROCESSING

RECEPTION DEVICE

1402

A

1003

COMMUNICATION MEDIUM

COMMUNICATION MEDIUM INFORMATION INPUT RECEPTION PROCESSING — 1501

COMBINED LOAD CALCULATION PROCESSING — 1502

INFORMATION PROVIDING — 1521

COMMUNICATION MEDIUM INFORMATION

COMBINED LOAD

TRANSMISSION LEVEL

1522

INFORMATION OBTAINING

1523

COMBINED LOAD CALCULATION PROCESSING

TRANSMISSION DEVICE

1401

B

RECEPTION DEVICE

1402

## FIG. 53

# FIG. 54

START STATUS CONFIRMATION PROCESS
WITH RECEPTION DEVICE

CALCULATE COMBINED LOAD? S191
NO

YES

ACCEPT INPUT OF INFORMATION
RELATING TO COMMUNICATION MEDIUM S192

MEASURE CURRENT S193

CALCULATE COMBINED LOAD S194

INFORMATION OBTAINED? S195
NO

YES

CONFIRM COMBINED LOAD, TRANSMISSION LEVEL,
AND RECEPTION GAIN OF OTHER DEVICE S196

DETERMINE STATUS S197

RETURN

## FIG. 55

EP 1 798 875 A1

```
         1001                                          1002

MODULATION    : ASK, PSK, QPSK          MODULATION    : ASK, PSK, QPSK
METHOD                                  METHOD

ERROR         : BCH ENCODING            ERROR         :BCH ENCODING
CORRECTION      CONVOLUTION ENCODING    CORRECTION      CONVOLUTION ENCODING
METHOD          REED-SOLOMON ENCODING   METHOD          REED-SOLOMON ENCODING
```

FIG. 56

COMMUNICATION MEDIUM — 1003

**RECEPTION DEVICE — 1002**

STATUS CONFIRMATION UNIT — 1034

- CURRENT MEASUREMENT UNIT — 1041
- COMBINED LOAD CALCULATING UNIT — 1042
- INFORMATION OBTAINING UNIT — 1043
- DETERMINING UNIT — 1044

- MODULATION METHOD DETERMINING UNIT — 1846
- ERROR CORRECTION METHOD DETERMINING UNIT — 1847
- MESSAGE DISPLAY UNIT — 1048
- HANDLING PROCESSING UNIT — 1035

RECEPTION UNIT — 1031

1032, 1033

**TRANSMISSION DEVICE — 1001**

STATUS CONFIRMATION UNIT — 1014

- CURRENT MEASUREMENT UNIT — 1021
- COMBINED LOAD CALCULATING UNIT — 1022
- DETERMINING UNIT — 1024

- MODULATION METHOD DETERMINING UNIT — 1825
- ERROR CORRECTION METHOD DETERMINING UNIT — 1827
- MESSAGE DISPLAY UNIT — 1028
- INFORMATION PROVIDING UNIT — 1029
- HANDLING PROCESSING UNIT — 1015

TRANSMISSION UNIT — 1011

1012, 1013

1000

# FIG. 57

```
┌─────────────────────────────┐
│  START HANDLING PROCESSING  │
│    WITH TRANSMISSION DEVICE  │
└─────────────────────────────┘
              │
              ▼
      CONTROL MODULATION METHOD?  S241
              │  NO ──────────────────┐
              │ YES                    │
              ▼                        │
┌─────────────────────────────┐       │
│ DETERMINE MODULATION METHOD  │ S242  │
│  BASED ON STATUS             │       │
│  DETERMINATION RESULTS       │       │
└─────────────────────────────┘       │
              │◄──────────────────────┘
              ▼
   CONTROL ERROR CORRECTION METHOD?  S243
              │  NO ──────────────────┐
              │ YES                    │
              ▼                        │
┌─────────────────────────────┐       │
│ DETERMINE ERROR CORRECTION   │ S244  │
│ METHOD BASED ON STATUS       │       │
│ DETERMINATION RESULTS        │       │
└─────────────────────────────┘       │
              │◄──────────────────────┘
              ▼
        DISPLAY MESSAGE?  S245
              │  NO ──────────────────┐
              │ YES                    │
              ▼                        │
┌─────────────────────────────┐       │
│ DISPLAY MESSAGE CORRESPONDING│ S246  │
│ TO STATUS DETERMINATION      │       │
│ RESULTS                      │       │
└─────────────────────────────┘       │
              │◄──────────────────────┘
              ▼
       PROVIDE INFORMATION?  S247
              │  NO ──────────────────┐
              │ YES                    │
              ▼                        │
┌─────────────────────────────┐       │
│ SUPPLY INFORMATION FOR       │ S248  │
│ MODULATION METHOD AND ERROR  │       │
│ CORRECTION METHOD TO         │       │
│ RECEPTION DEVICE             │       │
└─────────────────────────────┘       │
              │◄──────────────────────┘
              ▼
         ┌─────────┐
         │ RETURN  │
         └─────────┘
```

# FIG. 58

**1001** TRANSMISSION DEVICE

**1003** COMMUNICATION MEDIUM

**1002** RECEPTION DEVICE

A

**1001** TRANSMISSION DEVICE

**1003**
ADULT
CHILD
PLUMP
LEAN
LARGE IN STATURE
SMALL IN STATURE

**1002** RECEPTION DEVICE

B

**1001** TRANSMISSION DEVICE

**1003**
WATER
SALTWATER
PETROLEUM OIL
ORGANIC SOLVENT
SULFURIC ACID

**1002** RECEPTION DEVICE

C

## FIG. 59

RECEPTION LEVEL

FREQUENCY

1903
1902
1901

EP 1 798 875 A1

# FIG. 60

COMMUNICATION MEDIUM — 1003

RECEPTION DEVICE — 2002

1211

COMMUNICATION STATUS CONFIRMATION UNIT — 1214

1011 — TRANSMISSION UNIT

RECEPTION UNIT — 1031

COMMUNICATION HANDLING UNIT — 1215

FREQUENCY SCAN PROCESSING UNIT — 2011

FREQUENCY SETTING UNIT — 2012

1212

COMMUNICATION DEVICE — 2001

2000

# FIG. 61

2001

START

CONFIRM STATUS | S301

PERFORM SETTINGS BASED ON STATUS CONFIRMATION RESULTS | S302

SET FREQUENCY TO F1 | S303

TRANSMIT SIGNAL | S304

S305

RECORD RECEPTION LEVEL | S306

RAISE FREQUENCY BY $\Delta F$ | S307

HAS CURRENT FREQUENCY REACHED Fn? | S308 | NO

YES

FROM RECEIVED DATA, IDENTIFY FREQUENCY WITH HIGHEST RECEPTION LEVEL | S309

TRANSMIT FREQUENCY VALUE | S310

SET FREQUENCY | S311

END

2002

START

CONFIRM STATUS | S321

PERFORM SETTINGS BASED ON STATUS CONFIRMATION RESULTS | S322

S323

DETECT RECEPTION LEVEL | S324

TRANSMIT RECEPTION LEVEL | S325

S326

SET FREQUENCY | S327

END

# FIG. 62

2001

START

CONFIRM STATUS — S401

PERFORM SETTINGS BASED ON STATUS CONFIRMATION RESULTS — S402

SET FREQUENCY TO F1 — S403

TRANSMIT SIGNAL — S404

RAISE FREQUENCY BY ΔF — S405

HAS CURRENT FREQUENCY REACHED Fn? — S406 — NO

YES

S407

SET FREQUENCY — S408

END

2002

START

CONFIRM STATUS — S421

PERFORM SETTINGS BASED ON STATUS CONFIRMATION RESULTS — S422

SET FREQUENCY TO F1 — S423

SET RECEPTION LEVEL RL TO 0 — S424

S425

DETECT RECEPTION LEVEL — S426

IS Rn GREATER THAN RL? — S427 — NO

YES

SUBSTITUTE Rn FOR RL — S428

RECORD CURRENT FREQUENCY VALUE — S429

HAS CURRENT FREQUENCY REACHED Fn? — S430 — NO

YES

TRANSMIT FREQUENCY VALUE — S431

SET FREQUENCY — S432

END

# FIG. 63

EP 1 798 875 A1

## INTERNATIONAL SEARCH REPORT

| | International application No. |
|---|---|
| | PCT/JP2006/313960 |

A. CLASSIFICATION OF SUBJECT MATTER
*H04B7/26*(2006.01)i, *H04B5/02*(2006.01)i, *H04B13/00*(2006.01)i

According to International Patent Classification (IPC) or to both national classification and IPC

B. FIELDS SEARCHED

Minimum documentation searched (classification system followed by classification symbols)
H04B7/24-7/26, H04Q7/00-7/38, H04B5/02, H04B13/00

Documentation searched other than minimum documentation to the extent that such documents are included in the fields searched
Jitsuyo Shinan Koho           1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 07-312610 A (Oki Electric Industry Co., Ltd.),<br>28 November, 1995 (28.11.95),<br>Par. Nos. [0015] to [0017]; Fig. 3<br>(Family: none) | 1-4,8,9,14, 18,19<br>5,10,13, 15-17<br>6,7,11,12 |
| Y | JP 2001-136565 A (Mitsubishi Electric Corp.),<br>18 May, 2001 (18.05.01),<br>Par. Nos. [0029], [0030]<br>(Family: none) | 5 |
| Y | JP 2000-134151 A (NEC Saitama, Ltd.),<br>12 May, 2000 (12.05.00),<br>Par. Nos. [0023] to [0025]<br>(Family: none) | 10 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 September, 2006 (21.09.06) | 03 October, 2006 (03.10.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/313960

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2005-109721 A  (Sony Corp.),<br>21 April, 2005 (21.04.05),<br>Par. No. [0122]<br>& US 2005/0101294 A1 | 13 |
| Y | JP 2004-519894 A  (Koninklijke Philips<br>Electronics N.V.),<br>02 July, 2004 (02.07.04),<br>Par. No. [0032]<br>& US 2003/0125066 A1    & EP 1362450 A<br>& WO 2002/067492 A1 | 15 |
| Y | JP 2000-151639 A  (Seiko Epson Corp.),<br>30 May, 2000 (30.05.00),<br>Par. Nos. [0031], [0032]<br>(Family: none) | 16 |
| Y | JP 2005-086408 A  (Sony Corp.),<br>31 March, 2005 (31.03.05),<br>Par. Nos. [0111] to [0118]<br>& US 2005/0085190 A1 | 17 |

Form PCT/ISA/210 (continuation of second sheet) (April 2005)

**EP 1 798 875 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001320326 A